# EUROPEAN PATENT APPLICATION

(11) **EP 4 730 469 A1**
(43) Date of publication of application: **22.04.2026**
(21) Application number: 24895418.2
(22) Date of filing: 11.05.2024
(51) Int. Cl.: H01M 10/058, H01M 10/0525

(54) **WRAPPING APPARATUS AND WRAPPING METHOD FOR ELECTRODE ASSEMBLY**

(30) Priority: 30.11.2023 CN 202311643587
(71) Applicant: Contemporary Amperex Technology Co., Limited, Ningde, Fujian 352100 (CN)
(72) Inventor: WU, Kai, Ningde, Fujian 352100 (CN); ZHANG, Yongli, Ningde, Fujian 352100 (CN); TANG, Wenxiang, Ningde, Fujian 352100 (CN); SUN, Weiwei, Ningde, Fujian 352100 (CN); PAN, Wensheng, Ningde, Fujian 352100 (CN); FAN, Xiang, Ningde, Fujian 352100 (CN)
(74) Representative: Kraus & Lederer PartGmbB
(86) International application number: PCT/CN2024/092710
(87) International publication number: WO 2025/112307

(57) **Abstract**

The present application discloses a covering device and a covering method for an electrode assembly. The electrode assembly includes an electrode body, the electrode body has a first direction, a second direction and a third direction that are orthogonal to each other, and includes two main surfaces, two end surfaces and two side surfaces. The covering device includes a first positioning assembly and a first covering assembly. The first positioning assembly is configured to position the electrode assembly while keeping the two main surfaces exposed respectively. The first covering assembly is configured to position a covering film, where the covering film includes two main covering areas and a connecting area. At least one of the first positioning assembly and the first covering assembly is configured to be movable relative to the other such that the connecting area comes into contact with and covers the first one of the two end surfaces, and the two main covering areas respectively come into contact with and cover an exposed portion of the corresponding one of the two main surfaces. In the above way, it is possible to achieve continuous covering of multiple surfaces of the electrode assembly.

## Description

### TECHNICAL FIELD

The present application relates to the technical field of battery assembly, and in particular, to a covering device and a covering method for an electrode assembly.

### BACKGROUND

With the development of battery technology, batteries are used in more and more fields and have gradually replaced traditional fossil energy in the field of automotive power. Batteries can store chemical energy and convert it into electrical energy in a controlled manner. For recyclable batteries, after discharge, the batteries can be used continually by activating the active material in a charging manner.

A battery is often provided with an electrode assembly and a covering film. The covering film has an insulating function and can be used to cover the electrode assembly. During the battery production process, a covering device is required to cover the electrode assembly with the covering film. However, the existing covering device has a single operation and cannot meet the covering requirements for continuous covering of multiple surfaces of the electrode assembly.

### SUMMARY OF THE INVENTION

In view of the above problems, the present application provides a covering device and a covering method for an electrode assembly, which enables continuous covering of multiple surfaces of the electrode assembly.

In a first aspect, the present application provides a covering device for an electrode assembly. The electrode assembly includes an electrode body, and the electrode body has a first direction, a second direction and a third direction that are orthogonal to each other and includes two main surfaces disposed back-to-back with each other in the first direction, two end surfaces disposed back-to-back with each other in the second direction and two side surfaces disposed back-to-back with each other in the third direction. The covering device includes a first positioning assembly and a first covering assembly. The first positioning assembly is configured to position the electrode assembly while keeping the two main surfaces at least partially exposed. The first covering assembly is configured to position the covering film, where the covering film includes two main covering areas spaced apart from each other and a connecting area connected between the two main covering areas. At least one of the first positioning assembly and the first covering assembly is configured to be movable relative to the other such that the connecting area comes into contact with and covers the first one of the two end surfaces, and the two main covering areas respectively come into contact with and cover an exposed portion of the corresponding one of the two main surfaces.

In the above way, the relative positional relationship of the electrode assembly and the covering film can be adjusted, so that when the covering film covers the first one of the two main surfaces and the first one of the two end surfaces of the electrode body, continuous covering of the first one of the two main surfaces and the first one of the two end surfaces is realized, which can improve the stability of the covering process, and makes the covering action simple and smooth.

In some embodiments, the relative movement between the first positioning assembly and the first covering assembly is set such that the time of contact between the connecting area and the first one of the two end surfaces is earlier than the time of contact between the two main covering areas and the corresponding one of the two main surfaces, respectively.

In the above way, the action of covering the first one of the two end surfaces with the connecting area is carried out after the action of covering the two main surfaces with the two main covering areas is carried out, which reduces the action difficulty in the covering process and facilitates the simplification of the structure of the covering device.

In some embodiments, the relative movement between the first positioning assembly and the first covering assembly is set such that covering processes of the two main covering areas on the corresponding one of the two main surfaces are at least partially synchronized.

The above way is conducive to simplifying the covering process and improving the covering efficiency.

In some embodiments, before the first one of the two end surfaces comes into contact with the connecting area, the first covering assembly is configured to enable the connecting area and the two main covering areas to be coplanar with each other.

In the above way, it is easy to store the covering film in a stacking manner, which can reduce the space occupied by the covering film and facilitate the feeding of the covering film.

In some embodiments, the first covering assembly is configured to enable the connecting area to be in a suspended state, and the relative movement between the first positioning assembly and the first covering assembly is set such that the first one of the two end surfaces comes into contact with the connecting area that is in a suspended state.

In the above way, the interference to the process of covering the first one of the two end surfaces with the connecting area may be reduced, which is conducive to improving the fit of the connecting area to the first one of the two end surfaces, and improving the covering effect of the connecting area to the first one of the two end surfaces.

In some embodiments, the electrode assembly further includes a tab portion protruding from the first one of the two end surfaces, the connecting area is provided with a hole, and the tab portion is allowed to pass through the hole along with the relative movement between the first positioning assembly and the first covering assembly.

In the above way, the hole can provide passage to the tab portion to reduce the interference of the tab portion to the covering process, thereby improving the covering effect of the covering film on the first one of the two end surfaces.

In some embodiments, at least one of the first positioning assembly and the first covering assembly is configured to move in the second direction such that the electrode assembly and the covering film approach each other in the second direction and that, after the first one of the two end surfaces comes into contact with the connecting area, the electrode assembly continues to move in the second direction relative to the ends of the two main covering areas that are away from the connecting area; and the first covering assembly is further configured to move in the first direction such that the ends of the two main covering areas approach each other in the first direction and accordingly the two main covering areas come into contact with and cover an exposed portion of the corresponding one of the two main surfaces.

In the above way, the covering film may achieve smooth linking between covering the first one of the two end surfaces and covering the two main surfaces, thereby simplifying the operation of the covering process and facilitating the improvement of the covering efficiency.

In some embodiments, the first positioning assembly includes an electrode gripper, the electrode gripper being configured to grip the electrode body in the third direction from the outside of the two side surfaces, or being configured to grip the electrode body in the first direction from the outside of the two main surfaces.

In the above way, since the electrode gripper is configured to grip the electrode body in the third direction from the outside of the two side surfaces, the electrode gripper can avoid the two main surfaces of the electrode body, which is conducive to increasing the area of the exposed portion of the two main surfaces, and improving the effect of covering the two main surfaces. The electrode gripper is configured to grip the electrode body from the outside of the two main surfaces in the first direction, which is conducive to improving the stability of the electrode gripper in gripping the electrode body.

In some embodiments, the first positioning assembly includes an electrode driving mechanism, the electrode driving mechanism being configured to drive the electrode gripper in the second direction toward the side where the covering film is located such that after the first one of the two end surfaces comes into contact with the connecting area, the first one of the two end surfaces and the connecting area continue to move in the second direction synchronously.

In the above way, the covering film may achieve smooth linking between covering the first one of the two end surfaces and covering the two main surfaces, thereby simplifying the operation of the covering process and facilitating the improvement of the covering efficiency.

In some embodiments, the electrode driving mechanism includes an electrode driving motor, a first electrode support and a second electrode support, the electrode driving motor being disposed on the first electrode support and configured to drive the second electrode support to move relative to the first electrode support in the second direction. The electrode gripper is disposed on the second electrode support and includes electrode gripping jaws and an electrode gripping cylinder, the electrode gripping cylinder being configured to drive the electrode gripping jaws to grip the electrode body.

The above way facilitates stable movement of the electrode assembly and can improve the accuracy of positioning the electrode assembly.

In some embodiments, the first covering assembly includes two first sub-covering assemblies spaced apart from each other, each of the first sub-covering assemblies includes a film gripper and a first film driving mechanism, two film grippers respectively grip two ends of the covering film that are away from the connecting area, and the first film driving mechanisms drive the two film grippers to approach each other in the first direction to enable regions of the main covering areas not gripped by the film grippers to be bent relative to the connecting area toward the corresponding main surfaces.

In the above way, the two film grippers are configured to grip the two ends of the covering film that are away from the connecting area respectively, the control on the movement of the main covering areas is facilitated, which is conducive to keeping the regions of the main covering areas that are not gripped by the film grippers in an extended state, and facilitates the action of covering the main surfaces with the main covering areas, thereby improving the effect of covering the main surfaces with the main covering areas.

In some embodiments, the first film driving mechanism includes a first film driving motor, a first film support and a second film support, the first film driving motor being disposed on the first film support and configured to drive the second film support to move relative to the first film support in the first direction. The film gripper is disposed on the second film support and includes film gripping jaws and a film gripping cylinder, the film gripping cylinder being configured to drive the film gripping jaws to grip the covering film.

The above way facilitates stable movement of the covering film and can improve the accuracy of positioning the covering film.

In some embodiments, each of the first sub-covering assemblies further includes a second film driving mechanism, and two second film driving mechanisms respectively drive the corresponding film grippers to rotate to enable the trend of movement of regions of the covering film gripped by the film grippers relative to the connecting area to be consistent with the trend of bending of the un-gripped regions of the main covering areas relative to the connecting area.

In the above way, it is possible to make the regions of the covering film that are gripped by the film grippers closer to the electrode body, facilitating the action of covering the electrode body with the regions of the covering film that are gripped by the film grippers.

In some embodiments, the first film driving mechanism includes a first film driving motor, a first film support and a second film support, the first film driving motor being disposed on the first film support and configured to drive the second film support to move relative to the first film support in the first direction. The second film driving mechanism includes a second film driving motor, the second film driving motor being disposed on the second film support and driving the corresponding film gripper to rotate. The film gripper includes film gripping jaws and a film gripping cylinder, the film gripping cylinder being configured to drive the film gripping jaws to grip the covering film.

In the above way, the freedom of movement of the covering film can be increased, thereby improving the covering effect.

In some embodiments, each of the first sub-covering assemblies further includes a third film driving mechanism, and two third film driving mechanisms respectively drive the corresponding film grippers to move in the second direction toward the side where the electrode body is located. Alternatively, the first positioning assembly includes an electrode gripper and an electrode driving mechanism, the electrode gripper is configured to grip the electrode body, the electrode driving mechanism is configured to drive the electrode gripper in the second direction toward the side where the covering film is located such that after the first one of the two end surfaces comes into contact with the connecting area, the first one of the two end surfaces and the connecting area continue to move in the second direction synchronously, and the third film driving mechanism drives the corresponding film gripper in the second direction toward the side away from the electrode body after the first one of the two end surfaces comes into contact with the connecting area.

In the above way, projections of the two main covering areas on the corresponding main surfaces in the first direction can gradually cover the exposed portion of the main surfaces, facilitating the covering of the main surfaces with the main covering areas.

In some embodiments, the first film driving mechanism includes a first film driving motor, a first film support and a second film support, the first film driving motor being disposed on the first film support and configured to drive the second film support to move relative to the first film support in the first direction. The third film driving mechanism includes a third film driving motor and a third film support, the third film driving motor being disposed on the second film support and driving the third film support to move relative to the second film support in the second direction. The second film driving mechanism includes a second film driving motor, the second film driving motor being disposed on the third film support and driving the corresponding film gripper to rotate. The film gripper includes film gripping jaws and a film gripping cylinder, the film gripping cylinder being configured to drive the film gripping jaws to grip the covering film.

In the above way, the freedom of movement of the covering film can be further increased, thereby improving the covering effect.

In some embodiments, the covering device further includes second positioning assemblies, the second positioning assemblies being configured to fixedly hold the covering film and the electrode body from the outside of the two main covering areas.

In the above way, the main covering areas may be restricted from detaching from the main surfaces of the electrode body, thereby improving the stability in covering the main surfaces of the electrode body with the main covering areas.

In some embodiments, the second positioning assemblies are carrier fixtures capable of moving synchronously along with the covering film and the electrode body.

In the above way, the transfer of the covering film and the electrode body between different stations can be facilitated, thereby improving the stability of the process of covering the electrode body with the main covering film.

In some embodiments, the first positioning assembly is configured to insert the electrode body and the covering film into the second positioning assemblies in the second direction.

In the above way, the first positioning assembly and the second positioning assemblies may alternately position the electrode assembly, which can make the movement of the electrode assembly between different stations smoother while simplifying the action and structure of the second positioning assemblies to position the electrode assemblies, and is conducive to improving the covering efficiency.

In some embodiments, each of the second positioning assemblies includes a fixed support, an opening and closing mechanism and two limiting members, the two limiting members being movably arranged on the fixed support in the first direction and forming a limiting gap therebetween, and the limiting gap allowing the insertion of the electrode body and the covering film. The opening and closing mechanism is configured to drive the two limiting members to move close to or away from each other.

In the above way, the insertion of the electrode body and the covering film into the limiting gap is facilitated while the gripping effect on the electrode body and the covering film is improved.

In some embodiments, each opening and closing mechanism includes an elastic member and an opening mechanism. The elastic member is disposed between the two limiting members and configured to elastically drive the two limiting members to move close to each other, and the opening mechanism is configured to drive the two limiting members to move away from each other.

In the above way, with the elastic member, the gripping strength of the second positioning assemblies to the electrode body and the covering film can be adjusted adaptively.

In some embodiments, the opening and closing mechanism includes a rotating member, and two ends of the rotating member are respectively connected to the two limiting members. A center region of the rotating member is configured to be rotatably connected to the fixed support, and the rotating member is further configured to drive the other limiting member to move in an opposite direction when the first one of the two limiting members moves in the first direction.

In the above way, with the rotating member, the two limiting members can realize synchronous movement in opposite directions.

In some embodiments, the covering film includes side covering areas connected to the main covering areas, the covering device further includes a second covering assembly, and the second covering assembly is configured to drive the side covering areas to come into contact with and cover the side surfaces.

In the above way, the covering effect of the covering film on the electrode body can be improved by providing the second covering assembly to cover the side surfaces with the side covering areas.

In some embodiments, the second covering assembly includes side pressing plates, a first pressing plate driving mechanism and a second pressing plate driving mechanism, the first pressing plate driving mechanism being configured to drive the side pressing plates in the first direction such that the side pressing plates push the side covering areas to bend toward the side surfaces relative to the main covering areas respectively, and the second pressing plate driving mechanism being configured to drive the side pressing plates in the third direction such that the side pressing plates press the side covering areas against the side surfaces respectively.

In the above way, the action of bending the side covering areas by the second covering assembly and the action of covering the side surfaces with the side covering areas can be smoothly linked, which is conducive to simplifying the action and structure of the second covering assembly and improving the covering efficiency.

In some embodiments, the covering film includes end covering areas connected to the main covering areas, and the second covering assembly is configured to drive the end covering areas to come into contact with and cover the second one of the two end surfaces.

In the above way, the covering effect of the covering film on the electrode body can be improved.

In some embodiments, the second covering assembly includes an end pressing plate, a first pressing plate driving mechanism and a third pressing plate driving mechanism, the first pressing plate driving mechanism being configured to drive the end pressing plate in the first direction such that the end pressing plate pushes the end covering areas to bend toward the second one of the two end surfaces relative to the main covering areas respectively, and the third pressing plate driving mechanism being configured to drive the end pressing plate in the second direction such that the end pressing plate presses the end covering areas against the second one of the two end surfaces.

In the above way, the end covering areas may be pressed against the second one of the two end surfaces through the end pressing plate moving close to the electrode body in the second direction, so that the end covering areas cover the second one of the two end surfaces.

In some embodiments, the first pressing plate driving mechanism includes a pressing plate driving motor, a first pressing plate support and a second pressing plate support, the pressing plate driving motor being disposed on the first pressing plate support and driving the second pressing plate support to move relative to the first pressing plate support. The second pressing plate driving mechanism includes a first pressing plate cylinder, the first pressing plate cylinder being disposed on the second pressing plate support, and the first pressing plate cylinder driving the side pressing plates to move relative to the second pressing plate support. The third pressing plate driving mechanism includes a second pressing plate cylinder, the second pressing plate cylinder being disposed on the second pressing plate support, and the second pressing plate cylinder driving the end pressing plate to move relative to the second pressing plate support.

In the above way, the freedom of movement of the side pressing plates and the end pressing plate can be increased, which is conducive to improving the covering effect.

In some embodiments, the covering film further includes side covering areas and end covering areas that are connected to the main covering areas, where the side covering areas cover the side surfaces, and the end covering areas cover the second one of the two end surfaces; the covering device further includes a first tape attaching assembly, where the first tape attaching assembly is configured to attach a first tape onto the electrode assembly, the first tape includes a first part and a second part connected to each other, and the first tape attaching assembly is configured to attach the first part of the first tape onto the side covering areas and attach the second part of the first tape onto the end covering areas, at corners formed by the side surfaces and the second one of the two end surfaces.

In the above way, the first tape is capable of connecting the side covering areas and the end covering areas together, so that the side covering areas and the end covering areas can be kept fixed relative to the electrode body, thereby improving the covering firmness of the covering film to the electrode body.

In some embodiments, the first tape attaching assembly includes a first unwinding mechanism, a first tape pulling mechanism, and a first cutting mechanism, the first unwinding mechanism being configured to hold and release a first tape roll, the first tape pulling mechanism being configured to clamp and pull the head end of a release portion of the first tape roll, and the first cutting mechanism being configured to cut the first tape from the release portion of the first tape roll.

The above way facilitates automatic feeding of the first tape.

In some embodiments, the first tape pulling mechanism includes a first tape gripping cylinder, a first tape pulling motor and a first tape gripping member, the first tape gripping cylinder being configured to drive the first tape gripping member to grip the head end of the release portion, and the first tape pulling motor being configured to drive the first tape gripping member to move to pull the release portion.

In the above way, the release portion of the first tape roll can extend, and the release portion of the first tape roll is pulled to be cut easily.

In some embodiments, two groups of first unwinding mechanisms and first cutting mechanisms are provided correspondingly. The first tape attaching assembly includes a switching mechanism, and the switching mechanism includes a reel support and a switching motor. The two groups of first unwinding mechanisms and first cutting mechanisms are disposed on the reel support. The switching motor drives the reel support to rotate about a predetermined axis of rotation to enable the two groups of first unwinding mechanisms and first cutting mechanisms to be switched between a standby station and a working station for the operation of the first tape pulling mechanism and first cutting mechanism. The axis of rotation is perpendicular to the plane where the release portion is located.

In the above way, a reel change operation of the first tape roll is facilitated, which can improve the reel change efficiency.

In some embodiments, the first tape attaching assembly includes a first tape picking mechanism configured to suck and pick up the first tape. The first cutting mechanism includes a first pressing block, a first cutter and a first cutting cylinder. The first pressing block and the first cutter are fixedly disposed relative to each other. The first cutting cylinder is configured to drive the first pressing block to press the release portion against the first tape picking mechanism, and to drive the first cutter to cut the first tape from the release portion.

In the above way, the first pressing block may hold down the release portion for positioning, which can improve the stability of the cutting process.

In some embodiments, the first tape attaching assembly includes a first tape picking mechanism configured to suck and pick up the first tape. The first tape picking mechanism includes a first tape picking member, a first tape picking motor, a second tape picking motor, a first tape picking support, and a second tape picking support. The first tape picking member is configured to suck the first tape. The first tape picking motor is disposed on the first tape picking support and drives the second tape picking support to move to a side direction of a main surface of the release portion. The second tape picking motor is disposed on the second tape picking support and drives the first tape picking member to move close to or away from a plane where the release portion is located.

In the above way, the freedom of movement of the first tape picking member can be increased, thereby facilitating the picking and transferring of the first tape.

In some embodiments, the first tape picking member includes a first sub tape-picking portion and a second sub tape-picking portion. The first sub tape-picking portion is configured to suck the first part of the first tape and attach it to the side covering areas. The second sub tape-picking portion is configured to suck the second part of the first tape and attach it to the end covering areas.

In the above way, the coherence of the tape picking action and the tape attaching action can be improved.

In some embodiments, the first sub tape-picking portion is a telescoping member. The second tape picking motor drives the first tape picking member in the third direction, and the first sub tape-picking portion presses the first part of the first tape against the side covering areas and then retracts to enable the second sub tape-picking portion to continue to move in the third direction and fit against the end covering areas so as to attach the second part of the first tape onto the end covering areas. Alternatively, the second sub tape-picking portion is a telescoping member. The second tape picking motor drives the first tape picking member in the second direction, and the second sub tape-picking portion presses the second part of the first tape against the end covering areas and then retracts to enable the first sub tape-picking portion to continue to move in the second direction and fit against the side covering areas so as to attach the first part of the first tape onto the side covering areas.

In the above way, the structural flexibility of the first tape picking member can be improved so that the first tape picking member can adaptively adjust its shape according to the shape of the electrode body, realizing diversified tape attaching actions.

In some embodiments, the first cutting mechanism is configured to cut two first tapes from the release portion. The first tape attaching assembly includes a first tape picking mechanism, the first tape picking mechanism being configured to suck and pick up the first tapes and including first tape picking members, a first tape picking motor, a second tape picking motor, a first tape picking support, a second tape picking support, a third tape picking support and a tape distributing cylinder. Two first tape picking members are provided and suck corresponding first tapes respectively. The first tape picking motor is disposed on the first tape picking support and drives the second tape picking support to move to a side direction of a main surface of the release portion. The second tape picking motor is disposed on the second tape picking support and drives the third tape picking support and the two first tape picking members to move close to or away from a plane where the release portion is located. The tape distributing cylinder is disposed in the third tape picking support and configured to drive the two first tape picking members to move away from each other such that the two first tape picking members correspond to two corners of electrode assemblies spaced apart in the third direction.

In the above way, the first tape picking mechanism may suck and pick up the two first tapes corresponding to each electrode assembly so as to simultaneously attach two first tapes to two corners, spaced apart in the third direction, of the electrode assembly, thereby improving the tape attaching efficiency.

In some embodiments, the covering device further includes a second tape attaching assembly, where the second tape attaching assembly is configured to attach a second tape to the electrode assembly, the second tape includes a first part and a second part connected to each other, and the second tape attaching assembly is configured to attach the first part of the second tape to the main covering areas and to attach the second part of the second tape to the side covering areas, at corners formed by the side surfaces and the main surfaces.

In the above way, the side covering areas and the main covering areas remain fixed relative to the electrode body, thereby improving the firmness in covering the electrode body with the covering film.

In some embodiments, the second tape has two first parts, the two parts are located at two ends of the second part of the second tape, and the second tape attaching assembly is configured to attach the two first parts of the second tape to the corresponding one of the two main covering areas, respectively.

In the above way, the contact area between the second tape and the covering film may be increased, thereby improving the fixing effect to the side covering areas.

In some embodiments, the second tape attaching assembly includes a second unwinding mechanism, a second tape pulling mechanism, and a second cutting mechanism. The second unwinding mechanism is configured to hold and release a second tape roll. The second tape pulling mechanism is configured to clamp and pull the head end of a release portion of the second tape roll. The second cutting mechanism is configured to cut the second tape from the release portion of the second tape roll.

The above way facilitates automatic feeding of the second tape.

In some embodiments, the second tape pulling mechanism includes a second tape gripping cylinder, a second tape pulling motor and a second tape gripping member. The second tape gripping cylinder is configured to drive the second tape gripping member to grip the head end of the release portion, and the second tape pulling motor is configured to drive the second tape gripping member to move to pull the release portion.

In the above way, the release portion of the second tape roll can extend, and the release portion of the second tape roll is pulled to be cut easily.

In some embodiments, two groups of second unwinding mechanisms and second cutting mechanisms are provided correspondingly and spaced apart in a width direction of the release portion. The second tape attaching assembly includes a tape pulling support, a tape pulling shifting cylinder and a tape pulling shifting support, the tape pulling shifting cylinder being disposed on the tape pulling support and the second tape pulling mechanism being disposed on the tape pulling shifting support. The tape pulling shifting cylinder is configured to drive the tape pulling shifting support to move in an interval direction of the two second unwinding mechanisms to enable the second tape pulling mechanism to switch between the two groups of second unwind mechanisms and second cutting mechanisms.

In the above way, two groups of second unwinding mechanisms and second cutting mechanisms are provided, which can reduce the interference of the roll changing operation of the second tape roll to the tape pulling process, and improve the tape pulling efficiency. Since the tape pulling change cylinder is configured to drive the tape pulling shifting support to move in the interval direction of the two second unwinding mechanisms, the position of the tape pulling mechanism corresponds to the position of one group of second unwinding mechanism and second cutting mechanism that is in operation, thus facilitating the tape pulling operation.

In some embodiments, the second tape attaching assembly includes a second tape picking mechanism configured to suck and pick up the second tape. The second cutting mechanism includes a second pressing block, a second cutter, and a second cutting cylinder. The second pressing block and the second cutter are fixedly disposed relative to each other. The second cutting cylinder is configured to drive the second pressing block to press the release portion against the second tape picking mechanism, and to drive the second cutter to cut the second tape from the release portion.

In the above way, the second pressing block may hold down the release portion for positioning, which can improve the stability of the cutting process.

In some embodiments, the second tape attaching assembly includes a second tape picking mechanism configured to suck and pick up the second tape. The second tape picking mechanism includes a second tape picking member, a fourth tape picking motor, and a fourth tape picking support, the second tape picking member being configured to suck the second tape. The fourth tape picking motor is disposed on the fourth tape picking support and drives the second tape picking member to move to a side direction of the main surface of the release portion and drives the second tape picking member to move close to or away from the plane where the release portion is located.

In the above way, the freedom of movement of the second tape picking member can be increased, thereby facilitating the picking and transferring of the second tape.

In some embodiments, the tape picking member includes a third sub tape-picking portion and a fourth sub tape-picking portion. The third sub tape-picking portion is configured to suck the first part of the second tape and fit it to the main covering areas. The fourth sub tape-picking portion is configured to suck the second part of the second tape and fit it to the side covering areas.

In the above way, the coherence of the tape picking action and the tape attaching action can be improved.

In some embodiments, the fourth sub tape-picking portion is a telescoping member. The fourth tape picking motor drives the second tape picking member in the third direction, and the fourth sub tape-picking portion presses the second part of the second tape against the side covering areas and then retracts to enable the third sub tape-picking portion to continue to move in the third direction and fit against the main covering areas, so as to attach the first part of the second tape onto the main covering areas.

In the above way, the structural flexibility of the second tape picking member can be improved so that the second tape picking member can adaptively adjust its shape according to the shape of the electrode body, realizing diversified tape attaching actions.

In some embodiments, two groups of second unwinding mechanisms and second cutting mechanisms are provided correspondingly and spaced apart in a width direction of the release portion. The second tape picking mechanism includes a tape picking shifting cylinder and a tape picking shifting support. The tape picking shifting cylinder is disposed on the fourth tape picking support and the second tape picking member is disposed on the tape picking shifting support. The tape picking shifting cylinder is configured to drive the tape picking shifting support to move in the interval direction of the two second unwinding mechanisms to enable the second tape picking members to switch between the two groups of second unwinding mechanisms and second cutting mechanisms.

In the above way, since the tape picking shifting cylinder is configured to drive the tape picking shifting support to move in the interval direction of the two second unwinding mechanisms, the position of the second tape picking member corresponds to the position of one group of second unwinding mechanism and second cutting mechanism that is in operation, thus facilitating the tape picking operation.

In some embodiments, the second tape attaching assembly includes a third positioning assembly, the third positioning assembly including a main hold-down cylinder, a main hold-down member, a side hold-down cylinder and a side hold-down member. The main hold-down cylinder is configured to drive the main hold-down member to hold down the main covering areas and the main surfaces, and the side hold-down cylinder is configured to drive the side hold-down member to hold down the side covering areas and the side surfaces.

In the above way, the stability of the tape attaching process can be improved.

In some embodiments, the third positioning assembly includes a rotating motor and a rotating support. The main hold-down cylinder, the main hold-down member, the side hold-down cylinder and the side hold-down member are disposed on the rotating support, and the rotating motor is configure to drive the rotating support to rotate. The rotating support rotates in an axis parallel to the second direction.

In the above way, the freedom of movement of the electrode assembly and facilitate can be improved, which is conducive to attaching the second tapes to different positions of the electrode assembly.

In some embodiments, the second tape attaching assembly includes two second unwind mechanisms. The third positioning assembly includes a shifting motor and a shifting support, and the main hold-down cylinder, the main hold-down member, the side hold-down cylinder, the side hold-down member, the rotating motor and the rotating support are disposed on the shifting support. The shifting motor is configured to drive the shifting support in the interval direction of the two second unwinding mechanisms.

In the above way, since the shifting motor is configured to drive the shifting support in the interval direction of the two second unwinding mechanisms, the position of the electrode assembly correspond to the position of one group of second unwinding mechanism and second cutting mechanism that is in operation, thus facilitating the tape attaching operation.

In some embodiments, the electrode body includes two electrode modules stacked on top of each other in the first direction, each of the electrode modules including a positive electrode, a separator, and a negative plate arranged in sequence.

In the above way, it is conducive to increasing the space utilization rate of the electrode assembly and increasing the energy storage density of the electrode assembly.

In a second aspect, the present application provides a covering method for an electrode assembly. The electrode assembly includes an electrode body, and the electrode body has a first direction, a second direction and a third direction that are orthogonal to each other and includes two main surfaces disposed back-to-back with each other in the first direction, two end surfaces disposed back-to-back with each other in the second direction and two side surfaces disposed back-to-back with each other in the third direction. The covering method includes positioning the electrode assembly by a first positioning assembly while keeping the two main surfaces at least partially exposed; positioning a covering film by a first covering assembly, where the covering film includes two main covering areas spaced apart from each other and a connecting area connected between the two main covering areas; and controlling at least one of the first positioning assembly and the first covering assembly to move relative to the other such that the connecting area comes into contact with and covers the first one of the two end surfaces, and the two main covering areas respectively come into contact with and cover an portion of the corresponding one of the two main surfaces that is exposed from the first positioning assembly.

In some embodiments, controlling at least one of the first positioning assembly and the first covering assembly to move relative to the other includes: controlling the relative movement between the first positioning assembly and the first covering assembly such that the time of contact between the connecting area and the first one of the two end surfaces is earlier than the time of contact between the two main covering areas and the corresponding one of the two main surfaces, respectively, and/or controlling the relative movement between the first positioning assembly and the first covering assembly such that covering processes of the two main covering areas on the corresponding one of the two main surfaces are at least partially synchronized.

In some embodiments, In some embodiments, controlling at least one of the first positioning assembly and the first covering assembly to move relative to the other includes: controlling at least one of the first positioning assembly and the first covering assembly to move in the second direction such that the electrode assembly and the covering film approach each other in the second direction and that, after the first one of the two end surfaces comes into contact with the connecting area, the electrode assembly continues to move in the second direction relative to the ends of the two main covering areas that are away from the connecting area; and controlling the first covering assembly to move in the first direction so as to bring the ends of the two main covering areas closer to each other in the first direction, enabling the two main covering areas to come into contact with and cover the exposed portion of the corresponding one of the two main surfaces.

In some embodiments, the electrode assembly includes a tab portion protruding from the first one of the two end surfaces, and the connecting area is provided with a hole. Positioning the covering film by the first covering assembly includes positioning the electrode assembly by the first positioning assembly to enable the tab portion to face toward the connecting area. Controlling at least one of the first positioning assembly and the first covering assembly to move relative to the other includes: controlling the relative movement of the first positioning assembly and the first covering assembly to enable the tab portion to pass through the hole along with the relative movement between the first positioning assembly and the first covering assembly and enable the connecting area to come into contact with and cover the first one of the two end surfaces.

The foregoing descriptions are merely an overview of the technical solutions in the present application. In order that technical means of the present application can be understood more clearly so that the technical solutions can be implemented according to content of the descriptions, and in order that the foregoing and other objectives, features, and advantages of the present application can be understood more clearly, specific implementations of the present application are described below.

### DESCRIPTION OF DRAWINGS

By reading the detailed description of the preferred implementations below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the drawings:
FIG. 1 is a schematic structural diagram of a vehicle in which an electrode assembly is applied, according to one or more embodiments;
FIG. 2 is a structural exploded diagram of a battery in which electrode assemblies are located, according to one or more embodiments;
FIG. 3 is a structural exploded diagram of a battery cell in which an electrode assembly is located, according to one or more embodiments;
FIG. 4 is a partial schematic structural diagram of an electrode assembly according to one or more embodiments;
FIG. 5 is a schematic structural diagram of a first positioning assembly and first covering assemblies that drive a covering film and an electrode assembly according to one or more embodiments;
FIG. 6 is a schematic structural diagram of a first positioning assembly and first covering assemblies that drive a covering film and an electrode assembly according to one or more embodiments;
FIG. 7 is a schematic diagram of a process of covering an electrode assembly with a covering film according to one or more embodiments;
FIG. 8 is a schematic structural diagram of a first positioning assembly according to one or more embodiments;
FIG. 9 is a partial schematic structural diagram of a first covering assembly according to one or more embodiments;
FIG. 10 is a schematic structural diagram of a second positioning assembly positioning an electrode assembly according to one or more embodiments;
FIG. 11 is a top-view schematic structural diagram of a second positioning assembly according to one or more embodiments;
FIG. 12 is a schematic structural diagram of second covering assemblies driving a covering film and an electrode assembly according to one or more embodiments;
FIG. 13 is a schematic structural diagram of a second covering assembly according to one or more embodiments;
FIG. 14 is a partial schematic structural diagram of the second covering assemblies driving the covering film and the electrode assembly as shown in FIG. 12;
FIG. 15 is a schematic structural diagram of the covering film and the electrode assembly as shown in FIG. 12;
FIG. 16 is a schematic structural diagram of a covering device according to one or more embodiments;
FIG. 17 is a schematic structural diagram of an electrode assembly covered with a covering film that is attached with first tapes and second tapes according to one or more embodiments;
FIG. 18 is a schematic structural diagram of a first tape attaching assembly according to one or more embodiments;
FIG. 19 is a schematic diagram of a combination structure of a first unwinding mechanism, a first tape conveying mechanism and a first tape roll according to one or more embodiments;
FIG. 20 is a schematic structural diagram of a first tape picking mechanism according to one or more embodiments;
FIG. 21 is a partial schematic structural diagram of a first tape pulling mechanism according to one or more embodiments;
FIG. 22 is a schematic structural diagram of a first cutting mechanism according to one or more embodiments;
FIG. 23 is a schematic structural diagram of a fist tape picking member sucking a first tape according to one or more embodiments;
FIG. 24 is a schematic diagram of a combination structure of a second tape attaching assembly and an electrode assembly according to one or more embodiments;
FIG. 25 is a schematic diagram of a combination structure of a second unwinding mechanism, a second cutting mechanism, a second tape roll and a second tape conveying mechanism according to one or more embodiments;
FIG. 26 is a schematic structural diagram of a second tape pulling mechanism according to one or more embodiments;
FIG. 27 is a schematic structural diagram of a second tape picking mechanism sucking a second tape according to one or more embodiments;
FIG. 28 is a partial schematic diagram of the second tape picking mechanism sucking the second tape as shown in FIG. 27;
FIG. 29 is a schematic structural diagram of a second cutting mechanism according to one or more embodiments;
FIG. 30 is a schematic structural diagram of a third positioning assembly positioning an electrode assembly according to one or more embodiments; and
FIG. 31 is a schematic structural diagram of an electrode assembly according to one or more embodiments.

Reference signs in specific embodiments are as follows:
1000a vehicle;
100a battery; 200a controller; 300a motor;
10a box body; 11a first sub-box body; 12a second sub-box body; 101b accommodating space; 1 battery cell;
100 case; 110 accommodating housing; 112 opening end; 120 end cover; 200 electrode assembly;
201 tab portion; 210 electrode body; 211 main surface; 212a first one of two end surfaces; 212b second one of two end surfaces; 212 end surface; 213 side surface; 220 electrode module; 221 positive electrode plate; 222 separator; 223 negative electrode plate; 230 fixing member;
300 covering device; 301 covering film feeding mechanism; 302 electrode assembly discharging mechanism; 303 fixture conveying line; 304 manipulator rail; 305 dust removal mechanism;
310 first positioning assembly; 311 electrode gripper; 312 electrode driving mechanism; 313 electrode gripping cylinder; 3131 electrode gripping jaw; 314 electrode driving motor; 3141 first electrode support; 3142 second electrode support;
330 first covering assembly; 331 first sub-covering assembly; 332 film gripper; 333 first film driving mechanism; 334 second film driving mechanism; 335 third film driving mechanism; 336 film gripping cylinder; 337 first film driving motor; 3371 first film support; 338 film gripping jaw; 339 fourth film support; 340 second film driving motor; 341 third film driving motor; 342 second film support; 343 third film support;
350 second positioning assembly; 351 fixed support; 353 limiting member; 354 limiting gap; 355 elastic member; 356 hook plate; 357 rotating member;
360 third positioning assembly; 361 main hold-down cylinder; 362 main hold-down member; 363 side hold-down cylinder; 364 side hold-down member; 365 rotating motor; 366 rotating support; 367 shifting motor; 368 shifting support;
370 second covering assembly; 371 side pressing plate; 372 first pressing plate driving mechanism; 373 second pressing plate driving mechanism; 374 end pressing plate; 3741 end stop block; 3711 side stop block; 375 third pressing plate driving mechanism; 376 first pressing plate cylinder; 3761 second pressing plate cylinder; 377 pressing plate driving motor; 378 first pressing plate support; 379 second pressing plate support;
380 first tape attaching assembly; 381 first unwinding mechanism; 382 first tape pulling mechanism; 3821 first tape gripping cylinder; 3822 first tape pulling motor; 3823 first tape gripping member; 383 first cutting mechanism; 3831 first pressing block; 3832 first cutter; 3833 first cutting cylinder; 384 first tape roll; 385 switching mechanism; 3851 roll support; 3852 switching motor; 386 first tape picking mechanism; 3861 first tape picking member; 3862 first tape picking motor; 3863 second tape picking motor; 3864 first tape picking support; 3865 second tape picking support; 3866 first sub tape-picking portion; 3867 second sub tape-picking portion; 3868 third tape picking support; 3869 tape distributing cylinder; 387 first tape conveying mechanism;
390 second tape attaching assembly; 391 second unwinding mechanism; 392 second tape pulling mechanism; 3921 second tape gripping cylinder; 3922 second tape pulling motor; 3923 second tape gripping member; 393 second cutting mechanism; 3931 second pressing block; 3932 second cutter; 3933 second cutting cylinder; 394 tape pulling support; 3941 tape pulling shifting cylinder; 3942 tape pulling shifting support; 395 second tape picking mechanism; 3951 second tape picking member; 3952 fourth tape picking motor; 3953 fourth tape picking support; 3954 third sub tape-picking portion; 3955 fourth sub tape-picking portion; 3956 tape picking shifting cylinder; 3957 tape picking shifting support; 396 second tape roll; 397 second tape conveying mechanism;
400 covering film; 410 main covering area; 420 connecting area; 421 hole; 430 side covering area; 440 end covering area;
511 first part of first tape; 512 second part of first tape; 510 first tape; 521 first part of second tape; 522 second part of second tape; 520 second tape;
D1 first direction; D2 second direction; D3 third direction; D4 width direction of release portion; D5 interval direction of two second unwinding mechanisms; D6 thickness direction of release portion.

### DESCRIPTION OF EMBODIMENTS

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection", and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the aforementioned terms in the embodiments of the present application can be understood according to specific situations.

With the development of battery technology, batteries are used in more and more fields and have gradually replaced traditional fossil energy in the field of automotive power. Batteries can store chemical energy and convert it into electrical energy in a controlled manner. For recyclable batteries, after discharge, the batteries can be used continually by activating the active material in a charging manner.

A battery is often provided with an electrode assembly and a covering film. The covering film has an insulating function and can be used to cover the electrode assembly. During the battery production process, a covering device is required to cover the electrode assembly with the covering film. However, the existing covering device has a single operation and cannot meet the covering requirements for continuous covering of multiple surfaces of the electrode assembly.

In order to meet the requirement for continuous covering of multiple surfaces of the electrode assembly, the first positioning assembly is configured to position the electrode assembly such that the position and posture of the electrode assembly can be kept stably controlled; the first covering assembly is configured to position the covering film such that the position and posture of the two main covering areas and the connecting area can be kept stably controlled, and at least one of the first positioning assembly and the first covering assembly is configured to drive the electrode assembly and the covering film to perform relative movement, which can adjust the relative positional relationship between the two main surfaces and the two covering areas, as well as the relative positional relationship between the first one of the two end surfaces and the connecting area, thereby achieving continuous covering of the two main surfaces and the first one of the two end surfaces of the electrode assembly.

Based on the above considerations, the present application provides a covering device and a covering method for an electrode assembly. The electrode assembly includes an electrode body, and the electrode body has a first direction, a second direction and a third direction that are orthogonal to each other and includes two main surfaces disposed back-to-back with each other in the first direction, two end surfaces disposed back-to-back with each other in the second direction and two side surfaces disposed back-to-back with each other in the third direction. The covering device includes a first positioning assembly and a first covering assembly. The first positioning assembly is configured to position the electrode assembly while keeping the two main surfaces at least partially exposed. The first covering assembly is configured to position the covering film, where the covering film includes two main covering areas spaced apart from each other and a connecting area connected between the two main covering areas. At least one of the first positioning assembly and the first covering assembly is configured to be movable relative to the other such that the connecting area comes into contact with and covers the first one of the two end surfaces, and the two main covering areas respectively come into contact with and cover an exposed portion of the corresponding one of the two main surfaces. In this way, the relative positional relationship of the electrode assembly and the covering film can be adjusted, so that when the covering film covers the first one of the two main surfaces and the first one of the two end surfaces of the electrode body, continuous covering of the first one of the two main surfaces and the first one of the two end surfaces is realized, which can improve the stability of the covering process, and makes the covering action simple and smooth.

The covering device and covering method for an electrode assembly disclosed in the embodiments of the present application are used for covering the electrode assembly with a covering film. The electrode assembly and the covering film are disposed in a battery. The battery can be used in an electrical apparatus that uses a battery as the power source or in various energy storage systems that use batteries as energy storage elements. The electrical apparatus may be, but is not limited to, a mobile phone, a tablet, a laptop, an electric toy, an electric tool, a battery vehicle, an electric vehicle, a ship, a spacecraft, and the like. The electric toy may include a fixed or mobile electric toy, such as a game console, an electric vehicle toy, an electric ship toy, an electric airplane toy, and the like. The spacecraft may include an airplane, a rocket, a space shuttle, a spaceship, and the like.

For the convenience of description in the following embodiments, an electrical apparatus being a vehicle 1000a according to an embodiment of the present application is taken as an example for the description.

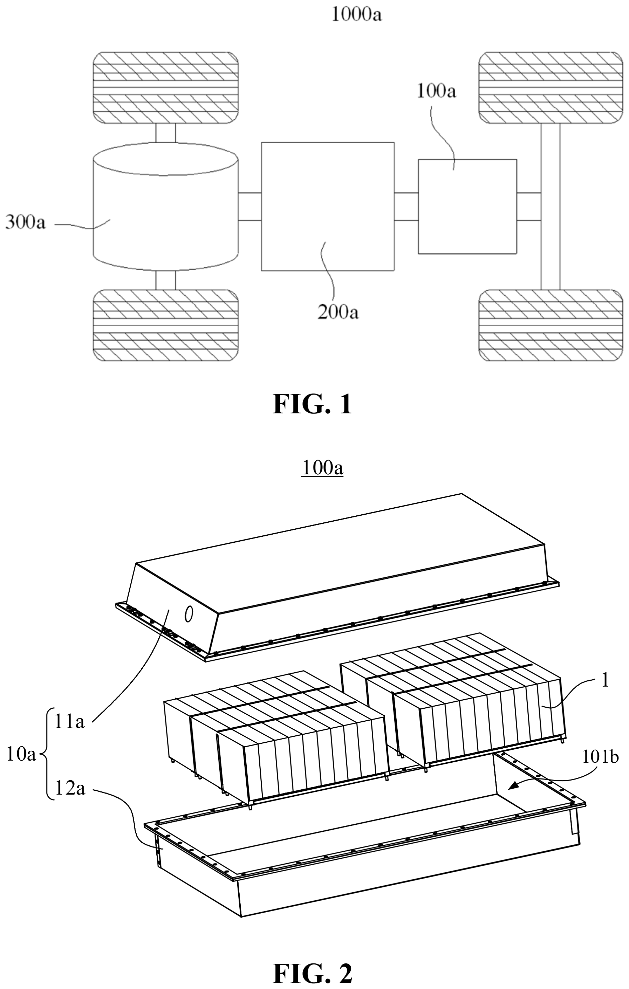

Referring to FIG. 1, the vehicle 1000a may be a fuel vehicle, a gas vehicle, or a new energy vehicle. The new energy vehicle may be an all-electric vehicle, a hybrid electric vehicle, an extended range electric vehicle, or the like. The vehicle 1000a is internally provided with a battery 100a, and the battery 100a may be arranged at a bottom or head or tail of the vehicle 1000a. The battery 100a may be used to supply power to the vehicle 1000a. For example, the battery 100a may be used as an operating power source of the vehicle 1000a. The vehicle 1000a may further include a controller 200a and a motor 300a. The controller 200a is used to control the battery 100a to power the motor 300a, for example, to meet working power demands during starting, navigation, and driving of the vehicle 1000a.

In some embodiments of the present application, the battery 100a not only may serve as an operating power source of the vehicle 1000a, but also may serve as a driving power source of the vehicle 1000a, thus replacing or partially replacing fuel or natural gas to provide driving power for the vehicle 1000a.

In some embodiments, the battery 100a may be an energy storage apparatus. The energy storage apparatus includes an energy storage container, an energy storage electric cabinet, etc.

The battery 100a mentioned in the embodiments of the present application is a single physical module that includes one or more battery cells 1 for providing a higher voltage and capacity.

In the embodiments of the present application, a battery cell 1 may be a secondary battery. The secondary battery refers to a battery cell 1 that may be used continually by activating an active material in a charging manner after the battery cell 1 is discharged. Each battery cell 1 may also be a primary battery.

The battery cell 1 includes but is not limited to a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery and the like. The battery cell 1 may be in cylindrical, flat, cuboid shape, or in other shapes, or the like.

In some embodiments, the battery 100a may be a battery module. When there are a plurality of battery cells 1, the plurality of battery cells 1 are arranged and fixed to form a battery module.

In some embodiments, referring to FIG. 2, the battery 100a may be a battery pack. The battery pack includes a box body 10a and a battery cell 1. The battery cell 1 or the battery module is accommodated in the box body 10a.

In some embodiments, the box body 10 may serve as a part of a chassis structure of the vehicle 1000a. For example, a portion of the box body 10a may become at least a portion of the floor of the vehicle 1000a, or a portion of the box body 10a may become at least a portion of a cross beam and a longitudinal beam of the vehicle 1000a.

Referring to FIG. 2, the battery 100a includes a box body 10a and a battery cell 1, and the battery cell 1 is accommodated within the box body 10a. The box body 10a is used for providing an accommodating space 101b for the battery cell 1, and the box body 10a may adopt various structures. In some embodiments, the box body 10a may include a first sub-box body 11a and a second sub-box body 12a. The first sub-box body 11 and the second sub-box body 12a are covered by each other, and the first sub-box body 11a and the second sub-box body 12a together define the accommodating space 101b for accommodating the battery cell 1. The second sub-box body 12a may be of a hollow structure with one end open, the first sub-box body 11a may be of a plate-like structure, and the first sub-box body 11a covers the opening side of the second sub-box body 12a, so that the first sub-box body 11a and the second sub-box body 12a together define the accommodating space 101b. Both of the first sub-box body 11a and the second sub-box body 12a may also be of a hollow structure with one side open, and the opening side of the first sub-box body 11a covers the opening side of the second sub-box body 12a. Of course, the box body 10a formed by the firs sub-box body 11a and the second sub-box body 12a may be of various shapes, such as a cylinder or a cuboid.

In the battery 100a, there may be a plurality of battery cells 1, and the plurality of battery cells 1 may be connected in series connection, or parallel connection, or parallel-series connection. The parallel-series connection means that some of the plurality of battery cells 1 are connected in series and some are connected in parallel. The plurality of battery cells 1 may be directly connected in series, in parallel, or in parallel-series connection, and then the plurality of battery cells 1 are assembled as a whole to be accommodated in the box body 10a. Of course, the battery 100a may also be formed in the manner that the plurality of battery cells 1 are first connected in series, in parallel, or in parallel-series connection to form battery modules, and the plurality of battery modules are then connected in series, in parallel, or in parallel-series connection into a whole, which is accommodated in the box body 10a. The battery 100a may further include other structures. For example, the battery 100a may further include a convergence component for implementing electrical connection between the plurality of battery cells 1.

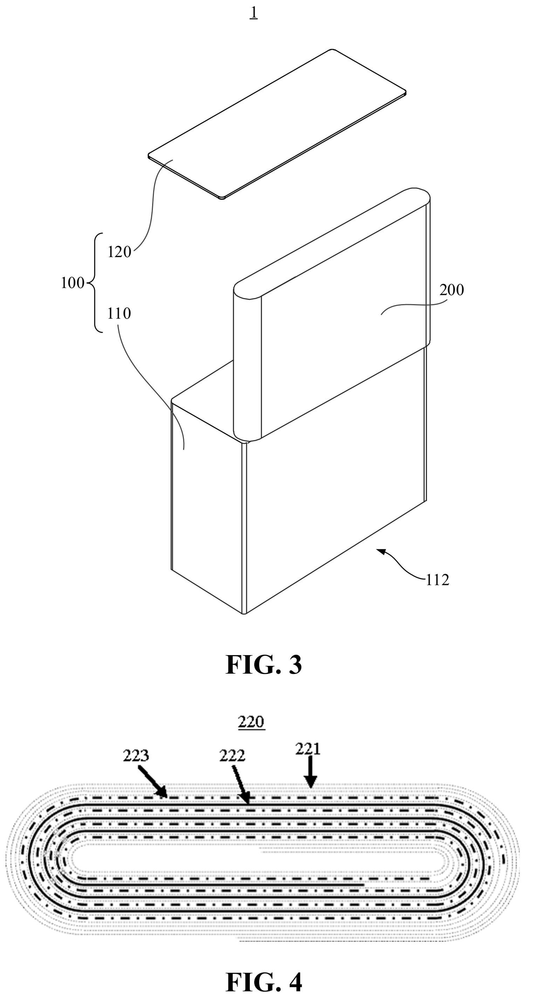

Referring to FIG. 3, the battery cell 1 refers to the smallest unit constituting a battery. In this embodiment, a cylindrical battery cell 1 is taken as an example for description. As shown in FIG. 3, the battery cell 1 includes a case 100, a battery cell assembly 200 and other functional components.

In some embodiments, the case 100 is used for encapsulating components such as the electrode assembly 200 and the electrolyte. The case 100 may be a steel case, an aluminum case, a plastic case (like polypropylene), a composite metal case (like a copper-aluminum composite case), an aluminum-plastic film, or the like.

The case 100 may include an end cover 120 and an accommodating housing 110. The end cover 120 is a component that covers an opening of the accommodating housing 110 to isolate the internal environment of the battery cell 1 from the external environment. Without limitation, the shape of the end cover 120 may be adaptive to the shape of the accommodating housing 110 so as to be matched with the accommodating housing 110. Optionally, the end cover 120 may be made of a material (e.g., an aluminum alloy) with a certain hardness and strength, accordingly, the end cover 120 is less prone to deformation when being subjected to extrusion and collisions, so that the battery cell 1 can have higher structural strength, and the safety performance can also be improved. Functional components such as a terminal post may be arranged on the end cover 120. The terminal post may be used for electrically connecting to the electrode assembly 200, for outputting or inputting electrical energy of the battery cell 1. In some embodiments, the end cover 120 may be further provided with a pressure relief mechanism used for relieving internal pressure when the internal pressure or temperature of the battery cell 1 reaches a threshold. The end cover 120 may be made of a variety of materials, for example, including, without limitation, copper, iron, aluminum, stainless steel, an aluminum alloy, and plastic. In some embodiments, an insulating member may be further arranged on an inner side of the end cover 120 and may be used for isolating an electrical connection component in the accommodating housing 110 from the end cover 120, thereby reducing the risk of short circuit. Exemplarily, the insulating member may be plastic, rubber, or the like.

The accommodating housing 110 is an assembly for matching the end cover 120 to form the internal environment of the battery cell 1. The formed internal environment may be configured to accommodate the electrode assembly 200, an electrolyte and other components. The accommodating housing 110 and the end cover 120 may be separate components, and the accommodating housing 110 and the end cover 120 are connected to form an internal environment of the battery cell 1. Without limitation, the end cover 120 and the accommodating housing 110 may also be integrated. Specifically, the end cover 120 and the accommodating housing 110 may form a common connection surface before other components enter the case. When the interior of the accommodating housing 110 is required to be encapsulated, the accommodating housing 110 is covered with the end cover 120. The accommodating housing 110 may be of various shapes and various sizes, such as a cuboid shape, a cylindrical shape, or a hexagonal prism. Specifically, the shape of the accommodating housing 110 can be determined according to the specific shape and size of the electrode assembly 200. The accommodating housing 110 may be made of a variety materials, for example, including but not limited to, copper, iron, aluminum, stainless steel, an aluminum alloy and the like.

Optionally, the battery cell 1 includes a case 100, a bottom cover, and an electrode assembly 200. The case 100 has an opening end 112, and a terminal post is arranged on a wall of the case 100 opposite to the opening end 112. The terminal post has a through hole, and the case and the bottom cover are connected to form an accommodating cavity communicating with the through hole. An active material covering portion of the electrode assembly 200 is disposed in the case 100, and the tab portion 201 of the electrode assembly 200 passes through the through hole and is connected to the side of the terminal post away from the accommodating cavity.

The electrode assembly 200 is a component of a battery cell 1 where an electrochemical reaction occurs. One or more electrode assemblies 200 may be contained in the case 110.

In some examples, the electrode assembly 200 further includes a positive electrode plate, a negative electrode plate, and a spacer. During charging and discharging of the battery cell 1, active ions (e.g., lithium ions) are intercalated and de-intercalated back and forth between the positive electrode and the negative electrode. The spacer is arranged between the positive electrode and the negative electrode, and may play a role in preventing a short circuit between the positive electrode and the negative electrode while allowing active ions to pass through. As shown in FIG. 4, the spacer may be a separator 222.

In some embodiments, as shown in FIG. 4, the positive electrode may be a positive electrode plate 221, and the positive electrode plate 221 may include a positive electrode current collector and a positive electrode active material disposed on at least one surface of the positive electrode current collector.

For example, the positive electrode current collector has two surfaces opposite to each other in its own thickness direction, and the positive active material is arranged on either one or both of the two opposite surfaces of the positive electrode current collector.

As an example, a metal foil or a composite current collector may be used as the positive electrode current collector. For example, silver surface-treated aluminum or stainless steel, stainless steel, copper, aluminum, nickel, carbon electrode, carbon, nickel, titanium, or the like may be used as the metal foil. The composite current collector may include a high molecular material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the positive active material may include at least one of the following materials: a lithium-containing phosphate, a lithium transition metal oxide, and their respective modified compounds. However, the present application is not limited to these materials, and other conventional materials useful as positive electrode active materials for batteries may also be used. These positive electrode active materials may be used alone or in combination of two or more thereof. Examples of lithium-containing phosphates may include, but are not limited to, at least one of the group consisting of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of lithium transition metal oxides may include, but are not limited to, at least one of the group consisting of lithium cobalt oxide (e.g., LiCoO₂), lithium nickel oxide (e.g., LiNiO₂), lithium manganese oxide (e.g., LiMnO₂, LiMn2O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxide (e.g., LiNi_{0.85}Co_{0.15}Al_{0.05}O₂)), and a modified compound thereof, etc.

In some embodiments, as shown in FIG. 4, the negative electrode may be a negative electrode plate 223, and the negative electrode plate 223 may include a negative electrode current collector.

As an example, a metal foil, a foam metal,a composite current collector or a foamy carbon may be used as the negative electrode current collector. For example, silver surface-treated aluminum or stainless steel, stainless steel, copper, aluminum, nickel, carbon electrode, carbon, nickel, titanium, or the like may be used as the metal foil. The foam metal may be foam nickel, foam copper, foam aluminum, a foam alloy, etc. The composite current collector may include a high molecular material substrate layer and a metal layer. The composite current collector may be formed by forming a metal material (e.g., copper, copper alloy, nickel, nickel alloy, titanium, titanium alloy, silver, and silver alloy) on a polymer material substrate (e.g., a substrate of polypropylene, polyethylene terephthalate, polybutylene terephthalate, polystyrene, or polyethylene).

For example, the negative electrode plate 223 may include a negative electrode current collector and a negative electrode active material arranged on at least one surface of the negative electrode current collector.

As an example, the negative electrode current collector has two surfaces opposite in its own thickness direction, and the negative electrode active material layer is arranged on either one or both of the two opposite surfaces of the negative electrode current collector.

As an example, a negative electrode active material commonly known in the art for the battery cell 1 can be used as the negative active material. As an example, the negative active material may include at least one of the following materials: artificial graphite, natural graphite, soft carbon, hard carbon, silicon-based material, tin-based material, and lithium titanate, etc. The silicon-based material may be selected from at least one of the group consisting of elemental silicon, silicon-oxygen compound, silicon-carbon complex, silicon-nitrogen complex, and silicon alloy. The tin-based material may be selected from at least one of the group consisting of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some embodiments, the electrode assembly 200 further includes the spacer arranged between the positive electrode and the negative electrode.

In some embodiments, the spacer is a separator 222. The type of the separator 222 is not particularly limited in the present application, and any well-known separator 222 with a porous structure having good chemical stability and mechanical stability may be selected.

As an example, the main material of the separator 222 may be selected from at least one of the group consisting of glass fiber, non-woven fabric, polyethylene, polypropylene, polyvinylidene fluoride, and ceramic. The separator 222 may be a single-layer film or a multi-layer composite film, and is not particularly limited. When the separator 222 is a multi-layer composite film, the material of each layer may be the same or different, which is not particularly limited. The spacer may be a separate component located between a positive electrode and a negative electrode, or may be attached to surfaces of the positive electrode and the negative electrode.

In some embodiments, the spacer is a solid electrolyte. The solid electrolyte is provided between the positive electrode and the negative electrode, and functions to transport ions and isolate the positive electrode from the negative electrode.

In some embodiments, the battery cell 1 further comprises an electrolyte that functions to conduct ions between the positive electrode and the negative electrode. The type of the electrolyte is not particularly limited in the present application, and may be selected according to requirements. The electrolyte may be in a liquid state, a gel state, or a solid state.

Electrolyte solution may be a form of the electrolyte. The electrolyte solution contains an electrolyte salt and a solvent.

In some embodiments, the electrolyte salt may be selected from at least one of the group consisting of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of the group consisting of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also be an ether solvent. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

As an example, the polymer solid electrolyte may be a polyether, polysiloxane, polycarbonate, polyacrylonitrile, polyvinylidene fluoride, polymethyl methacrylate, monoionic polymer, polyionic liquid-lithium salt, cellulose, etc. As an example, the polymer solid electrolyte may be polyethylene oxide.

As an example, the inorganic solid electrolyte may be one or more of an oxide solid electrolyte (crystalline perovskite, sodium superionic conductor, garnet, amorphous LiPON film), a sulfide solid electrolyte (a crystalline lithium superionic conductor (lithium germanium phosphorus sulfide and argyrodite), amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some embodiments, the electrode assembly 200 is a winding structure. The positive electrode plate 221 and the negative electrode plate 223 are wound into the wound structure.

In some embodiments, the electrode assembly 200 is provided with a tab portion 201, and the tab portion 201 may conduct current out from the electrode assembly 200. The tab portion 201 includes a positive tab and a negative tab. The positive tab and the negative tab may be located at one end of the electrode body together or located at two ends of the electrode body respectively.

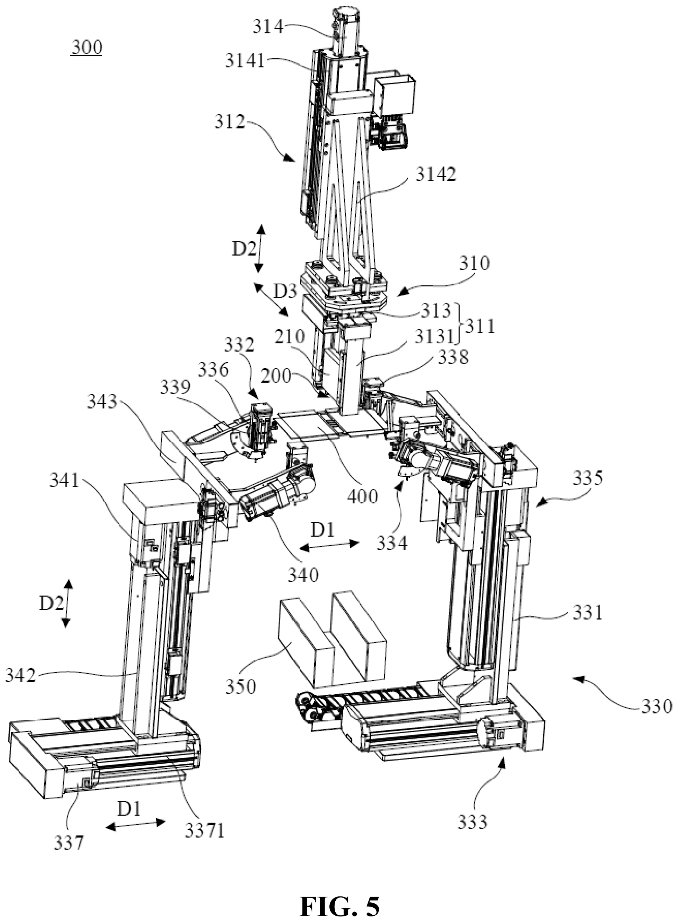

According to some embodiments of the present application, as shown in FIGS. 5 to 7, the electrode assembly 200 described in an embodiment of a covering device for an electrode assembly according to the present application includes an electrode body 210, and the electrode body 210 has a first direction D1, a second direction D2 and a third direction D3 that are orthogonal to each other and includes two main surfaces 211 disposed back-to-back with each other in the first direction D1, two end surfaces 212 disposed back-to-back with each other in the second direction D2 and two side surfaces 213 disposed back-to-back with each other in the third direction D3. The covering device 300 includes a first positioning assembly 310 and a first covering assembly 330. The first positioning assembly 310 is configured to position the electrode assembly 200 while keeping the two main surfaces 211 at least partially exposed. The first covering assembly 330 is configured to position the covering film 400, where the covering film 400 includes two main covering areas 410 spaced apart from each other and a connecting area 420 connected between the two main covering areas 410. At least one of the first positioning assembly 310 and the first covering assembly 330 is configured to be movable relative to the other one such that the connecting area 420 comes into contact with and covers the first one 212a of the two end surfaces 212, and the two main covering areas 410 respectively come into contact with and cover an exposed portion of the corresponding one of the two main surfaces 211.

The first 212a of the two end surfaces 212 may be connected between the two main surfaces 211 of the electrode body 210, so that the two main surfaces 211 may be covered with the two main covering areas 410 while the first one 212a of the two end surfaces 212 is covered with the connecting area 420. In some embodiments, the two main covering areas 410 are movable relative to the connecting area 420, so that when the connecting area 420 covers the first one 212a of the two end surfaces 212, the two main covering areas 410 can move relative to the connecting area 420 to cover the two main surfaces 211. The first covering assembly 330 may be configured to drive the two main covering areas 410 to move respectively relative to the connecting area 420.

The first positioning assembly 310 and the first covering assembly 330 may drive the electrode assembly 200 and the covering film 400 to perform relative movement. When the first positioning assembly 310 positions the electrode assembly 200, the first positioning assembly 310 may act on positions, such as the two main surfaces 211, the two side surfaces 213, or the second one 212b of the two end surfaces 212, of the electrode assembly 200. When the first positioning assembly 310 acts on the two main surfaces 211 of the electrode assembly 200, the two main surfaces 211 are partially exposed. When the first positioning assembly 310 acts on the two side surfaces 213 or the second one 212b of the two end surfaces 212 of the electrode assembly 200, the two main surfaces 211 can be completely exposed.

With the first positioning assembly 310 and the first covering assembly 330, the relative positional relationship between the two main surfaces 211 and the two covering areas as well as the relative positional relationship between the first one 212a of the two end surfaces 212 and the connecting area 420 can be adjusted. When the covering film 400 covers the two main surfaces 211 of the electrode body 210 and the first one 212a of the two end surfaces 212, the stability of the covering process can be improved, and the covering action is simplified and smoothened.

According to some embodiments of the present application, optionally, as shown in FIGS. 5 to 7, the relative movement between the first positioning assembly 310 and the first covering assembly 330 is set such that the time of contact between the connecting area 420 and the first one 212a of the two end surfaces 212 is earlier than the time of contact between the two main covering areas 410 and the corresponding one of the two main surfaces 211, respectively.

The action of covering the first one 212a of the two end surfaces 212 with the connecting area 420 is quite different from the action of covering the two main surfaces 211 with the two main covering areas 410 respectively, and accordingly the two actions cannot be performed simultaneously. If the time of contact between the connecting area 420 and the first one 212a of the two end surfaces 212 is later than the time of contact between the two main covering areas 410 and the corresponding one of the two main surfaces 211, the movement of the connecting area 420 is restricted by the two main covering areas 410, which is not conducive to performing the action of covering the first one 212a of the two end surfaces 212 with the connecting area 420. Since the time of contact between the connecting area 420 and the first one 212a of the two end surfaces 212 is earlier than the time of contact between the two main covering areas 410 and the corresponding one of the two main surfaces 211, respectively, the action of covering the first one 212a of the two end surfaces 212 with the connecting area 420 is carried out after the action of covering the two main surfaces 211 with the two main covering areas 410 is carried out, which reduces the action difficulty in the covering process and facilitates the simplification of the structure of the covering device 300.

According to some embodiments of the present application, optionally, as shown in FIGS. 5 to 7, the relative movement between the first positioning assembly 310 and the first covering assembly 330 is set such that covering processes of the two main covering areas 410 on the corresponding one of the two main surfaces 211 are at least partially synchronized.

The difference in the actions of covering the two main surfaces 211 with the two main covering areas 410 respectively is small, and accordingly the actions are at least partially synchronized. Such an arrangement is conducive to simplifying the covering process and improving the covering efficiency. Further, the actions of covering the corresponding one of the two main surfaces 211 with the two main covering areas 410 are synchronized.

According to some embodiments of the present application, optionally, as shown in FIGS. 5 to 7, before the first one 212a of the two end surfaces 212 comes into contact with the connecting area 420, the first covering assembly 330 is configured to enable the connecting area 420 and the two main covering areas 410 to be coplanar with each other.

Since the connecting area 420 and the two main covering areas 410 are coplanar with each other, it is easy to store the covering film 400 in a stacking manner, which can reduce the space occupied by the covering film 400 and facilitate the feeding of the covering film 400. For example, the first covering assembly 330 stretches the covering film 400 by pulling the same, making the connecting area 420 and the two main covering areas 410 coplanar with each other.

According to some embodiments of the present application, optionally, as shown in FIGS. 5 to 7, the first covering assembly 330 is configured to enable the connecting area 420 to be in a suspended state, and the relative movement between the first positioning assembly 310 and the first covering assembly 330 is set such that the first one 212a of the two end surfaces 212 comes into contact with the connecting area 420 that is in a suspended state.

Since the connecting area 420 is set into a suspended state, the interference to the process of covering the first one 212a of the two end surfaces 212 with the connecting area 420 may be reduced, which is conducive to improving the fit of the connecting area 420 to the first one 212a of the two end surfaces 212, and improving the covering effect of the connecting area 420 to the first one 212a of the two end surfaces 212.

According to some embodiments of the present application, optionally, as shown in FIGS. 5 to 7, the electrode assembly 200 further includes a tab portion 201 protruding from the first one 212a of the two end surfaces 212, the connecting area 420 is provided with a hole 421, and the tab portion 201 is allowed to pass through the hole 421 along with the relative movement between the first positioning assembly 310 and the first covering assembly 330.

The relative movement between the first positioning assembly 310 and the first covering assembly 330 may drive the electrode assembly 200 and the covering film 400 to perform relative movement. Due to the tab portion 201, the difficulty in covering the first one 212a of the two end surfaces 212 with the two covering film 400 is increased. Since the connecting area 420 is provided with the hole 421, the hole 421 can provide passage to the tab portion 201 to reduce the interference of the tab portion 201 to the covering process, thereby improving the covering effect of the covering film 400 on the first one 212a of the two end surfaces 212.

When the electrode assembly 200 is mounted into the case 100, the tab portion 201 and the opening of the case 100 can be first arranged opposite to and spaced apart in the second direction D2, and then the electrode assembly 200 is moved toward the case 100 in the second direction D2, so that the tab portion 201 and the first one 212a of the two end surfaces 212 enter the case 100 in sequence. The connecting area 420 and the main covering area 410 can constraint the electrode assembly 200, and the joint between each of the main surfaces 211 of the electrode assembly 200 and the first one 212a of the two end surfaces 212 forms an arc surface, so that the first one 212a of the two end surfaces 212 enters the case 100 more smoothly, which facilitates mounting the electrode assembly 200 into the case 100 and is conducive to improving the assembly efficiency and assembly effect.

Further, the two main surfaces 211, the two side surfaces 213 and the second one 212b of the two end surfaces 212 of the electrode body 210 are not provided with the tab portion 201. The process of the covering device 300 controlling the covering film 400 to cover the first one 212a of the two end faces 212 is earlier than the process of the covering device 300 controlling the covering film 400 to cover the second one 212b of the two end surfaces 212 of the electrode body 210 and the two main surfaces 211 and two side surfaces 213 of the electrode body 210. In the process of covering the electrode body 210 with the covering film 400, it is necessary to perform a fixing operation on the edge of the covering film 400 such that the covering film 400 can be fixed onto the electrode body 210. The covering device 300 controls the covering film 400 to first cover the first one 212a of the two end surfaces 212, to enable the edge of the covering film 400 to fall outside the first one 212a of the two end surfaces 212, so that the tab portion 201 will not interfere with the fixing operation of the edge of the covering film 400, improving the covering effect of the covering film 400 on the electrode body 210. In addition, the edge of the covering film 400 falls outside the first one 212a of the two end surfaces 212, the risk of the edge of the covering film 400 being squeezed and released from the electrode body 210 can be reduced when the first one 212a of the two end surfaces 212 enters the case 100, facilitating mounting the electrode assembly 200 into the case 100.

According to some embodiments of the present application, optionally, as shown in FIGS. 5 to 7, at least one of the first positioning assembly 310 and the first covering assembly 330 is configured to move in the second direction D2 such that the electrode assembly 200 and the covering film 400 approach each other in the second direction D2 and that, after the first one 212a of the two end surfaces 212 comes into contact with the connecting area 420, the electrode assembly 200 continues to move in the second direction D2 relative to the ends of the two main covering areas 410 that are away from the connecting area 420; and the first covering assembly 330 is further configured to move in the first direction D1 such that the ends of the two main covering areas 410 approach each other in the first direction D1 and accordingly the two main covering areas 410 come into contact with and cover an exposed portion of the corresponding one of the two main surfaces 211.

Specifically, the first positioning assembly 310 may drive the electrode assembly 200 to approach the covering film 400 in the second direction D2, or the first covering assembly 330 may drive the covering film 400 to approach the electrode assembly 200 in the second direction D2, or the first positioning assembly 310 drives the electrode assembly 200 to approach the covering film 400 in the second direction D2 while the first covering assembly 330 drives the covering film 400 to approach the electrode assembly 200 in the second direction D2, so that the electrode assembly 200 and the covering film 400 approach each other in the second direction D2 until the first one 212a of the two end surfaces 212 comes into contact and is covered with the connecting area 420.

The two main surfaces 211 may be connected between the two end surfaces 212 in the second direction D2. After the first one 212a of the two end surfaces 212 comes into contact with the connecting area 420, the electrode assembly 200 is driven to continue to move in the second direction D2 relative to the ends of the two main covering areas 410 that are away from the connecting area 420 such that exposed portions of the main surfaces 211 can be gradually covered with projections, on the corresponding main surface 211, of the two main covering areas 410 in the first direction D1. At this point, the first covering assembly 330 drives the ends of the two main covering areas 410 to approach each other in the first direction D1 respectively such that the two main covering areas 410 come into contact with and cover the exposed portion of the corresponding one of the two main surfaces 211.

With such an arrangement, the covering film 400 can be smoothly connected between the first one 212a of the two end surfaces 212 and the two main surfaces 211, which simplifies the operation of the covering process and is conducive to improving the covering efficiency.

According to some embodiments, optionally, as shown in FIGS. 5, 6 and 8, the first positioning assembly 310 includes an electrode gripper 311, and the electrode gripper 311 is configured to grip the electrode body 210 in the third direction D3 from the outside of the two side surfaces 213, or is configured to grip the electrode body 210 in the first direction D1 from the outside of the two main surfaces 211.

When the electrode gripper 311 grips the electrode body 210, the electrode gripper 311 and the electrode body 210 can remain relatively fixed. Since the electrode gripper 311 is provided to grip the electrode body 210, the first positioning assembly 310 can position the electrode assembly 200. Since the electrode gripper 311 is configured to grip the electrode body 210 in the third direction D3 from the outside of the two side surfaces 213, the electrode gripper 311 can avoid the two main surfaces 211 of the electrode body 210, which is conducive to expanding the area of the exposed portions of the two main surfaces 211, and improving the effect of covering the two main surfaces 211. The area of the two main surfaces 211 is greater than that of the two side surfaces 213. The electrode gripper 311 is configured to grip the electrode body 210 from the outside of the two main surfaces 211 in the first direction D1, which is conducive to improving the stability of the electrode gripper 311 in gripping the electrode body 210.

Further, the electrode body 210 includes two electrode modules 220 described below. The electrode gripper 311 is configured to grip the electrode body 210 from the outside of the two main surfaces 211 in the first direction D1, which is conducive to keeping the two electrode modules 220 relatively fixed and improving the stability of the electrode gripper 311 in gripping the electrode body 210.

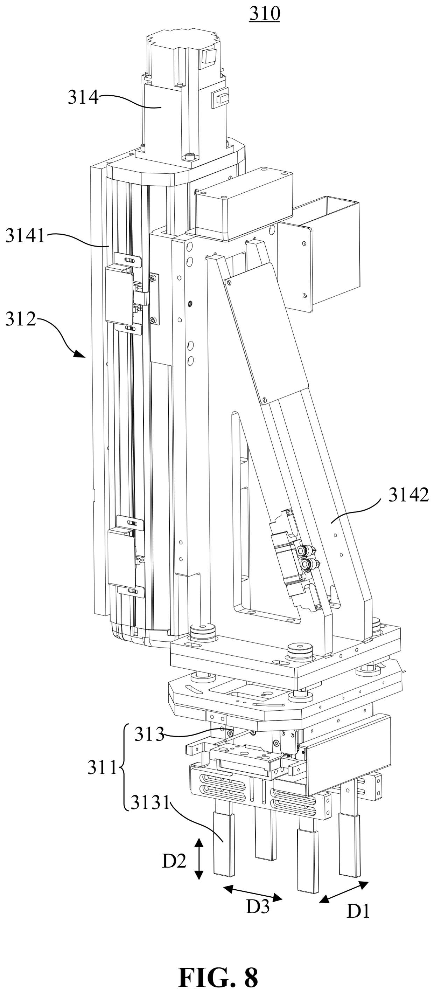

Optionally, as shown in FIG. 5 and FIG. 8, the electrode gripper 311 is connected to the electrode gripping cylinder 313 in a driving manner, and the electrode gripping cylinder 313 may control the electrode gripper 311 to grip or release the electrode body 210.

According to some embodiments, optionally, as shown in FIGS. 5 to 7, the first positioning assembly 310 includes an electrode driving mechanism 312. The electrode driving mechanism 312 is configured to drive the electrode gripper 311 in the second direction D2 toward the side where the covering film 400 is located such that after the first one 212a of the two end surfaces 212 comes into contact with the connecting area 420, the first one 212a of the two end surfaces 212 and the connecting area 420 continue to move in the second direction D2 synchronously.

The electrode driving assembly may provide power for the electrode assembly 200 to move in the second direction D2. With such an arrangement, the covering film 400 can be smoothly connected between the first one 212a of the two end surfaces 212 and the two main surfaces 211, which simplifies the operation of the covering process and is conducive to improving the covering efficiency.

Further, the electrode driving mechanism 312 may be connected to the electrode gripper 311 in a driving manner. The electrode driving mechanism 312 may drive the electrode assembly 200 to move in the second direction D2 by driving the electrode gripper 311 to move in the second direction D2.

Optionally, the electrode driving mechanism 312 includes an electrode driving motor 314, a lead screw and a slider. The electrode driving motor 314 may drive the lead screw to rotate, and the slider sleeves over the lead screw and is screwed with the lead screw through a thread. The slider and the electrode assembly 200 are relatively fixed with each other, and the axis of rotation of the lead screw is arranged to be parallel to the second direction D2. When the electrode driving motor 314 drives the lead screw to rotate, it can drive the slider to move in the direction of the axis of rotation of the lead screw, thereby driving the electrode assembly 200 to move in the second direction D2.

According to some embodiments of the present application, optionally, as shown in FIGS. 5 and 8, the electrode driving mechanism 312 includes an electrode driving motor 314, a first electrode support 3141 and a second electrode support 3142, the electrode driving motor 314 is disposed on the first electrode support 3141, and the electrode driving motor 314 is configured to drive the second electrode support 3142 to move relative to the first electrode support 3141 in the second direction D2. The electrode gripper 311 is disposed on the second electrode support 3142 and includes electrode gripping jaws 3131 and an electrode gripping cylinder 313. The electrode gripping cylinder 313 is configured to drive the electrode gripping jaws 3131 to grip the electrode body 210.

Such an arrangement facilitates stable movement of the electrode assembly 200 and can improve the accuracy of positioning the electrode assembly 200.

In some embodiments, the first covering assembly 330 includes a support frame, a support driving mechanism, and two support plates spaced apart. The support driving mechanism and the two support plates are disposed on the support frame. One end of each support plate is rotatably connected to the support frame. The support driving mechanism is used for driving the two support plates to rotate relative to the support frame such that the two support plates can switch between a spreading state and an opposing state. The two support plates respectively have support planes. In the spreading state, the two support planes face the same direction and are coplanar. The two support planes are used for supporting one main covering area 410 respectively, so that the connecting area 420 and the two main covering areas 410 can be coplanar with each other. The two support plates are arranged at an interval to enable the connecting area 420 to be in a suspended state. In the opposing state, the two support planes are spaced apart and opposite to each other, so that the two main covering areas 410 correspondingly supported by the two support planes are bent relative to the connecting area 420. In this way, the two support plates are switched from the spreading state to the opposing state, so that the two main covering areas 410 can cover the two main surfaces 211.

Optionally, the two support plates respectively have a sucking structure, and the sucking structure is used for keeping the main covering areas 410 relatively fixed to the support plates by sucking the main covering areas 410.

According to some embodiments, optionally, as shown in FIGS. 5 to 7, the first covering assembly 330 includes two first sub-covering assemblies 331 spaced apart from each other, each of the first sub-covering assemblies 331 includes a film gripper 332 and a first film driving mechanism 333, two film grippers 332 respectively grip two ends of the covering film 400 that are away from the connecting area 420, and the first film driving mechanisms 333 drive the two film grippers 332 to approach each other in the first direction D1 to enable regions of the main covering areas 410 not gripped by the film grippers 332 to be bent relative to the connecting area 420 toward the corresponding main surfaces 211.

In some embodiments, two ends of the covering film 400 away from the connecting area 420 may be located in the two main covering areas 410 respectively, and the main covering areas 410 are gripped by the film grippers 332. In some other embodiments, two ends of the covering film 400 away from the connecting area 420 may be located outside of the two main covering areas 410 respectively, and the main covering areas 410 are not gripped by the film grippers 332. For example, the covering film 400 includes end covering areas 440 described below, and two ends of the covering film 400 away from the connecting area 420 may be located in the end covering areas 440.

When the first film driving mechanisms 333 drive the two film grippers 332 to move close to each other in the first direction D1, the two film grippers 332 may drive the two ends of the covering film 400 away from the connecting area 420 to move close to each other, thereby driving the two main covering areas 410 to move close to the corresponding main surfaces 211. When the main covering areas 410 move close to the corresponding main surfaces 211, the regions of the main covering areas 410 that are not gripped by the film grippers 332 can be bent relative to the connecting area 420.

In the first direction D1, acting forces exerted by the two film grippers 332 on the connecting area 420 through the two main covering areas 410 can offset each other, so that the connecting area 420 can remain relatively fixed with the electrode body 210 after coming into contact with the electrode body 210. Moreover, in the second direction D2, the connecting area 420 is supported by the electrode body 210, so that the connecting area 420 can be used as a fulcrum for bending the regions of the main covering areas 410 that are not gripped by the film grippers 332.

The two film grippers 332 are configured to grip the two ends of the covering film 400 that are away from the connecting area 420 respectively, the control on the movement of the main covering areas 410 is facilitated, which is conducive to keeping the regions of the main covering areas 410 that are not gripped by the film grippers 332 in an extended state, and facilitates the action of covering the main surfaces 211 with the main covering areas 410, thereby improving the effect of covering of the main surfaces 211 with the main covering areas 410.

Optionally, as shown in FIGS. 5, 6 and 9, the film gripper 332 is connected to the film gripping cylinder 336 in a driving manner, and the film gripping cylinder 336 may control the film gripper 332 to grip or release the covering film 400.

Optionally, as shown in FIG. 5, 6 and 9, the first film driving mechanism 333 includes a first film driving motor 337, and two first film driving motors 337 are configured to drive the two film grippers 332 to approach each other in the first direction D1. Specifically, the first film driving mechanism 333 further includes a lead screw and a slider. The first film driving motor 337 may drive the lead screw to rotate, and the slider sleeves over the lead screw and is screwed with the lead screw through a thread. The slider and the film gripper 332 are relatively fixed with each other, and the axis of rotation of the lead screw is arranged to be parallel to the first direction D1. When the first film driving motor 337 drives the lead screw to rotate, it can drive the slider to move in the direction of the axis of rotation of the lead screw, thereby driving the film gripper 332 to move in the first direction D1.

Optionally, as shown in FIG. 5, 6 and 9, each film gripper 332 has two film gripping jaws 338, each film gripping jaw 338 is used for gripping a corner of the covering film 400, and the four film gripping jaws 338 grip four corners of the covering film 400 respectively.

According to some embodiments of the present application, optionally, as shown in FIGS. 5, 6 and 9, the first film driving mechanism 333 includes a first film driving motor 337, a first film support 3371 and a second film support 342, where the first film driving motor 337 is disposed on the first film support 3371, and the first film driving motor 337 is configured to drive the second film support 342 to move relative to the first film support 3371 in the first direction D1. The film gripper 332 is disposed on the second film support 342 and includes film gripping jaws 338 and a film gripping cylinder 336. The film gripping cylinder 336 is configured to drive the film gripping jaws 338 to grip the covering film 400.

Such an arrangement facilitates stable movement of the covering film 400 and can improve the accuracy of positioning the covering film 400.

According to some embodiments of the present application, optionally, as shown in FIGS. 5, 6 and 9, each of the first sub-covering assemblies 331 further includes a second film driving mechanism 334, and two second film driving mechanisms 334 respectively drive the corresponding film grippers 332 to rotate to enable the trend of movement of regions of the covering film 400 gripped by the film grippers 332 relative to the connecting area 420 to be consistent with the trend of bending of the un-gripped regions of the main covering areas 410 relative to the connecting area 420.

The un-gripped regions of the main covering areas 410 are bent relative to the connecting area 420 to cover the main surfaces 211. After the un-gripped regions of the main covering areas 410 cover the main surfaces 211, the film grippers 332 can release the gripping to the covering film 400, and the regions of the covering film 400 gripped by the film grippers 332 also need to cover the electrode body 210. Since the trend of movement of the regions of the covering film 400 gripped by the film grippers 332 relative to the connecting area 420 is set to be consistent with the trend of bending of the un-gripped regions of the main covering areas 410 relative to the connecting area 420, the regions of the covering film 400 gripped by the film grippers 332 may be closer to the electrode body 210, thereby facilitating the covering of the regions of the covering film 400 gripped by the film grippers 332 on the electrode body 210.

In addition, after the film grippers 332 release the covering film 400, Since the trend of movement of the regions of the covering film 400 gripped by the film grippers 332 relative to the connecting area 420 is set to be consistent with the trend of bending of the un-gripped regions of the main covering areas 410 relative to the connecting area 420, the adverse effect of the regions of the covering film 400 gripped by the film grippers 332 on the main surfaces 211 covered with the un-gripped regions of the main covering areas 410 can be reduced, reducing the risk of the un-gripped regions of the main covering areas 410 falling off the main surfaces 211.

Optionally, as shown in FIGS. 5, 6 and 9, the second film driving mechanism 334 includes a fourth film support 339 and a second film driving motor 340, the fourth film support 339 is provided with a film gripper 332, and the second film driving motor 340 is used for driving the fourth film support 339 to rotate. Further, the film gripping cylinder 336 is fixed to the fourth film support 339.

According to some embodiments of the present application, optionally, as shown in FIGS. 5, 6 and 9, the first film driving mechanism 333 includes a first film driving motor 337, a first film support 3371 and a second film support 342, where the first film driving motor 337 is disposed on the first film support 3371, and the first film driving motor 337 is configured to drive the second film support 342 to move relative to the first film support 3371 in the first direction D1. The second film driving mechanism 334 includes a second film driving motor 340, and the second film driving motor 340 is disposed on the second film support 342 and drives the corresponding film gripper 332 to rotate. The film gripper 332 includes film gripping jaws 338 and a film gripping cylinder 336, and the film gripping cylinder 336 is configured to drive the film gripping jaws 338 to grip the covering film 400.

Such an arrangement can improve the movement freedom of the covering film 400 and enhance the covering effect.

According to some embodiments of the present application, optionally, as shown in FIGS. 5, 6 and 9, each of the first sub-covering assemblies 331 further includes a third film driving mechanism 335. The two third film driving mechanisms 335 respectively drive the corresponding film grippers 332 to move in the second direction D2 toward the side where the electrode body 210 is located.

When the film gripper 332 moves in the second direction D2 toward the side where the electrode body 210 is located, the electrode assembly 200 may remain fixed or move in the second direction D2 toward the covering film 400. With such an arrangement, the film gripper 332 is driven to move in the second direction D2 toward the side where the electrode body 210 is located, the first one 212a of the two end surfaces 212 is allowed to come into contact with the connecting area 420, and the main covering areas 410 can be driven to move in the second direction D2 toward the side where the electrode body 210 is located, so that the projections of the two main covering areas 410 in the first direction D1 on the corresponding main surfaces 211 can gradually cover the exposed portions of the main surfaces 211, thereby facilitating the covering of the main surfaces 211 with the main covering areas 410.

Optionally, as shown in FIGS. 5, 6 and 9, the first positioning assembly 310 includes an electrode gripper 311 and an electrode driving mechanism 312, the electrode gripper 311 is configured to grip the electrode body 210, the electrode driving mechanism 312 is configured to drive the electrode assembly 200 in the second direction D2 toward the side where the covering film 400 is located such that after the first one 212a of the two end surfaces 212 comes into contact with the connecting area 420, the first one 212a of the two end surfaces 212 and the connecting area 420 continue to move in the second direction D2 synchronously, and the third film driving mechanism 335 drives the corresponding film gripper 332 in the second direction D2 to move toward the side away from the electrode body 210 in the second direction D2 after the first one 212a of the two end surfaces 212 comes into contact with the connecting area 420.

A direction in which the film gripper 332 moves along the second direction D2 may be the same as a direction in which the electrode assembly 200 moves along the second direction D2, so that the covering film 400 and the electrode assembly 200 can be synchronously moved to a new station. During the process of synchronously moving the covering film 400 and the electrode assembly 200 to a new work station, a displacement stroke of the film gripper 332 in the second direction D2 toward the side away from the electrode body 210 is smaller than a displacement stroke of the electrode assembly 200 in the second direction D2 toward the side where the covering film 400 is located, so that the covering film 400 and the electrode assembly 200 have a relative displacement, the first one 212a of the two end surfaces 212 can come into contact with the connecting areas 420, and the main covering areas 410 can be driven to move in the second direction D2 toward the side where the electrode body 210 is located, and accordingly, the projections of the two main covering areas 410 in the first direction D1 on the corresponding main surfaces 211 can gradually cover the exposed portions of the main surfaces 211, facilitating the covering of the main surfaces 211 with the main covering areas 410.

Optionally, as shown in FIGS. 5, 6 and 9, the third film driving mechanism 335 is provided with a third film driving motor 341, and the third film driving motor 341 is used for driving the corresponding film gripper 332 to move in the second direction D2. Specifically, the third film driving mechanism 335 further includes a lead screw and a slider. The third film driving motor 341 may drive the lead screw to rotate, and the slider sleeves over the lead screw and is screwed with the lead screw through a thread. The slider and the film gripper 332 are relatively fixed with each other, and the axis of rotation of the lead screw is arranged to be parallel to the second direction D2. When the third film driving motor 341 drives the lead screw to rotate, it can drive the slider to move in the direction of the axis of rotation of the lead screw, thereby driving the film gripper 332 to move in the second direction D2.

Optionally, as shown in FIGS. 5, 6 and 9, the first sub-covering assembly 331 is provided with a second film support 342 and a third film support 343, the second film support 342 is extended in the second direction D2, and the third film support 343 is slidably disposed on the second film support 342 in the second direction D2. The second film driving mechanism 334 and the film gripper 332 are disposed on the third film support 343. The third film driving mechanism 335 is connected to the third film support 343 in a driving manner, and the third film driving mechanism 335 can drive the third film support 343 to move in the second direction D2, thereby driving the second film driving mechanism 334 and the film gripper 332 to move in the second direction D2 through the third film support 343. The third film driving mechanism 335 is arranged on the second film support 342, and the first film driving mechanism 333 is connected to the second film support 342. The first film driving mechanism 333 can drive the second film support 342 to move in the first direction D1, thereby driving the third film driving mechanism 335, the third film support 343, the second film driving mechanism 334 and the film gripper 332 to move in the first direction D1 through the second film support 342.

According to some embodiments of the present application, optionally, as shown in FIGS. 5, 6 and 9, the first film driving mechanism 333 includes a first film driving motor 337, a first film support 3371 and a second film support 342, where the first film driving motor 337 is disposed on the first film support 3371, and the first film driving motor 337 is configured to drive the second film support 342 to move relative to the first film support 3371 in the first direction D1. The third film driving mechanism 335 includes a third film driving motor 341 and a third film support 343, and the third film driving motor 341 is disposed on the second film support 342 and drives the third film support 343 to move relative to the second film support 342 in the second direction D2. The second film driving mechanism 334 includes a second film driving motor 340, and the second film driving motor 340 is disposed on the third film support 343 and drives the corresponding film gripper 332 to rotate. The film gripper 332 includes film gripping jaws 338 and a film gripping cylinder 336, and the film gripping cylinder 336 is configured to drive the film gripping jaws 338 to grip the covering film 400.

Such an arrangement can further increase the movement freedom of the covering film 400 and improve the covering effect.

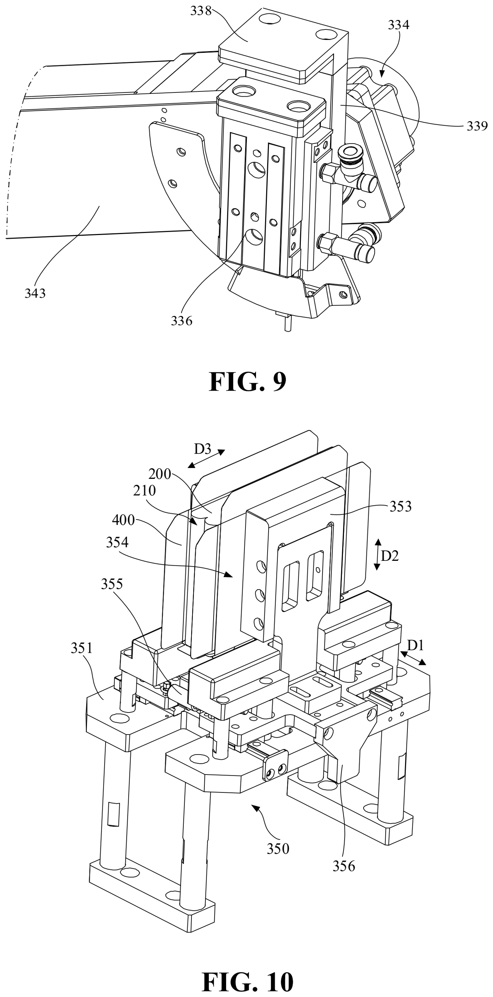

According to some embodiments of the present application, optionally, as shown in FIGS. 5, 10, ad 11, the covering device 300 further includes second positioning assemblies 350, and the second positioning assemblies 350 is configured to fixedly hold the covering film 400 and the electrode body 210 from the outside of the two main covering areas 410.

After the two main covering areas 410 cover the two main surfaces 211 of the electrode body 210, the second positioning assemblies 350 may be used for gripping the covering film 400 and the electrode body 210. By providing the second positioning assembly 350, the main covering areas 410 can be restricted from detaching from the main surfaces 211 of the electrode body 210, thereby improving the stability of covering the main surfaces 211 of the electrode body 210 with the main covering areas 410.

According to some embodiments of the present application, optionally, as shown in FIGS. 5, 10 and 11, the second positioning assemblies 350 are carrier fixtures capable of moving synchronously along with the covering film 400 and the electrode body 210.

Since the second positioning assemblies 350 are carrier fixtures capable of moving synchronously along with the covering film 400 and the electrode body 210, the covering film 400 and the electrode body 210 can be easily transferred between different workstations, thereby improving the stability of the process of covering the electrode body 210 with the covering film 400.

Optionally, the first positioning assembly 310 is a manipulator with a gripping function.

According to some embodiments of the present application, optionally, as shown in FIGS. 5, 10 and 11, the first positioning assembly 310 is configured to insert the electrode body 210 and the covering film 400 into the second positioning assemblies 350 in the second direction D2.

The first positioning assembly 310 may drive the electrode assembly 200 in the direction D2 to move toward the side where the covering film 400 is located. After the electrode body 210 and the covering film 400 are inserted into the second positioning assemblies 350, the second positioning assemblies 350 can position the electrode assembly 200. After the main surfaces 211 of the covering body 210 are covered with the covering film 400, the first positioning assembly 310 and the second positioning assemblies 350 can alternately position the electrode assembly 200, which can make the movement of the electrode assembly 200 between different stations smoother while simplifying the action and structure of the second positioning assemblies 350 to position the electrode assembly 200 and accordingly is conducive to improving the covering efficiency.

Optionally, as shown in FIGS. 5, 10 and 11, the second positioning assembly 350 has two limiting members 353 capable of moving away from or close to each other. When the electrode body 210 and the covering film 400 are inserted into the second positioning assemblies 350, the two limiting members 353 can move away from each other, thereby facilitating the insertion of the electrode body 210 and the covering film 400 into the second positioning assemblies 350.

According to some embodiments of the present application, optionally, as shown in FIGS. 5, 10 and 11, each of the second positioning assemblies 350 includes a fixed support 351, an opening and closing mechanism and two limiting members 353, the two limiting members 353 are movably arranged on the fixed support 351 in the first direction D1 and form a limiting gap 354 therebetween, and the limiting gap 354 allows the insertion of the electrode body 210 and the covering film 400. The opening and closing mechanism is configured to drive the two limiting members 353 to move close to or away from each other.

With such an arrangement, the insertion of the electrode body 210 and the covering film 400 into the limiting gap 354 is facilitated while the gripping effect on the electrode body 210 and the covering film 400 is improved.

According to some embodiments of the present application, optionally, as shown in FIGS. 5, 10 and 11, each opening and closing mechanism includes an elastic member 355 and an opening mechanism (not shown in the figures). The elastic member 355 is disposed between the two limiting members 353 and configured to elastically drive the two limiting members 353 to move close to each other, and the opening mechanism is configured to drive the two limiting members 353 away from each other.

With the elastic member 355, the gripping strength of the second positioning assemblies 350 to the electrode body 210 and the covering film 400 can be adjusted adaptively.

Optionally, as shown in FIGS. 5, 10 and 11, a hook plate 356 is disposed on each limiting member 353, and the opening mechanism drives the two limiting members 353 to move away from each other through the hook plates 356.

According to some embodiments of the present application, optionally, as shown in FIGS. 5, 10 and 11, the opening and closing mechanism includes a rotating member 357, and two ends of the rotating member 357 are respectively connected to the two limiting members 353. A center region of the rotating member 357 is configured to be rotatably connected to the fixed support 351, and the rotating member 357 is further configured to drive the other limiting member 353 to move in an opposite direction when the first one of the two limiting members 353 moves in the first direction D1.

Between the two limiting members 353, the rotating member 357 may play a role in transmitting and reversing in movement. With the rotating member 357, the two limiting members 353 can realize synchronous movement in opposite directions.

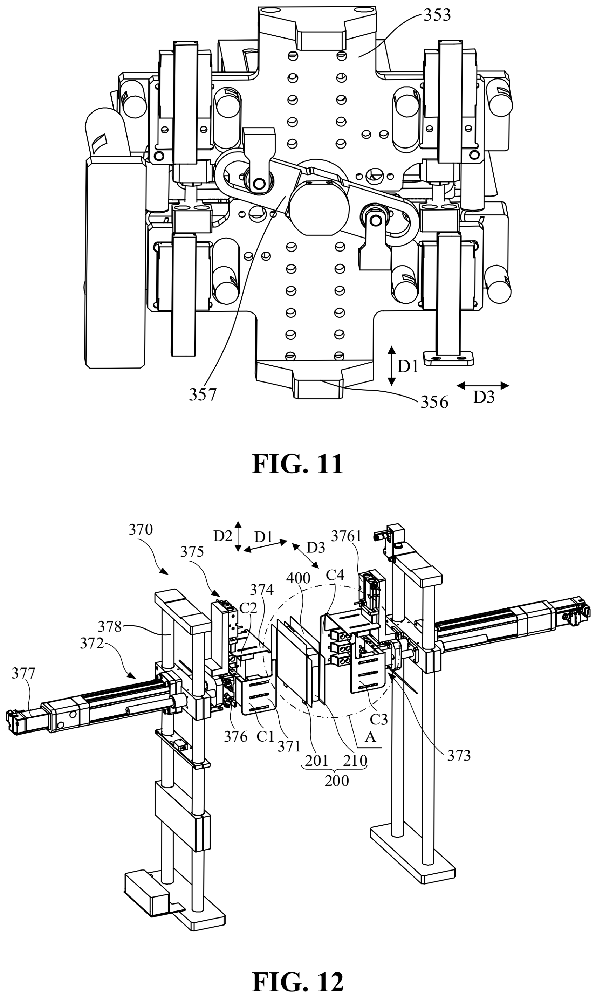

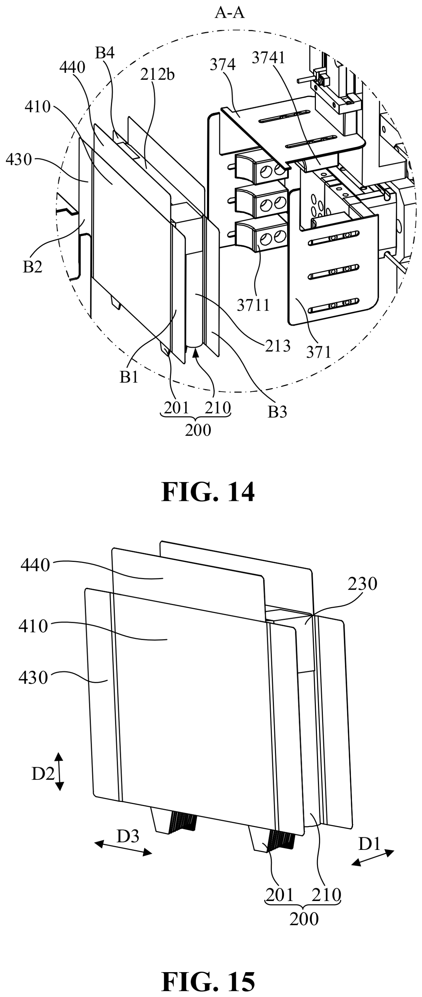

According to some embodiments, optionally, as shown in FIGS. 12 and 15, the covering film 400 includes side covering areas 430 connected to the main covering areas 410, the covering device 300 further includes a second covering assembly 370, and the second covering assembly 370 is configured to drive the side covering areas 430 to come into contact with and cover the side surfaces 213.

The second covering assembly 370 can adjust the relative positional relationship between the electrode assembly 200 and the side covering areas 430. The covering effect of the covering film 400 on the electrode body 210 can be improved by providing the second covering assembly 370 to cover the side surfaces 213 with the side covering areas 430.

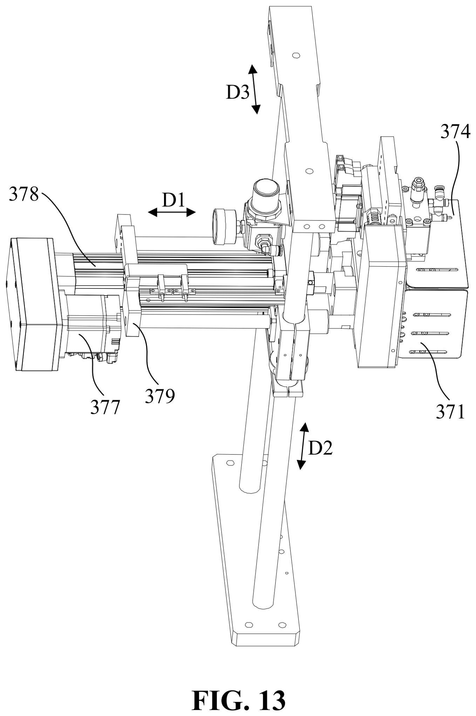

According to some embodiments of the present application, optionally, as shown in FIGS. 12 to 15, the second covering assembly 370 includes side pressing plates 371, a first pressing plate driving mechanism 372 and a second pressing plate driving mechanism 373, the first pressing plate driving mechanism 372 is configured to drive the side pressing plates 371 in the first direction D1 such that the side pressing plates 371 push the side covering areas 430 to bend toward the side surfaces 213 relative to the main covering areas 410 respectively, and the second pressing plate driving mechanism 373 is configured to drive the side pressing plates 371 in the third direction D3 such that the side pressing plates 371 press the side covering areas 430 against the side surfaces 213 respectively.

After the main covering areas 410 cover the main surfaces 211 of the electrode body 210, the side covering areas 430 and the main covering areas 410 may be coplanar or approximately coplanar. The side pressing plates 371 move in the first direction D1 to push the side covering areas 430 to bend relative to the main covering areas 410. The side covering areas 430 gradually approaches the side surfaces 213 of the electrode body 210 as they are bent relative to the main covering areas 410. After the side pressing plates 371 push the side covering areas 430 to bend toward the side surfaces 213 relative to the main covering areas 410, the side pressing plates 371 and the side surfaces 213 of the electrode body 210 can be arranged opposite to each other and spaced apart in the third direction D3, and the side covering areas 430 are located between the side pressing plates 371 and the side surfaces 213 of the electrode body 210. At this time, the side pressing plates 371 move in the third direction D3 toward the electrode body 210 to press the side covering areas 430 against the side surfaces 213 of the electrode body 210, so that the side covering areas 430 cover the side surfaces 213 of the electrode body 210.

With such an arrangement, the action of bending the side covering areas 430 by the second covering assembly 370 and the action of covering the side surfaces 213 with the side covering areas 430 can be smoothly linked, which is conducive to simplifying the action and structure of the second covering assembly 370 and improving the covering efficiency.

Optionally, as shown in FIGS.12 to 15, each main covering areas 410 may be connected to two side covering areas 430, the two side covering areas 430 connected to the first one of the two main covering areas 410 may be denoted as B1 and B2, and the two side covering areas 430 connected to the second one of the two main covering areas 410 may be denoted as B3 and B4. The second covering assembly 370 includes four side pressing plates 371 corresponding to the four side covering areas 430 respectively. The four side pressing plates 371 may be denoted as C1, C2, C3 and C4. C1, C2, C3 and C4 and are used to bend B1, B2, B3 and B4 toward the side surfaces 213 and press them against the side surfaces 213 of the electrode body 210 one by one correspondingly.

Before the four side pressing plates 371 respectively move in the first direction D1, the four side covering areas 430 are located between the four side pressing plates 371. The direction in which C1 and C2 move along the first direction D1 is opposite to the direction in which C3 and C4 move along the first direction D1, so that C1 and C2 and C3 and C4 can approach each other, and then C1 and C2 can respectively bend B1 and B2 toward the side surfaces 213, and C3 and C4 can respectively bend B3 and B4 toward the side surfaces 213.

Before C1 and C2 move along the third direction D3, C1 and C2 are spaced apart from and opposite to the two side surfaces 213, respectively, B1 is between C1 and one side surface 213, and B2 is between C2 and the other side surface 213. The direction in which C1 moves toward the electrode body 210 along the third direction D3 is opposite to the direction in which C2 moves toward the electrode body 210 along the third direction D3, so that C1 and C2 approach each other, and C1 and C2 press B1 and B2 against the side surfaces 213 of the electrode body 210 respectively. Before C3 and C4 move along the third direction D3, C3 and C4 are spaced apart from and opposite to the two side surfaces 213, respectively, B3 is between C3 and one side surface 213, and B4 is between C4 and the other side surface 213. The direction in which C3 moves toward the electrode body 210 along the third direction D3 is opposite to the direction in which C4 moves toward the electrode body 210 along the third direction D3, so that C3 and C4 approach each other, and C3 and C4 press B3 and B4 against the side surfaces 213 of the electrode body 210 respectively.

Further, each main covering area 410 is connected to two side covering areas 430, one of the two side covering areas 430 connected to the first one of the two main covering areas 410 and one of the two side covering areas 430 connected to the second one of the two main covering areas 410 jointly cover one side surface 213 of the electrode body 210, and the other of the two side covering areas 430 connected to the first one of the two main covering areas 410 and the other of the two side covering areas 430 connected to the second one of the two main covering areas 410 jointly cover the other side surface 213 of the electrode body 210. Further, the two side covering regions 430 covering the same side surface 213 of the electrode body 210 may be in lap joint with each other and partially overlap.

According to some embodiments of the present application, optionally, as shown in FIGS. 12 to 15, the covering film 400 includes end covering areas 440 connected to the main covering areas 410 respectively, and the second covering assembly 370 is configured to drive the end covering areas 440 to come into contact with the second one 212b of the two end surfaces 212.

The second covering assembly 370 can adjust the relative positional relationship between the electrode assembly 200 and the end covering areas 440. The covering effect of the covering film 400 on the electrode body 210 can be improved by providing the second covering assembly 370 to cover the second one 212b of the side surfaces 212 with the end covering areas 440.

According to some embodiments of the present disclosure, optionally, as shown in FIGS. 12 to 15, the second covering assembly 370 includes an end pressing plate 374, a first pressing plate driving mechanism 372 and a third pressing plate driving mechanism 375, the first pressing plate driving mechanism 372 is configured to drive the end pressing plate 374 in the first direction D1 such that the end pressing plate 374 pushes the end covering areas 440 to bend toward the second one 212b of the two end surfaces 212 relative to the main covering areas 410 respectively, and the third pressing plate driving mechanism 375 is configured to drive the end pressing plate 374 in the second direction D2 such that the end pressing plate 374 presses the end covering areas 440 against the second one 212b of the end surfaces 212.

After the main covering areas 410 cover the main surfaces 211 of the electrode body 210, the end covering areas 440 and the main covering areas 410 may be coplanar or approximately coplanar. The end surface pressing plate 374 moves in the first direction D1 to push the end covering areas 440 to bend relative to the main covering areas 410. The end covering areas 440 gradually approaches the second one 212b of the two end surfaces 212 as they are bent relative to the main covering areas 410. After the end surface pressing plate 374 pushes the end covering areas 440 to bend relative to the main covering areas 410 toward the second one 212b of the two end surfaces 212, the end surface pressing plate 374 and the second one 212b of the two end surfaces 212 can be arranged opposite to and spaced apart from each other in the second direction D2, and the end covering areas 440 are located between the end surface pressing plate 374 and the second one 212b of the two end surfaces 212. At this point, the end covering areas 440 may be pressed against the second one 212b of the two end surfaces 212 through the end pressing plate 374 moving close to the electrode body 210 in the second direction D2, so that the end covering areas 440 cover the second one 212b of the two end surfaces 212.

Optionally, as shown in FIGS. 12 to 15, each main covering area 410 is connected to one end covering area 440, and the second covering assembly 370 includes two end surface pressing plates 374. The two end surface pressing plates 374 move respectively in the first direction D1 such that the two end surface pressing plates 374 approach each other, thereby making the two end covering areas 440 bend respectively toward the second one 212b of the two end surfaces 212. The two end surface pressing plates 374 move respectively in the second direction D2 to enable the two end covering areas 440 to respectively cover the second one 212b of the two end surfaces 212.

In some embodiments, the two end covering areas 440 may be in lap joint with each other and partially overlap. One of the two end surface pressing plates 374 may first bend one end covering area 440 toward the second one 212b of the two end surfaces 212 and press it against the second one 212b of the two end surfaces 212, and the other of the two end surface pressing plates 374 may then bend the other end covering area 440 toward the second one 212b of the two end surfaces 212 and press it against the second one 212b of the two end surfaces 212.

In some embodiments, the second pressing plate driving mechanism 373 includes a first pressing plate cylinder 376, and the third pressing plate driving mechanism 375 includes a second pressing plate cylinder 3761. The second pressing plate cylinder 3761 is configured to provide power for driving the end pressing plate 374 in the second direction D2, and the first pressing plate cylinder 376 is configured to provide power for driving the side pressing plate 371 in the third direction D3. In some other embodiments, the second pressing plate driving mechanism 373 and the third pressing plate driving mechanism 375 may be arranged in linkage. For example, the second pressing plate driving mechanism 373 and the third pressing plate driving mechanism 375 share one cylinder to provide power for simultaneously driving the end pressing plate 374 in the second direction D2 and the side pressing plate 371 in the third direction D3, so that the side pressing plate 371 moves in the third direction D3 toward the side covering area 430 while the end pressing plate 374 moves in the second direction D2 toward the end covering area 440. In this way, the covering time can be reduced and the covering efficiency can be improved.

Optionally, the end surface pressing plate 374 and the side surface pressing plate 371 have no relative displacement in the first direction D1. The first pressing plate driving mechanism 372 can drive the end pressing plate 374 and the side pressing plate 371 to move simultaneously in the first direction D1. In this way, the covering efficiency can be improved. Further, when the first pressing plate driving mechanism 372 drives the end pressing plate 374 in the first direction D1, it can simultaneously drive the third pressing plate driving mechanism 375 to move the first direction D1; when the first pressing plate driving mechanism 372 drives the side pressing plate 371 in the first direction D1, it can simultaneously drive the second pressing plate driving mechanism 373 in the first direction D1.

Optionally, as shown in FIGS. 12 to 15, the first pressing plate driving mechanism 372 is provided with a pressing plate driving motor 377, and the pressing plate driving motor 377 is configured to provide power for driving the end surface pressing plate 374 and the side pressing plate 371 in the first direction D1. Further, the pressing plate driving motor 377 is configured to drive the second pressing plate driving mechanism 373, the third pressing plate driving mechanism 375, the end pressing plate 374 and the side pressing plate 371 in the first direction D1.

Optionally, as shown in FIGS. 12 to 15, the second covering assembly 370 includes a first pressing plate support 378 and a second pressing plate support 379, and the second pressing plate support 379 is slidably disposed on the first pressing plate support 378 in the first direction D1. The first pressing plate driving mechanism 372 is disposed on the first pressing plate support 378 and is connected to the second pressing plate support 379 in a driving manner to drive the second pressing plate support 379 to move relative to the first pressing plate support 378 in the first direction D1. The side pressing plate 371, the second pressing plate driving mechanism 373, the end pressing plate 374 and the third pressing plate driving mechanism 375 may be disposed on the second pressing plate support 379, and move synchronously with the second pressing plate support 379 in the first direction D1.

Furthermore, the first pressing plate support 378 and the second pressing plate support 379 are relatively fixed.

Optionally, as shown in FIGS. 12 to 15, an end stop block 3741 adjustable in position is disposed on the end surface pressing plate 374, and the end stop block 3741 is configured to abut against the corresponding main covering area 410 to limit the electrode assembly 200 in the first direction D1. By adjusting the position of the end stop block 3741 on the end surface pressing plate 374, electrode assemblies 200 in different sizes can be matched, thereby improving the compatibility of the end surface pressing plate 374 with the electrode assemblies 200 in different sizes. Further, the end stop block 3741 is provided with an arc surface facing the main covering area 410, so that the fit with the main covering area 410 can be improved.

Optionally, as shown in FIGS. 12 to 15, a side stop block 3711 adjustable in position is disposed on the side surface pressing plate 371, and the side stop block 3711 is configured to abut against the corresponding main covering area 410 to limit the electrode assembly 200 in the first direction D1. By adjusting the position of the side stop block 3711 on the side surface pressing plate 371, electrode assemblies 200 in different sizes can be matched, thereby improving the compatibility of the side surface pressing plate 371 with the electrode assemblies 200 in different sizes. Further, the side stop block 3711 is provided with an arc surface facing the main covering area 410, so that the fit with the main covering area 410 can be improved.

According to some embodiments of the present application, optionally, as shown in FIGS. 12 to 15, the first pressing plate driving mechanism 372 includes a pressing plate driving motor 377, a first pressing plate support 378 and a second pressing plate support 379, and the pressing plate driving motor 377 is disposed on the first pressing plate support 378 and drives the second pressing plate support 379 to move relative to the first pressing plate support 378. The second pressing plate driving mechanism 373 includes a first pressing plate cylinder 376. The first pressing plate cylinder 376 is disposed on the second pressing plate support 379. The first pressing plate cylinder 376 drives the side pressing plates 371 to move relative to the second pressing plate support 379. The third pressing plate driving mechanism 375 includes a second pressing plate cylinder 3761. The second pressing plate cylinder 3761 is disposed on the second pressing plate support 379. The second pressing plate cylinder 3761 drives the side pressing plates 374 to move relative to the second pressing plate support 379.

With such an arrangement, the freedom of movement of the side pressing plates 371 and the end pressing plate 374 can be increased, which is conducive to improving the covering effect.

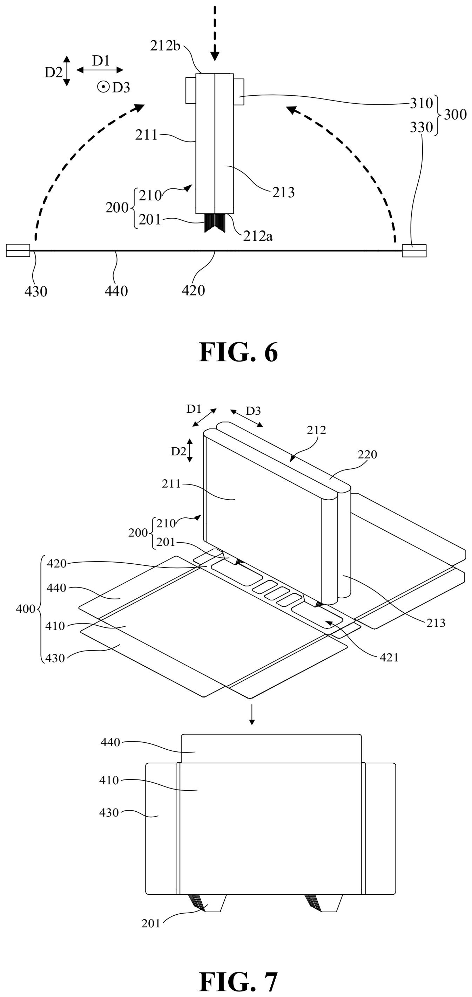

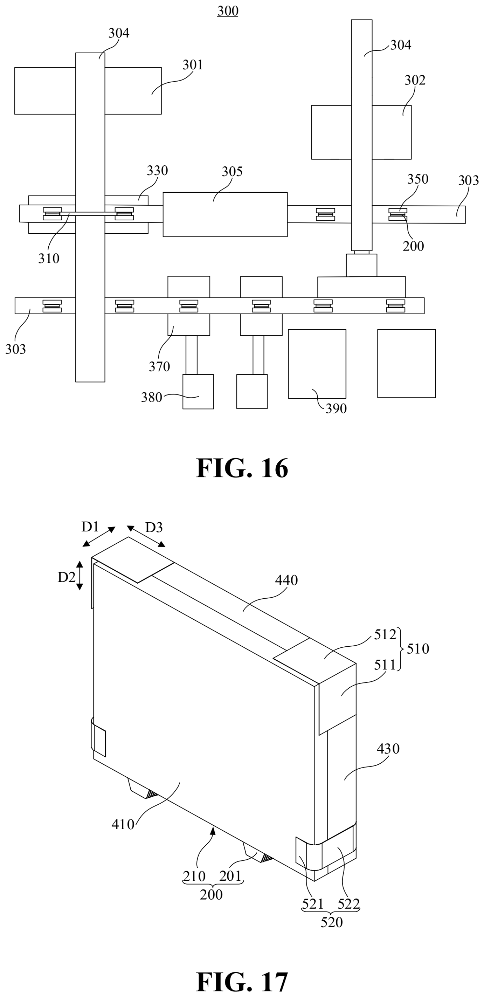

According to some embodiments of the present application, optionally, as shown in FIGS. 6, 7, 16 and 17, the covering film 400 further includes side covering areas 430 and end covering areas 440 that are connected to the main covering areas 410, where the side covering areas 430 cover the side surfaces 213, and the end covering areas 440 cover the second one 212b of the two end surfaces 212; the covering device 300 further includes a first tape attaching assembly 380, where the first tape attaching assembly 380 is configured to attach a first tape 510 onto the electrode assembly 200, the first tape 510 includes a first part and a second part connected to each other, and the first tape attaching assembly 380 is configured to attach the first part 511 of the first tape 510 onto the side covering areas 430 and attach the second part 512 of the first tape 510 onto the end covering areas 440, at corners formed by the side surfaces 213 and the second one 212b of the two end surfaces 212.

The first tape attaching assembly 380 may drive the electrode assembly 200 and the first tape 510 to perform relative movement. The first tape 510 is capable of connecting the side covering areas 430 and the end covering areas 440 together, so that the side covering areas 430 and the end covering areas 440 can be kept fixed relative to the electrode body 210, thereby improving the covering firmness of the covering film 400 to the electrode body 210.

Specifically, after the end covering areas 440 and the side covering areas 430 are pressed against a battery body, the first tape attaching assembly 380 may drive the electrode assembly 200 to move such that the side covering area 430 and the first part 511 of the first tape 510 are relatively arranged, and then the first tape attaching assembly 380 drives the electrode assembly 200 to continue to move such that the first part 511 of the first tape 510 is attached to the side covering areas 430. After that, the first tape attaching assembly 380 may drive the electrode assembly 200 to rotate toward the second part 512 of the first tape 510, so that the second part 512 of the first tape 510 gradually approaches and is finally attached to the end covering areas 440.

Alternatively, the first tape attaching assembly 380 may drive the electrode assembly 200 to move such that the end covering area 440 and the second part 512 of the first tape 510 are relatively arranged, and then the first tape attaching assembly 380 drives the electrode assembly 200 to continue to move such that the second part 512 of the first tape 510 is attached to the end covering areas 440. After that, the first tape attaching assembly 380 may drive the electrode assembly 200 to rotate toward the first part 511 of the first tape 510, so that the first part 511 of the first tape 510 gradually approaches and is finally attached to the side covering areas 430.

Further, the side covering areas 430 respectively connected to the two main covering areas 410 cover the same side surface 213 of the electrode body 210 together. The first tape 510 may connect the two side covering areas 430 that cover the same side surface 213 of the electrode body 210. The end covering areas 440 respectively connected to the two main covering areas 410 cover the second one 212b of the two end surfaces 212 together. The first tape 510 may connect the two end covering areas 440 that cover the second one 212b of the two end surfaces 212.

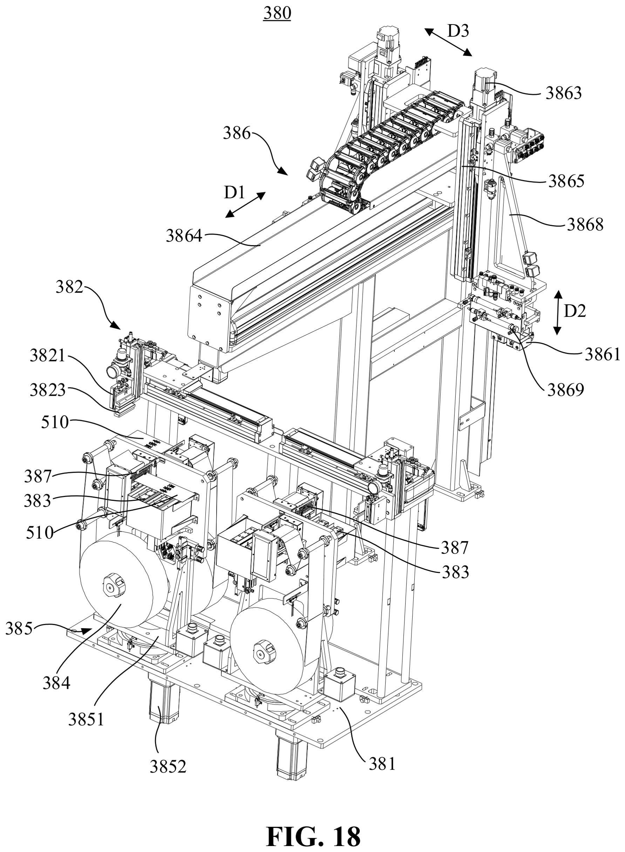

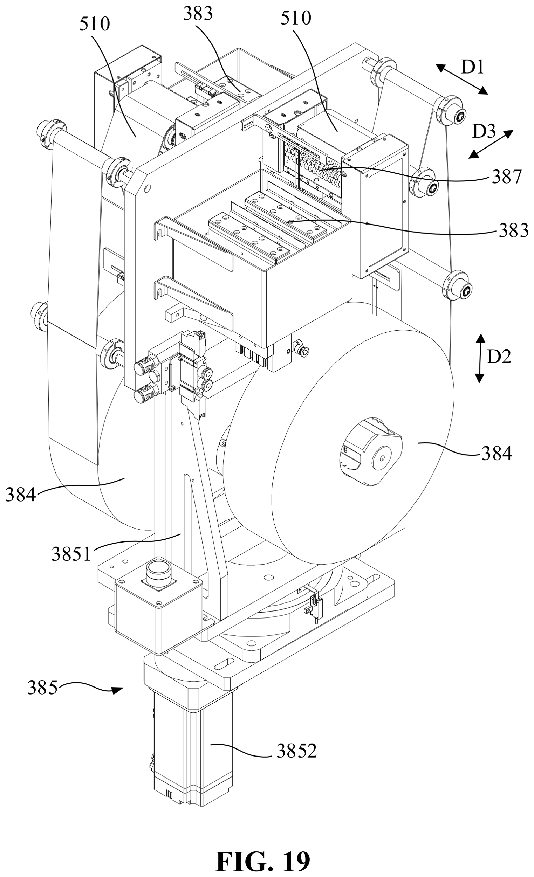

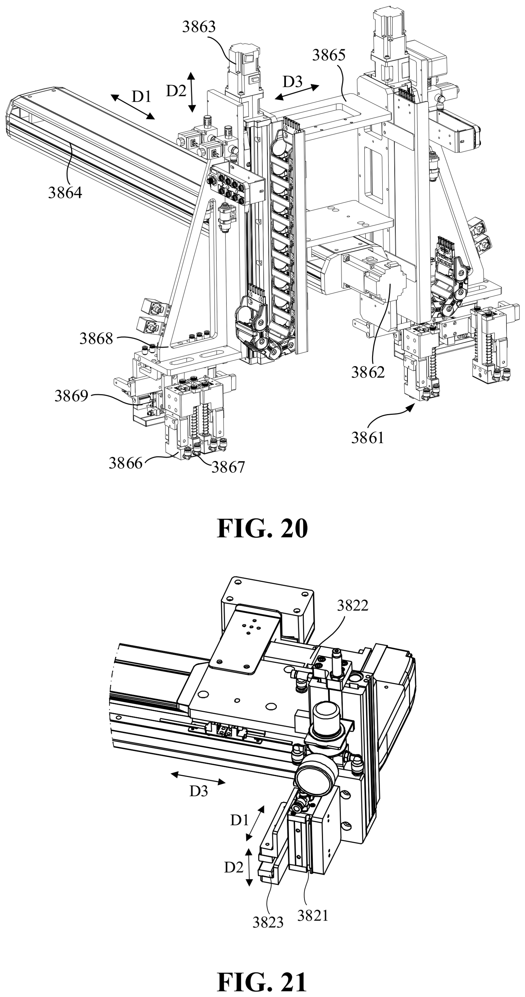

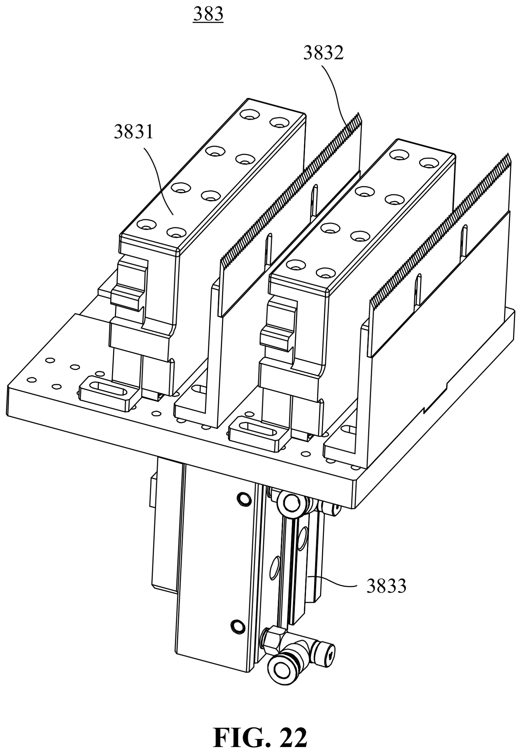

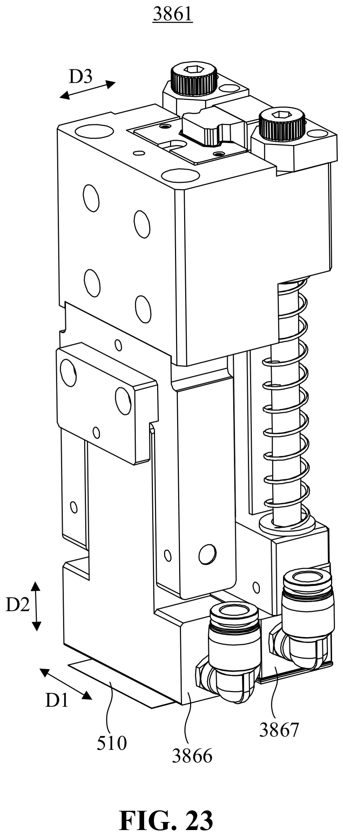

Optionally, as shown in FIGS. 18 to 23, the first tape attaching assembly 380 further includes a first cutting mechanism 383, a first tape picking mechanism 386 and a first tape pulling mechanism 382. The first tape pulling mechanism 382 is configured to grip and pull the head end of a release portion of a first tape roll 384, the first cutting mechanism 383 is configured to cut the first tape 510 from the release portion of the first tape roll 384, and the first tape picking mechanism 386 is configured to suck the first tape 510 and attach it to the covering film 400.

Optionally, as shown in FIGS. 18 to 23, the first tape attaching assembly 380 further includes a first tape conveying mechanism 387, and the first tape conveying mechanism 387 is configured to convey the release portion of the first tape roll 384 such that the release portion is cut by the first cutting mechanism 383. Further, the first tape conveying mechanism 387 includes rollers (not marked), and the rollers are used for conveying the release portion of the first tape roll 384.

According to some embodiments, optionally, as shown in FIGS. 18 to 23, the first tape attaching assembly 380 includes a first unwinding mechanism 381, a first tape pulling mechanism 382, and a first cutting mechanism 383, the first unwinding mechanism 381 is configured to hold and release a first tape roll 384, the first tape pulling mechanism 382 is configured to clamp and pull the head end of a release portion of the first tape roll 384, and the first cutting mechanism 383 is configured to cut the first tape 510 from the release portion of the first tape roll 384.

Such an arrangement is conducive to automatically providing the first tape 510.

According to some embodiments of the present application, optionally, as shown in FIGS. 18 to 23, the first tape pulling mechanism 382 includes a first tape gripping cylinder 3821, a first tape pulling motor 3822 and a first tape gripping member 3823, the first tape gripping cylinder 3821 is configured to drive the first tape gripping member 3823 to grip the head end of the release portion, and the first tape pulling motor 3822 is configured to drive the first tape gripping member 3823 to move to pull the release portion.

The first tape pulling motor 3822 drives the first tape gripping member 3823 to move to pull the release portion, so that the release portion of the first tape roll 384 can be extended, and the release portion of the first tape roll 384 is pulled for easy cutting.

According to some embodiments of the present application, optionally, as shown in FIGS. 18 to 23, two groups of first unwinding mechanisms 381 and first cutting mechanisms 383 are provided correspondingly. The first tape attaching assembly 380 includes a switching mechanism 385, and the switching mechanism 385 includes a reel support 3851 and a switching motor 3852. The two groups of first unwinding mechanisms 381 and first cutting mechanisms 383 are disposed on the reel support 3851. The switching motor 3852 drives the reel support 3851 to rotate about a predetermined axis of rotation to enable the two groups of first unwinding mechanisms 381 and first cutting mechanisms 383 to be switched between a standby station and a working station for the operation of the first tape pulling mechanism 382 and first cutting mechanism 383. The axis of rotation is perpendicular to the plane where the release portion is located.

One first unwinding mechanism 381 and one first cutting mechanism 383 may form a group. Two first unwinding mechanisms 381 and two first cutting mechanisms 383 may form two groups, correspondingly. With such an arrangement, a reel change operation of the first tape roll 384 is facilitated, which can improve the reel change efficiency. Specifically, each time the roll is changed, the switching motor 3852 drives the roll support 3851 to rotate 180°.

According to some embodiments of the present application, optionally, as shown in FIGS. 18 to 23, the first tape attaching assembly 380 includes a first tape picking mechanism 386, and the first tape picking mechanism 386 is configured to suck and pick up the first tape 510. The first cutting mechanism 383 includes a first pressing block 3831, a first cutter 3832 and a first cutting cylinder 3833. The first pressing block 3831 and the first cutter 3832 are fixedly disposed relative to each other. The first cutting cylinder 3833 is configured to drive the first pressing block 3831 to press the release portion against the first tape picking mechanism 386, and to drive the first cutter 3832 to cut the first tape 510 from the release portion.

The first pressing block 3831 may hold down the release portion of the first tape roll 384 for positioning, which can improve the stability of the cutting process.

According to some embodiments of the present application, optionally, as shown in FIGS. 18 to 23, the first tape attaching assembly 380 includes a first tape picking mechanism 386, and the first tape picking mechanism 386 is configured to suck and pick up the first tape 510. The first tape picking mechanism 386 includes a first tape picking member 3861, a first tape picking motor 3862, a second tape picking motor 3863, a first tape picking support 3864, and a second tape picking support 3865. The first tape picking member 3861 is configured to suck the first tape 510. The first tape picking motor 3862 is disposed on the first tape picking support 3864 and drives the second tape picking support 3865 to move to a side direction of a main surface of the release portion of the first tape roll 384. The second tape picking motor 3863 is disposed on the second tape picking support 3865 and drives the first tape picking member 3861 to move close to or away from a plane where the release portion of the first tape roll 384 is located.

With such an arrangement, the freedom of movement of the first tape picking member 3861 can be increased, thereby facilitating the picking and transferring of the first tape 510.

According to some embodiments of the present application, optionally, as shown in FIGS. 18 to 23, the first tape picking member 3861 includes a first sub tape-picking portion 3866 and a second sub tape-picking portion 3867. The first sub tape-picking portion 3866 is configured to suck the first part of 511 the first tape 510 and attach it to the side covering areas 430. The second sub tape-picking portion 3867 is configured to suck the second part 512 of the first tape 510 and attach it to the end covering areas 440.

With such an arrangement, the coherence of the tape picking action and the tape attaching action can be improved.

Optionally, at least one of the first sub tape-picking portion 3866 and the second sub tape-picking portion 3867 has a sucking surface for contacting and sucking the first tape 510, and the first sub tape-picking portion 3866 and the second sub tape-picking portion 3867 are configured to be relatively movable in a direction perpendicular to the sucking surface, thereby allowing the first tape 510 sucked on the first sub tape-picking portion 3861 to bend. For example, one of the first sub tape-picking portion 3866 and the second sub tape-picking portion 3867 may be driven to move in a direction perpendicular to the sucking surface.

According to some embodiments of the present application, optionally, as shown in FIGS. 18 to 23, the first sub tape-picking portion 3866 is a telescoping member. The second tape picking motor 3863 drives the first tape picking member 3861 in the third direction D3, and the first sub tape-picking portion 3866 presses the first part 511 of the first tape 510 against the side covering areas 430 and then retracts to enable the second sub tape-picking portion 3867 to continue to move in the third direction D3 and fit against the end covering areas 440 so as to attach the second part 512 of the first tape 510 onto the end covering areas 440. Alternatively, the second sub tape-picking portion 3867 is a telescoping member. The second tape picking motor 3863 drives the first tape picking member 3861 in the second direction D2, and the first sub tape-picking portion 3867 presses the second part 512 of the first tape 510 against the end covering areas 440 and then retracts to enable the first sub tape-picking portion 3866 to continue to move in the second direction D2 and fit against the side covering areas 430 so as to attach the first part 511 of the first tape 510 onto the side covering areas 430.

The telescoping member can be telescoped. For example, the telescoping member is an elastic part that expands and retracts under pressure.

With such an arrangement, the structural flexibility of the first tape picking member 3861 can be improved so that the first tape picking member 3861 can adaptively adjust its shape according to the shape of the electrode body 210, realizing diversified tape attaching actions. Specifically, when the first tape 510 is sucked by the first sub tape-picking portion 3866 and the second sub tape-picking portion 3867, the first tape 510 is planar, and one of the first sub tape-picking portion 3866 and the second sub tape-picking portion 3867 is retracted, so that the first sub tape-picking portion 3866 and the second sub tape-picking portion 3867 are misaligned, causing the first tape 510 to bend to be attached to the end covering areas 440 and the side covering areas 430 at the same time.

According to some embodiments of the present application, optionally, as shown in FIGS. 18 to 23, the first cutting mechanism 383 is configured to cut two first tapes 510 from the release portion. The first tape attaching assembly 380 includes a first tape picking mechanism 386, the first tape picking mechanism 386 is configured to suck and pick up the first tapes 510, and the first tape picking mechanism 386 includes first tape picking members 3861, a first tape picking motor 3862, a second tape picking motor 3863, a first tape picking support 3864, a second tape picking support 3865, a third tape picking support 3868 and a tape distributing cylinder 3869. Two first tape picking members 3861 are provided and suck corresponding first tapes 510 respectively. The first tape picking motor 3862 is disposed on the first tape picking support 3864 and drives the second tape picking support 3865 to move to a side direction of a main surface of the release portion of the first tape roll 384. The second tape picking motor 3863 is disposed on the second tape picking support 3865 and drives the third tape picking support 3868 and the two first tape picking members 3861 to move close to or away from a plane where the release portion of the first tape roll 384 is located. The tape distributing cylinder 3869 is disposed in the third tape picking support 3868. The tape distribution cylinder 3869 is configured to drive the two first tape picking members 3861 to move away from each other such that the two first tape picking members 3861 correspond to two corners, spaced apart in the third direction D3, of the electrode assembly 200.

For example, the first cutting mechanism 383 is provided with two first cutters 3832 corresponding to the same release portion, and the first cutting cylinder 3833 drives the two first cutters 3832 to move synchronously, so that the two first cutters 3832 can cut two first tapes 510 from the same release portion each time.

With such an arrangement, the first tape picking mechanism 386 may suck and pick up two first tapes 510 corresponding to each electrode assembly 200 so as to simultaneously attach two first tapes 510 to two corners, spaced apart in the third direction D3, of the electrode assembly 200, thereby improving the tape attaching efficiency.

According to some embodiments, optionally, as shown in FIGS. 6, 7, 16, and 17, the covering device 300 further includes a second tape attaching assembly 390, where the second tape attaching assembly 390 is configured to attach a second tape to the electrode assembly, the second tape 520 includes a first part and a second part connected to each other, the second tape attaching assembly 390 is configured to attach the first part 521 of the second tape 520 to the main covering areas 410 and to attach the second part 522 of the second tape 520 to the side covering areas 430, at corners formed by the side surfaces 213 and the main surfaces 211.

The second tape attaching assembly 390 may drive the electrode assembly 200 and the second tape 520 to perform relative movement. Before attaching the second tape 520, at least a portion of the side covering areas 430 is connected to only one of the two main covering areas 410, but not connected to the other of the two main covering areas 410. The second tape 520 is capable of connecting the side covering areas 430 to the other one of the main covering areas 410 together, so that the side covering areas 430 and the main covering area 410 can be kept fixed relative to the electrode body 210, thereby improving the covering firmness of the covering film 400 to the electrode body 210.

For example, after the side covering areas 430 are pressed against a battery body, the second tape attaching assembly 390 can drive the electrode assembly 200 to move such that the first part 521 of the second tape 520 gradually approaches and is finally attached to the main covering areas 410, and then the second tape attaching assembly 390 can drive the electrode assembly 200 to rotate toward the second part 522 of the second tape 520 such that the second part 522 of the second tape 520 gradually approaches and is finally attached to the side covering areas 430.

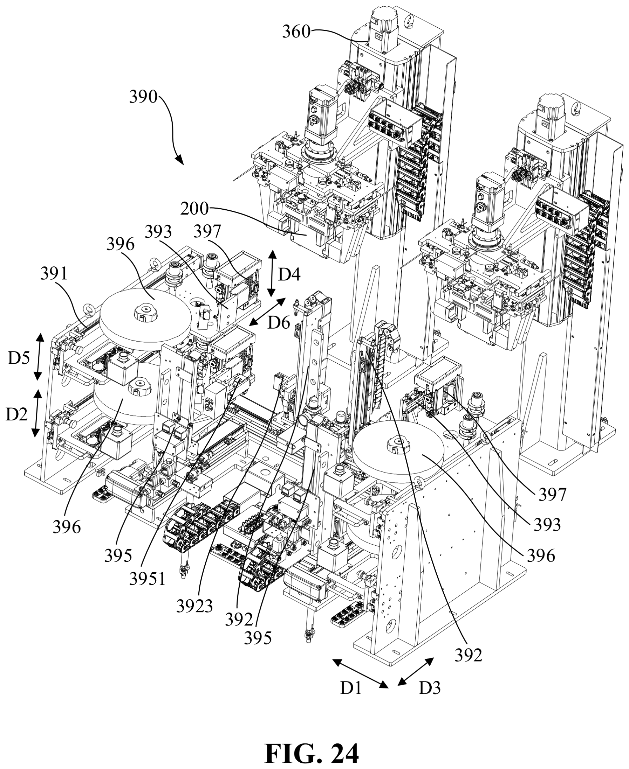

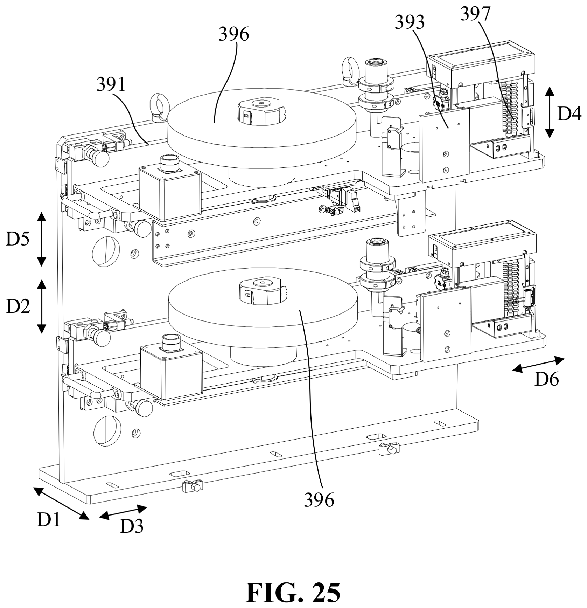

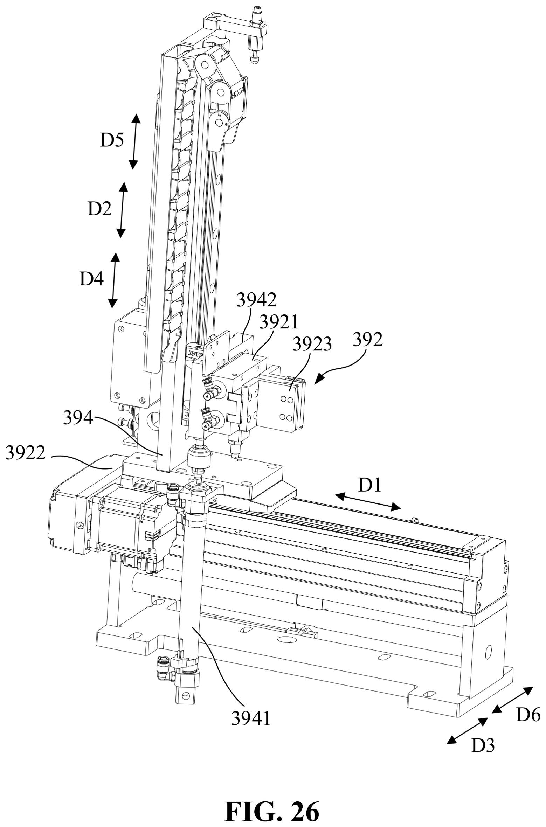

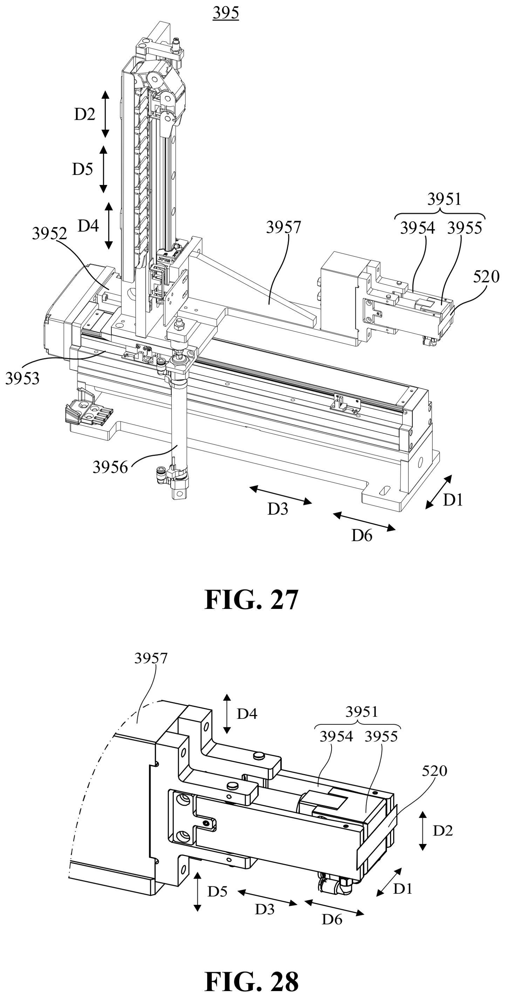

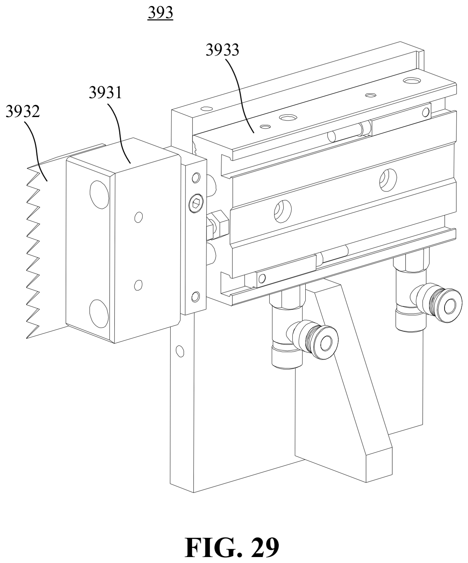

Optionally, as shown in FIGS. 24 to 30, the second tape attaching assembly 390 further includes a second cutting mechanism 393, a second tape picking mechanism 395 and a second tape pulling mechanism 392. The second tape pulling mechanism 392 is configured to pull out the second tape 520, the second cutting mechanism 393 is configured to cut the second tape 520 from a release portion of a second tape roll 396, and the second tape picking mechanism 395 is configured to suck the second tape 520 and attach it to the covering film 400.

Optionally, as shown in FIGS. 24 to 30, the second tape attaching assembly 390 further includes a second tape conveying mechanism 397, and the second tape conveying mechanism 397 is configured to convey the release portion of the second tape roll 396 such that the release portion is cut by the second cutting mechanism 393. Further, the second tape conveying mechanism 397 includes rollers (not marked), and the rollers are used for conveying the release portion of the second tape roll 396.

According to some embodiments of the present application, optionally, as shown in FIGS. 24 to 30, the second tape 520 has two first parts 521, the two first parts are located at two ends of the second part 522 of the second tape 520, and the second tape attaching assembly 390 is configured to attach the two first parts of the second tape 520 to the corresponding one of the two main covering areas 410, respectively.

With such an arrangement, the contact area between the second tape 520 and the covering film 400 may be increased, thereby improving the fixing effect to the side covering areas 430.

Further, the side covering areas 430 respectively connected to the two main covering areas 410 cover the same side surface 213 of the electrode body 210 together. The second tape 520 may connect the two side covering areas 430 that cover the same side surface 213 of the electrode body 210.

According to some embodiments of the present application, optionally, as shown in FIGS. 24 to 30, the second tape attaching assembly 390 includes a second unwinding mechanism 391, a second tape pulling mechanism 392 and a second cutting mechanism 393. The second unwinding mechanism 391 is configured to hold and release a second tape roll 396. The second tape pulling mechanism 392 is configured to clamp and pull the head end of a release portion of the second tape roll 396. The second cutting mechanism 393 is configured to cut the second tape 520 from the release portion of the second tape roll 396.

Such an arrangement is conducive to automatically providing the second tape 520.

According to some embodiments of the present application, optionally, as shown in FIGS. 24 to 30, the second tape pulling mechanism 392 includes a second tape gripping cylinder 3921, a second tape pulling motor 3922 and a second tape gripping member 3923. The second tape gripping cylinder 3921 is configured to drive the second tape gripping member 3923 to grip the head end of the release portion of the second tape roll 396, and the second tape pulling motor 3922 is configured to drive the second tape gripping member 3923 to move to pull the release portion of the second tape roll 396.

The second tape pulling motor 3922 drives the second tape gripping member 3923 to move to pull the release portion, so that the release portion of the second tape roll 396 can be extended, and the release portion of the second tape roll 396 is pulled for easy cutting.

According to some embodiments of the present application, optionally, as shown in FIGS. 24 to 30, two groups of second unwinding mechanisms 391 and second cutting mechanisms 393 are provided correspondingly and spaced apart in a width direction D4 of the release portion. The second tape attaching assembly 390 includes a tape pulling support 394, a tape pulling shifting cylinder 3941 and a tape pulling shifting support 3942, the tape pulling shifting cylinder 3941 is disposed on the tape pulling support 394, and the second tape pulling mechanism 392 is disposed on the tape pulling shifting support 3942. The tape pulling shifting cylinder 3941 is configured to drive the tape pulling shifting support 3942 to move in an interval direction D5 of the two second unwinding mechanisms 391 to enable the second tape pulling mechanism 392 to switch between the two groups of second unwind mechanisms and second cutting mechanisms.

One second unwinding mechanism 391 and one second cutting mechanism 393 may form a group. Two second unwinding mechanisms 391 and two second cutting mechanisms 393 may form two groups, correspondingly. Two groups of second unwinding mechanisms 391 and second cutting mechanisms 393 are provided, which can reduce the interference of the roll changing operation of the second tape roll 396 to the tape pulling process, and accordingly can improve the tape pulling efficiency. Further, two groups of second unwinding mechanisms 391 and second cutting mechanisms 393 are arranged in layer in a height direction of the second tape attaching assembly 390.

Since the tape pulling change cylinder 3941 is configured to drive the tape pulling shifting support 3942 to move in the interval direction D5 of the two second unwinding mechanisms 391, the position of the tape pulling mechanism corresponds to the position of one group of second unwinding mechanism 391 and second cutting mechanism 393 that is in operation, thus facilitating the tape pulling operation.

According to some embodiments of the present application, optionally, as shown in FIGS. 24 to 30, the second tape attaching assembly 390 includes a second tape picking mechanism 395, and the second tape picking mechanism 395 is configured to suck and pick up the second tape 520. The second cutting mechanism 393 includes a second pressing block 3931, a second cutter 3932 and a second cutting cylinder 3933. The second pressing block 3931 and the second cutter 3932 are fixedly disposed relative to each other. The second cutting cylinder 3933 is configured to drive the second pressing block 3931 to press the release portion of the second tape roll 396 against the second tape picking mechanism 395, and drive the second cutter 3932 to cut the second tape 520 from the release portion of the second tape roll 396.

The second pressing block 3931 may hold down the release portion of the second tape roll 396 for positioning, which can improve the stability of the cutting process.

According to some embodiments of the present application, optionally, as shown in FIGS. 24 to 30, the second tape attaching assembly 390 includes a second tape picking mechanism 395, and the second tape picking mechanism 395 is configured to suck and pick up the second tape 520. The second tape picking mechanism 395 includes a second tape picking member 3951, a fourth tape picking motor 3952, and a fourth tape picking support 3953, where the second tape picking member 3951 is configured to suck the second tape 520. The fourth tape picking motor 3952 is disposed on the fourth tape picking support 3953 and drives the second tape picking member 3951 to move to a side direction of the main surface of the release portion and drives the second tape picking member 3951 to move close to or away from the plane where the release portion of the second tape roll 396 is located. Furthermore, the fourth tape picking motor 3952 drives the second tape picking member 3951 to move to a position opposite to the release portion of the second tape roll 396 in a thickness direction D6 of the release portion of the second tape roll 396.

With such an arrangement, the freedom of movement of the second tape picking member 3951 can be increased, thereby facilitating the picking and transferring of the second tape 520.

According to some embodiments of the present application, optionally, as shown in FIGS. 24 to 30, the second tape picking member 3951 includes a third sub tape-picking portion 3954 and a fourth sub tape-picking portion 3955. The third sub tape-picking portion 3954 is configured to suck the first part of 521 the second tape 520 and attach it to the main covering areas 410. The fourth sub tape-picking portion 3955 is configured to suck the second part of 522 the second tape 520 and attach it to the side covering areas 430.

With such an arrangement, the coherence of the tape picking action and the tape attaching action can be improved.

Optionally, at least one of the third sub tape-picking portion 3954 and the fourth sub tape-picking portion 3955 has a sucking surface for contacting and sucking the second tape 520, and the third sub tape-picking portion 3954 and the fourth sub tape-picking portion 3955 are configured to be relatively movable in a direction perpendicular to the sucking surface, thereby allowing the second tape 520 sucked on the second sub tape-picking portion 3951 to bend. For example, one of the third sub tape-picking portion 3954 and the fourth sub tape-picking portion 3955 may be driven to move in a direction perpendicular to the sucking surface.

According to some embodiments of the present application, optionally, as shown in FIGS. 24 to 30, the fourth tape picking member 3955 is a telescoping member. The fourth tape picking motor 3952 drives the second tape picking member 3951 in the third direction D3, and the fourth sub tape-picking portion 3955 presses the second part 522 of the second tape 520 against the side covering areas 430 and then retracts to enable the third sub tape-picking portion 3954 to continue to move in the third direction D3 and fit against the main covering areas 410 so as to attach the first part 521 of the second tape 520 onto the main covering areas 410.

The telescoping member can be telescoped. For example, the telescoping member is an elastic part.

With such an arrangement, the structural flexibility of the second tape picking member 3951 can be improved so that the second tape picking member 3951 can adaptively adjust its shape according to the shape of the electrode body 210, realizing diversified tape attaching actions. Specifically, when the third sub tape-picking portion 3954 and the fourth sub tape-picking portion 3955 suck the second tape 520, the second tape 520 is planar, and the fourth sub tape-picking portion 3955 is retracted to cause the first sub tape-picking portion 3866 and the second sub tape-picking portion 3867 to be misaligned, causing the second tape 520 to bend to be attached to the main covering areas 410 and the side covering areas 430 at the same time. Further, the fourth sub tape-picking portion 3955 is located between the two third sub tape-picking portions 3954. In the process of tape attaching, the two third sub tape-picking portions 3954 can be misaligned with the fourth sub tape-picking portion 3955, so that the second tape 520 can be attached to the two main covering areas 410 and the side covering area 430 at the same time.

According to some embodiments of the present application, optionally, as shown in FIGS. 24 to 30, two groups of second unwinding mechanisms 391 and second cutting mechanisms 393 are provided correspondingly and spaced apart in the width direction D4 of the release portion of the second tape roll 396. The second tape picking mechanism 395 includes a tape picking shifting cylinder 3956 and a tape picking shifting support 3957. The tape picking shifting cylinder 3956 is disposed on the fourth tape picking support 3953 and the second tape picking member 3951 is disposed on the tape picking shifting support 3957. The tape picking shifting cylinder 3956 is configured to drive the tape picking shifting support 3957 to move in the interval direction D5 of the two second unwinding mechanisms 391 to enable the second tape picking mechanism 3951 to switch between the two groups of second unwind mechanisms 391 and second cutting mechanisms 393.

One second unwinding mechanism 391 and one second cutting mechanism 393 may form a group. Two groups of second unwinding mechanisms 391 and second cutting mechanisms 393 are provided, which can reduce the interference of the roll changing operation of the second tape roll 396 to the tape picking process, and accordingly can improve the tape picking efficiency. Further, two groups of second unwinding mechanisms 391 and second cutting mechanisms 393 are arranged in layer in a height direction of the second tape attaching assembly 390.

Since the tape picking change cylinder 3956 is configured to drive the tape picking shifting support 3957 to move in the interval direction D5 of the two second unwinding mechanisms 391, the position of the second tape picking mechanism 3951 corresponds to the position of one group of second unwinding mechanism 391 and second cutting mechanism 393 that is in operation, thus facilitating the tape picking operation.

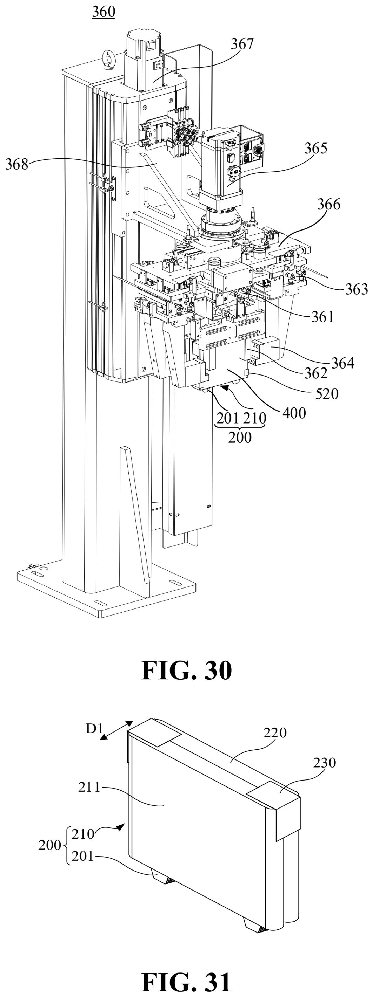

According to some embodiments of the present application, optionally, as shown in FIGS. 24 and 30, the second tape attaching assembly 390 includes a third positioning assembly 360, and the third positioning assembly 360 includes a main hold-down cylinder 361, a main hold-down member 362, a side hold-down cylinder 363 and a side hold-down member 364. The main hold-down cylinder 361 is configured to drive the main hold-down member 362 to hold down the main covering areas 410 and the main surfaces 211, and the side hold-down cylinder 363 is configured to drive the side hold-down member 364 to hold down the side covering areas 430 and the side surfaces 213.

The side hold-down member 364 and the main hold-down member 362 can play a role in clamping and positioning the electrode assembly 200 and the covering film 400. The main hold-down member 362 is configured to avoid the attaching position of the second tape 520 when holding down the main covering areas 410 and the main surfaces 211. The side hold-down member 364 is configured to avoid the attaching position of the second tape 520 when holding down the side covering areas 430 and the side surfaces 213. Such an arrangement can improve the stability of the tape the tape attaching process.

According to some embodiments of the present application, optionally, as shown in FIGS. 24 to 30, the third positioning assembly 360 includes a rotating motor 365 and a rotating support 366. The main hold-down cylinder 361, the main hold-down member 362, the side hold-down cylinder 363 and the side hold-down member 364 are disposed on the rotating support 366, and the rotating motor 365 is configure to drive the rotating support 366 to rotate. The rotating support 366 rotates in an axis parallel to the second direction D2.

With such an arrangement, the freedom of movement of the electrode assembly 200 and facilitate can be improved, which is conducive to attaching the second tapes 520 to different positions of the electrode assembly 200. Further, the rotating motor 365 is configured to drive the rotating support 366 to rotate 180° so as to attach the second tapes 520 to opposite sides of the electrode assembly 200 respectively.

According to some embodiments of the present application, optionally, as shown in FIGS. 24 to 30, the second tape attaching assembly 390 includes two second unwinding mechanisms 391. The third positioning assembly 360 includes a shifting motor 367 and a shifting support 368, and the main hold-down cylinder 361, the main hold-down member 362, the side hold-down cylinder 363, the side hold-down member 364, the rotating motor 365 and the rotating support 366 are disposed on the shifting support 368. The shifting motor 367 is configured to drive the shifting support 368 in the interval direction D5 of the two second unwinding mechanisms 391.

One second unwinding mechanism 391 and one second cutting mechanism 393 may form a group. Two groups of second unwinding mechanisms 391 and second cutting mechanisms 393 are provided, which can reduce the interference of the roll changing operation of the second tape roll 396 to the tape attaching process, and accordingly can improve the tape picking efficiency. Further, two groups of second unwinding mechanisms 391 and second cutting mechanisms 393 are arranged in layer in a height direction of the second tape attaching assembly 390.

Since the shifting motor 367 is configured to drive the shifting support 368 in the interval direction D5 of the two second unwinding mechanisms 391, the position of the electrode assembly 200 correspond to the position of one group of second unwinding mechanism 391 and second cutting mechanism 393 that is in operation, thus facilitating the tape attaching operation.

According to some embodiments of the present application, optionally, as shown in FIGS. 4 and 31, the electrode body 210 includes two electrode modules 220 stacked on top of each other in the first direction D1. Each of the electrode modules 220 includes a positive electrode 221, a separator 222, and a negative plate 223 arranged in sequence.

Such an arrangement is conducive to increasing the space utilization rate of the electrode assembly 200 and increasing the energy storage density of the electrode assembly 200.

Further, the two electrode modules 220 may be connected in series or in parallel via the tab portion 201.

Optionally, the two electrode modules 220 may be fixed together by a fixing member 230, thereby improving the stability of the covering process. For example, the fixing member 230 is a tape.

According to some embodiments of the present application, as shown in FIGS. 4 to 31, the electrode assembly 200 includes an electrode body 210, and the electrode body 210 has a first direction D1, a second direction D2 and a third direction D3 that are orthogonal to each other and includes two main surfaces 211 disposed back-to-back with each other in the first direction D1, two end surfaces 212 disposed back-to-back with each other in the second direction D2 and two side surfaces 213 disposed back-to-back with each other in the third direction D3. The covering device 300 includes a first positioning assembly 310 and a first covering assembly 330. The first positioning assembly 310 is configured to position the electrode assembly 200 while keeping the two main surfaces 211 at least partially exposed. The first covering assembly 330 is configured to position the covering film 400, where the covering film 400 includes two main covering areas 410 spaced apart from each other and a connecting area 420 connected between the two main covering areas 410. At least one of the first positioning assembly 310 and the first covering assembly 330 is configured to drive the electrode assembly 200 and the covering film 400 to perform relative movement such that the connecting area 420 comes into contact with and covers the first one 212a of the two end surfaces 212, and the two main covering areas 410 respectively come into contact with and cover an exposed portion of the corresponding one of the two main surfaces 211. The time of contact between the connecting area 420 and the first one 212a of the two end surfaces 212 is earlier than the time of contact between the two main covering areas 410 and the corresponding one of the two main surfaces 211, respectively. The actions of covering the corresponding one of the two main surfaces 211 with the two main covering areas 410 are at least partially synchronized. Before the first one 212a of the two end surfaces 212 comes into contact with the connecting area 420, the first covering assembly 330 is configured to enable the connecting area 420 and the two main covering areas 410 to be coplanar with each other. The first covering assembly 330 is configured to enable the connecting area 420 to be in a suspended state, and the first one 212a of the two end surfaces 212 is set to come into contact with the connecting area 420 that is in a suspended state. The electrode assembly 200 further includes a tab portion 201 protruding from the first one 212a of the two end surfaces 212, the connecting area 420 is provided with a hole 421, and the tab portion 201 is allowed to pass through the hole 421 along with the relative movement between the electrode assembly 200 and the covering film 400. At least one of the first positioning assembly 310 and the first covering assembly 330 is configured to drive the electrode assembly 200 and the covering film 400 to approach each other in the second direction D2. After the first one 212a of the two end surfaces 212 comes into contact with the connecting area 420, the electrode assembly 200 is driven to continue to move in the second direction D2 relative to the ends of the two main covering areas 410 that are away from the connecting area 420. The first covering assembly 330 is further configured to drive the ends of the two main covering areas 410 to approach each other in the first direction D1, and accordingly the two main covering areas 410 come into contact with and cover an exposed portion of the corresponding one of the two main surfaces 211. The first positioning assembly 310 includes an electrode gripper 311. The electrode gripper 311 is configured to grip the electrode body 210 in the third direction D3 from the outside of the two side surfaces 213, or is configured to grip the electrode body 210 in the first direction D1 from the outside of the two main surfaces 211. The first positioning assembly 310 includes an electrode driving mechanism 312. The electrode driving mechanism 312 is configured to drive the electrode assembly 200 in the second direction D2 toward the side where the covering film 400 is located, and to drive, after the first one 212a of the two end surfaces 212 comes into contact with the connecting area 420, the first one 212a of the two end surfaces 212 and the connecting area 420 to continue to move in the second direction D2 synchronously. The electrode driving mechanism 312 includes an electrode driving motor 314, a first electrode support 3141 and a second electrode support 3142, the electrode driving motor 314 is disposed on the first electrode support 3141, and the electrode driving motor 314 is configured to drive the second electrode support 3142 to move relative to the first electrode support 3141 in the second direction D2. The electrode gripper 311 is disposed on the second electrode support 3142 and includes electrode gripping jaws 3131 and an electrode gripping cylinder 313. The electrode gripping cylinder 313 is configured to drive the electrode gripping jaws 3131 to grip the electrode body 210. The first covering assembly 330 includes two first sub-covering assemblies 331 spaced apart from each other, each of the first sub-covering assemblies 331 includes a film gripper 332 and a first film driving mechanism 333, two film grippers 332 respectively grip two ends of the covering film 400 that are away from the connecting area 420, and the first film driving mechanisms 333 drive the two film grippers 332 to approach each other in the first direction D1 to enable regions of the main covering areas 410 not gripped by the film grippers 332 to be bent relative to the connecting area 420 toward the corresponding main surfaces 211. The first film driving mechanism 333 includes a first film driving motor 337, a first film support 3371 and a second film support 342, where the first film driving motor 337 is disposed on the first film support 3371, and the first film driving motor 337 is configured to drive the second film support 342 to move relative to the first film support 3371 in the first direction D1. The film gripper 332 is disposed on the second film support 342 and includes film gripping jaws 338 and a film gripping cylinder 336. The film gripping cylinder 336 is configured to drive the film gripping jaws 338 to grip the covering film 400. Each of the first sub-covering assemblies 331 further includes a second film driving mechanism 334, and two second film driving mechanisms 334 respectively drive the corresponding film grippers 332 to rotate to enable the trend of movement of regions of the covering film 400 gripped by the film grippers 332 relative to the connecting area 420 to be consistent with the trend of bending of the un-gripped regions of the main covering areas 410 relative to the connecting area 420. The first film driving mechanism 333 includes a first film driving motor 337, a first film support 3371 and a second film support 342, where the first film driving motor 337 is disposed on the first film support 3371, and the first film driving motor 337 is configured to drive the second film support 342 to move relative to the first film support 3371 in the first direction D1. The second film driving mechanism 334 includes a second film driving motor 340, and the second film driving motor 340 is disposed on the second film support 342 and drives the corresponding film gripper 332 to rotate. The film gripper 332 includes film gripping jaws 338 and a film gripping cylinder 336, and the film gripping cylinder 336 is configured to drive the film gripping jaws 338 to grip the covering film 400. Each of the first sub-covering assemblies 331 further includes a third film driving mechanism 335, and two third film driving mechanisms 335 respectively drive the corresponding film grippers 332 in the second direction D2 toward the side where the electrode body 210 is located. The first positioning assembly 310 includes an electrode driving mechanism 312. The electrode driving mechanism 312 is configured to drive the electrode assembly 200 in the second direction D2 toward the side where the covering film 400 is located, and to drive, after the first one 212a of the two end surfaces 212 comes into contact with the connecting area 420, the first one 212a of the two end surfaces 212 and the connecting area 420 to continue to move in the second direction D2 synchronously. The third film driving mechanism 335 drives the corresponding film gripper 332 in the second direction D2 to move toward the side away from the electrode body 210 in the second direction D2 after the first one 212a of the two end surfaces 212 comes into contact with the connecting area 420. The first film driving mechanism 333 includes a first film driving motor 337, a first film support 3371 and a second film support 342, where the first film driving motor 337 is disposed on the first film support 3371, and the first film driving motor 337 is configured to drive the second film support 342 to move relative to the first film support 3371 in the first direction D1. The third film driving mechanism 335 includes a third film driving motor 341 and a third film support 343, and the third film driving motor 341 is disposed on the second film support 342 and drives the third film support 343 to move relative to the second film support 342 in the second direction D2. The second film driving mechanism 334 includes a second film driving motor 340, and the second film driving motor 340 is disposed on the third film support 343 and drives the corresponding film gripper 332 to rotate. The film gripper 332 includes film gripping jaws 338 and a film gripping cylinder 336, and the film gripping cylinder 336 is configured to drive the film gripping jaws 338 to grip the covering film 400. The covering device 300 further includes second positioning assemblies 350. The second positioning assemblies 350 are configured to fixedly hold the covering film 400 and the electrode body 210 from the outside of the two main covering areas 410. The second positioning assemblies 350 are carrier fixtures capable of moving synchronously along with the covering film 400 and the electrode body 210. The first positioning assembly 310 is configured to drive the electrode assembly 200 to move toward the side where the covering film 400 is located in the second direction D2 such that the electrode body 210 and the covering film 400 can be inserted into the second positioning assemblies 350. Each of the second positioning assemblies 350 includes a fixed support 351, an opening and closing mechanism and two limiting members 353. The two limiting members 353 are movably arranged on the fixed support 351 in the first direction D1 and form a limiting gap 354 therebetween. The limiting gap 354 allows the insertion of the electrode body 210 and the covering film 400. The opening and closing mechanism is configured to drive the two limiting members 353 to move close to or away from each other. Each opening and closing mechanism includes an elastic member 355 and an opening mechanism. The elastic member 355 is disposed between the two limiting members 353 and configured to elastically drive the two limiting members 353 to move close to each other, and the opening mechanism is configured to drive the two limiting members 353 away from each other. The opening and closing mechanism includes a rotating member 357, and two ends of the rotating member 357 are respectively connected to the two limiting members 353. A center region of the rotating member 357 is configured to be rotatably connected to the fixed support 351, and the rotating member 357 is further configured to drive the other limiting member 353 to move in an opposite direction when the first one of the two limiting members 353 moves in the first direction D1. The covering film 400 includes side covering areas 430 connected to the main covering areas 410, the covering device 300 further includes a second covering assembly 370, and the second covering assembly 370 is configured to drive the side covering areas 430 to come into contact with and cover the side surfaces 213. The second covering assembly 370 includes side pressing plates 371, a first pressing plate driving mechanism 372 and a second pressing plate driving mechanism 373, the first pressing plate driving mechanism 372 is configured to drive the side pressing plates 371 in the first direction D1 such that the side pressing plates 371 push the side covering areas 430 to bend toward the side surfaces 213 relative to the main covering areas 410 respectively, and the second pressing plate driving mechanism 373 is configured to drive the side pressing plates 371 in the third direction D3 such that the side pressing plates 371 press the side covering areas 430 against the side surfaces 213 respectively. The covering film 400 includes end covering areas 440 connected to the main covering areas 410 respectively, and the second covering assembly 370 is configured to drive the end covering areas 440 to come into contact with the second one 212b of the two end surfaces 212. The second covering assembly 370 includes an end pressing plate 374, a first pressing plate driving mechanism 372 and a third pressing plate driving mechanism 375, the first pressing plate driving mechanism 372 is configured to drive the end pressing plate 374 in the first direction D1 such that the end pressing plate 374 pushes the end covering areas 440 to bend toward the second one 212b of the two end surfaces 212 relative to the main covering areas 410 respectively, and the third pressing plate driving mechanism 375 is configured to drive the end pressing plate 374 in the second direction D2 such that the end pressing plate 374 presses the end covering areas 440 against the second one 212b of the end surfaces 212. The first pressing plate driving mechanism 372 includes a pressing plate driving motor 377, a first pressing plate support 378 and a second pressing plate support 379, and the pressing plate driving motor 377 is disposed on the first pressing plate support 378 and drives the second pressing plate support 379 to move relative to the first pressing plate support 378. The second pressing plate driving mechanism 373 includes a first pressing plate cylinder 376. The first pressing plate cylinder 376 is disposed on the second pressing plate support 379. The first pressing plate cylinder 376 drives the side pressing plates 371 to move relative to the second pressing plate support 379. The third pressing plate driving mechanism 375 includes a second pressing plate cylinder 3761. The second pressing plate cylinder 3761 is disposed on the second pressing plate support 379. The second pressing plate cylinder 3761 drives the side pressing plates 374 to move relative to the second pressing plate support 379. The covering film 400 further includes side covering areas 430 and end covering areas 440 that are connected to the main covering areas 410, where the side covering areas 430 cover the side surfaces 213, and the end covering areas 440 cover the second one 212b of the two end surfaces 212; the covering device 300 further includes a first tape attaching assembly 380, where the first tape attaching assembly 380 is configured to attach a first tape 510 onto the electrode assembly 200, the first tape 510 includes a first part and a second part connected to each other, and the first tape attaching assembly 380 is configured to attach the first part 511 of the first tape 510 onto the side covering areas 430 and attach the second part 512 of the first tape 510 onto the end covering areas 440, at corners formed by the side surfaces 213 and the second one 212b of the two end surfaces 212. The first tape attaching assembly 380 includes a first unwinding mechanism 381, a first tape pulling mechanism 382, and a first cutting mechanism 383, the first unwinding mechanism 381 is configured to hold and release a first tape roll 384, the first tape pulling mechanism 382 is configured to clamp and pull the head end of a release portion of the first tape roll 384, and the first cutting mechanism 383 is configured to cut the first tape 510 from the release portion of the first tape roll 384. The first tape pulling mechanism 382 includes a first tape gripping cylinder 3821, a first tape pulling motor 3822 and a first tape gripping member 3823, the first tape gripping cylinder 3821 is configured to drive the first tape gripping member 3823 to grip the head end of the release portion, and the first tape pulling motor 3822 is configured to drive the first tape gripping member 3823 to move to pull the release portion. Two groups of first unwinding mechanisms 381 and first cutting mechanisms 383 are provided correspondingly. The first tape attaching assembly 380 includes a switching mechanism 385, and the switching mechanism 385 includes a reel support 3851 and a switching motor 3852. The two groups of first unwinding mechanisms 381 and first cutting mechanisms 383 are disposed on the reel support 3851. The switching motor 3852 drives the reel support 3851 to rotate about a predetermined axis of rotation to enable the two groups of first unwinding mechanisms 381 and first cutting mechanisms 383 to be switched between a standby station and a working station for the operation of the first tape pulling mechanism 382 and first cutting mechanism 383. The axis of rotation is perpendicular to the plane where the release portion is located. In some embodiments, the first tape attaching assembly 380 includes a first tape picking mechanism 386, and the first tape picking mechanism 386 is configured to suck and pick up the first tape 510. The first cutting mechanism 383 includes a first pressing block 3831, a first cutter 3832 and a first cutting cylinder 3833. The first pressing block 3831 and the first cutter 3832 are fixedly disposed relative to each other. The first cutting cylinder 3833 is configured to drive the first pressing block 3831 to press the release portion against the first tape picking mechanism 386, and to drive the first cutter 3832 to cut the first tape 510 from the release portion. In some embodiments, the first tape attaching assembly 380 includes a first tape picking mechanism 386, and the first tape picking mechanism 386 is configured to suck and pick up the first tape 510. The first tape picking mechanism 386 includes a first tape picking member 3861, a first tape picking motor 3862, a second tape picking motor 3863, a first tape picking support 3864, and a second tape picking support 3865. The first tape picking member 3861 is configured to suck the first tape 510. The first tape picking motor 3862 is disposed on the first tape picking support 3864 and drives the second tape picking support 3865 to move to a side direction of a main surface of the release portion. The second tape picking motor 3863 is disposed on the second tape picking support 3865 and drives the first tape picking member 3861 to move close to or away from a plane where the release portion is located. The first tape picking member 3861 includes a first sub tape-picking portion 3866 and a second sub tape-picking portion 3867. The first sub tape-picking portion 3866 is configured to suck the first part of 511 the first tape 510 and attach it to the side covering areas 430. The second sub tape-picking portion 3867 is configured to suck the second part 512 of the first tape 510 and attach it to the end covering areas 440. The first sub tape-picking portion 3866 is a telescoping member. The second tape picking motor 3863 drives the first tape picking member 3861 in the third direction D3, and the first sub tape-picking portion 3866 presses the first part 511 of the first tape 510 against the side covering areas 430 and then retracts to enable the second sub tape-picking portion 3867 to continue to move in the third direction D3 and fit against the end covering areas 440 so as to attach the second part 512 of the first tape 510 onto the end covering areas 440. Alternatively, the second sub tape-picking portion 3867 is a telescoping member. The second tape picking motor 3863 drives the first tape picking member 3861 in the second direction D2, and the first sub tape-picking portion 3867 presses the second part 512 of the first tape 510 against the end covering areas 440 and then retracts to enable the first sub tape-picking portion 3866 to continue to move in the second direction D2 and fit against the side covering areas 430 so as to attach the first part 511 of the first tape 510 onto the side covering areas 430. The first cutting mechanism 383 is configured to cut two first tapes 510 from the release portion. Two first tape picking members 3861 are provided and suck corresponding first tapes 510 respectively. The first tape attaching assembly 380 includes a first tape picking mechanism 386, the first tape picking mechanism 386 is configured to suck and pick up the first tapes 510, and the first tape picking mechanism 386 includes first tape picking members 3861, a first tape picking motor 3862, a second tape picking motor 3863, a first tape picking support 3864, a second tape picking support 3865, a third tape picking support 3868 and a tape distributing cylinder 3869. The first tape picking member 3861 is configured to suck the first tape 510. The first tape picking motor 3862 is disposed on the first tape picking support 3864 and drives the second tape picking support 3865 to move to a side direction of a main surface of the release portion. The second tape picking motor 3863 is disposed on the second tape picking support 3865 and drives the third tape picking support 3868 and the two first tape picking members 3861 to move close to or away from a plane where the release portion is located. The tape distributing cylinder 3869 is disposed in the third tape picking support 3868. The tape distribution cylinder 3869 is configured to drive the two first tape picking members 3861 to move away from each other such that the two first tape picking members 3861 correspond to two corners, spaced apart in the third direction D3, of the electrode assembly 200. The covering device 300 further includes a second tape attaching assembly 390, where the second tape attaching assembly 390 is configured to drive the electrode assembly 200 and the second tape 520 to do relative movement. The second tape 520 includes a first part and a second part connected to each other. The second tape attaching assembly 390 is configured to attach the first part 521 of the second tape 520 to the main covering areas 410 and to attach the second part 522 of the second tape 520 to the side covering areas 430, at corners formed by the side surfaces 213 and the main surfaces 211. The second tape 520 has two first parts 521, the two first parts are located at two ends of the second part 522 of the second tape 520, and the second tape attaching assembly 390 is configured to attach the two first parts of the second tape 520 to the corresponding one of the two main covering areas 410, respectively. The second tape attaching assembly 390 includes a second unwinding mechanism 391, a second tape pulling mechanism 392, and a second cutting mechanism 393. The second unwinding mechanism 391 is configured to hold and release a second tape roll 396. The second tape pulling mechanism 392 is configured to clamp and pull the head end of a release portion of the second tape roll 396. The second cutting mechanism 393 is configured to cut the second tape 520 from the release portion of the second tape roll 396. The second tape pulling mechanism 392 includes a second tape gripping cylinder 3921, a second tape pulling motor 3922 and a second tape gripping member 3923. The second tape gripping cylinder 3921 is configured to drive the second tape gripping member 3923 to grip the head end of the release portion, and the second tape pulling motor 3922 is configured to drive the second tape gripping member 3923 to move to pull the release portion. Two groups of second unwinding mechanisms 391 and second cutting mechanisms 393 are provided correspondingly and spaced apart in the width direction D4 of the release portion. The second tape attaching assembly 390 includes a tape pulling support 394, a tape pulling shifting cylinder 3941 and a tape pulling shifting support 3942, the tape pulling shifting cylinder 3941 is disposed on the tape pulling support 394, and the second tape pulling mechanism 392 is disposed on the tape pulling shifting support 3942. The tape pulling shifting cylinder 3941 is configured to drive the tape pulling shifting support 3942 to move in the interval direction D5 of the two second unwinding mechanisms 391, so that the second tape pulling mechanism 392 can switch between the standby station and the working station for the operation of the second tape pulling mechanism 392. One group of second unwinding mechanism 391 and second cutting mechanism 393 is arranged on either of the standby station and the working station. The second tape attaching assembly 390 includes a second tape picking mechanism 395, and the second tape picking mechanism 395 is configured to suck and pick up the second tape 520. The second cutting mechanism 393 includes a second pressing block 3931, a second cutter 3932 and a second cutting cylinder 3933. The second pressing block 3931 and the second cutter 3932 are fixedly disposed relative to each other. The second cutting cylinder 3933 is configured to drive the second pressing block 3931 to press the release portion against the second tape picking mechanism 395, and to drive the second cutter 3932 to cut the second tape 520 from the release portion. The second tape attaching assembly 390 includes a second tape picking mechanism 395, and the second tape picking mechanism 395 is configured to suck and pick up the second tape 520. The second tape picking mechanism 395 includes a second tape picking member 3951, a fourth tape picking motor 3952, and a fourth tape picking support 3953, where the second tape picking member 3951 is configured to suck the second tape 520. The fourth tape picking motor 3952 is disposed on the fourth tape picking support 3953, drives the second tape picking member 3951 to move to be arranged opposite to the release portion in the thickness direction D6 of the release portion, and drives the second tape picking member 3951 to move close to and move away from the plane where the release portion is located. The second tape extracting member 3951 includes a third sub tape-picking portion 3954 and a fourth sub tape-picking portion 3955. The third sub tape-picking portion 3954 is configured to suck the first part of 521 the second tape 520 and attach it to the main covering areas 410. The fourth sub tape-picking portion 3955 is configured to suck the second part of 522 the second tape 520 and attach it to the side covering areas 430. The fourth sub tape-picking portion 3955 is a telescoping member. The fourth tape picking motor 3952 drives the second tape picking member 3951 in the third direction D3, and the fourth sub tape-picking portion 3955 presses the second part 522 of the second tape 520 against the side covering areas 430 and then retracts to enable the third sub tape-picking portion 3954 to continue to move in the third direction D3 and fit against the main covering areas 410 so as to attach the first part 521 of the second tape 520 onto the main covering areas 410. Two groups of second unwinding mechanisms 391 and second cutting mechanisms 393 are provided correspondingly and spaced apart in the width direction D4 of the release portion. The second tape picking mechanism 395 includes a tape picking shifting cylinder 3956 and a tape picking shifting support 3957. The tape picking shifting cylinder 3956 is disposed on the fourth tape picking support 3953 and the second tape picking member 3951 is disposed on the tape picking shifting support 3957. The tape picking shifting cylinder 3956 is configured to drive the tape picking shifting support 3957 to move in the interval direction D5 of the two second unwinding mechanisms 391, so that the second tape picking mechanism 3951 can switch between the standby station and the working station for the operation of the second tape picking mechanism 395. One group of second unwinding mechanism 391 and second cutting mechanism 393 is arranged on either of the standby station and the working station. The second tape attaching assembly 390 includes a third positioning assembly 360, and the third positioning assembly 360 includes a main hold-down cylinder 361, a main hold-down member 362, a side hold-down cylinder 363 and a side hold-down member 364. The main hold-down cylinder 361 is configured to drive the main hold-down member 362 to hold down the main covering areas 410 and the main surfaces 211, and the side hold-down cylinder 363 is configured to drive the side hold-down member 364 to hold down the side covering areas 430 and the side surfaces 213. The third positioning assembly 360 includes a rotating motor 365 and a rotating support 366. The main hold-down cylinder 361, the main hold-down member 362, the side hold-down cylinder 363 and the side hold-down member 364 are disposed on the rotating support 366, and the rotating motor 365 is configure to drive the rotating support 366 to rotate. The rotating support 366 rotates in an axis parallel to the second direction D2. The second tape attaching assembly 390 includes two second unwinding mechanisms 391. The third positioning assembly 360 includes a shifting motor 367 and a shifting support 368, and the main hold-down cylinder 361, the main hold-down member 362, the side hold-down cylinder 363, the side hold-down member 364, the rotating motor 365 and the rotating support 366 are disposed on the shifting support 368. The shifting motor 367 is configured to drive the shifting support 368 in the interval direction D5 of the two second unwinding mechanisms 391. The electrode body 210 includes two electrode modules 220 stacked on top of each other in the first direction D1. Each of the electrode modules 220 includes a positive electrode 221, a separator 222, and a negative plate 223 arranged in sequence.

Optionally, the covering device 300 further includes a covering film feeding mechanism 301, an electrode assembly discharging mechanism 302, a fixture conveying line 303, a manipulator rail 304, and a dust removal mechanism 305. The covering film feeding mechanism 301 may suck the covering film 400 by negative pressure, and then transfer the covering film 400 to the first covering assembly 330. After the film grippers 332 positions the covering film 400, the covering film feeding mechanism 301 may be separated from the covering film 400. The fixture conveying line 303 may be used for conveying the second positioning assembly 350 such that the second positioning assembly 350 can reach different workstations, or the second positioning assembly 350 can carry the electrode assembly 200 to different workstations. The electrode assembly discharging mechanism 302 can move the electrode assembly 200 to other processes after the electrode assembly 200 is covered with the covering film 400.

The manipulator rail 304 can provide support for some mechanisms that need to move, so that some mechanisms that need to move can move along the manipulator rail 304. For example, the covering film feeding mechanism 301 and the electrode assembly discharging mechanism 302 are slidably disposed on the manipulator rail 304. The manipulator rail 304 may be crossed with the fixture conveying line 303, so that the second positioning assembly 350 can switch between moving along the manipulator rail 304 and moving along the fixture conveying line 303. For example, at least two manipulator rails 304 may be crossed with at least two fixture conveying lines 303.

The fixture conveying line 303 may pass through the dust removal mechanism 305, so that the dust removal mechanism 305 can remove dust for the second positioning assembly 350 that moves into the dust removal mechanism 305. For example, the dust removal mechanism 305 can remove dust from the unloaded second positioning assembly 350 by air blowing and bleeding. Further, different fixture conveying lines 303 may be interconnected, so that the second positioning assembly 350 can achieve cyclic movement through different fixture conveying lines 303.

Optionally, the first tape attaching assembly 380 or the second tape attaching assembly 390 may be disposed on one side of the fixture conveying line 303, so that the first tape 510 or the second tape 520 can be attached to the electrode assembly 200 covered with the covering film 400 on the fixture conveying line 303.

Optionally, the covering device 300 further includes a conveying device and an assembly device. The conveying device is used for conveying structures to be assembled to each station of the assembly device. The workstations of the assembly device at least include a tab welding device, an entering device, a tab passing device, a terminal post welding device and a bottom cover welding device.

The tab welding device is used for welding a plurality of tabs of the electrode assembly 200 to form the tab portion 201. The entering device is used for mounting the electrode assembly 200 into the case 100 from the opening end 112. The tab passing device is used for clamping and allowing the tab portion 201 to pass through the through hole in the process of mounting the electrode assembly 200 into the case. The terminal post welding device is used for welding the tab portion 201 that passes through the through hole to the side of the terminal post facing away from the accommodating cavity. The bottom cover welding device is used for welding the bottom cover to the opening end 112 of the case 100.

It should be noted that, in this embodiment, the conveying device includes a conveying line, which may be a conveying structure formed by conveying rollers driven by a motor and a conveyor belt in cooperation, or a conveying structure formed by articulating conveying chain links driven by the motor, or an AGV, which can realize conveying in at least one direction and can support and ensure the stability of the structures to be assembled.

The tab welding device is intended to form the tab portion 201 after the tabs are prewelded, and it may be an ultrasonic welding device, as long as it can ensure that the tabs are welded in a clamped and stable state. The entering device is a pushing mechanism or a clamping mechanism, which can stably move the electrode assembly 200 toward the opening end 112 of the case 100 and to enter the accommodating cavity through the opening end 112. Similarly, the tab passing device may adopt a clamping structure or a guiding structure, which can guide the tab portion 201 to smoothly pass through the through hole without interfering with the case 100. The terminal post welding device is intended to achieve welding between the tab portion 201 and the terminal post, and it may be a laser welding device. The bottom cover welding device is intended to achieve circumferential edge welding between the bottom cover and the opening end 112 of the case 100, and is also a laser welding device.

In addition, the assembly device is not limited to include a tab welding device, an entering device, a tab passing device, a terminal post welding device and a bottom cover welding device. Exemplarily, when the electrode assembly 200 includes a plurality of electrode modules 220, for example, two electrode modules 220, the assembly device further includes a mating assembly used for stacking the plurality of electrode modules 220 to enable the tabs of the two electrode modules 220 to be roughly opposite to each other, so that the conveying structure can convey the mated electrode modules 220 to the tab welding device for tab welding, thus facilitating the formation of the tab portion 201. As another example, in order to ensure the reliability of the battery assembly process, dust removal, NG inspection stations, etc. may also be added between any two adjacent stations, which is not limited by this embodiment.

According to some embodiments of the present application, the electrode assembly described in an embodiment of a covering method for an electrode assembly includes an electrode body, and the electrode body has a first direction, a second direction and a third direction that are orthogonal to each other and includes two main surfaces disposed back-to-back with each other in the first direction, two end surfaces disposed back-to-back with each other in the second direction and two side surfaces disposed back-to-back with each other in the third direction. The covering method includes: S100: positioning the electrode assembly by a first positioning assembly while keeping the two main surfaces at least partially exposed. S200: positioning a covering film by a first covering assembly, where the covering film includes two main covering areas spaced apart from each other and a connecting area connected between the two main covering areas. S300: controlling at least one of the first positioning assembly and the first covering assembly to move relative to the other such that the connecting area comes into contact with and covers the first one of the two end surfaces, and the two main covering areas respectively come into contact with and cover a portion of the corresponding one of the two main surfaces that is exposed from the first positioning assembly.

According to some embodiments of the present application, optionally, controlling at least one of the first positioning assembly and the first covering assembly to move relative to the other includes:
S310: controlling the relative movement between the first positioning assembly and the first covering assembly such that the time of contact between the connecting area and the first one of the two end surfaces is earlier than the time of contact between the two main covering areas and the corresponding one of the two main surfaces, respectively.
S320: controlling the relative movement between the first positioning assembly and the first covering assembly such that covering processes of the two main covering areas on the corresponding one of the two main surfaces are at least partially synchronized.

According to some embodiments of the present application, optionally, controlling at least one of the first positioning assembly and the first covering assembly to move relative to the other includes:
S330: controlling at least one of the first positioning assembly and the first covering assembly to move in the second direction such that the electrode assembly and the covering film approach each other in the second direction and that, after the first one of the two end surfaces comes into contact with the connecting area, the electrode assembly continues to move in the second direction relative to the ends of the two main covering areas that are away from the connecting area.
S340: controlling the first covering assembly to move in the first direction so as to bring the ends of the two main covering areas closer to each other in the first direction, enabling the two main covering areas to come into contact with and cover the exposed portion of the corresponding one of the two main surfaces.

According to some embodiments of the present application, optionally, the electrode assembly includes a tab portion protruding from the first one of the two end surfaces, and the connecting area is provided with a hole.

Positioning the covering film by the first covering film includes:
S210: positioning the electrode assembly by the first positioning assembly to enable the tab portion to face toward the connecting area.

Controlling at least one of the first positioning assembly and the first covering assembly to move relative to the other includes:
S350: controlling the relative movement of the first positioning assembly and the first covering assembly to enable the tab portion to pass through the hole along with the relative movement between the first positioning assembly and the first covering assembly and enable the connecting area to come into contact with and cover the first one of the two end surfaces.

With regard to the embodiment of the covering method for an electrode assembly of the present application, reference may be made to the relevant contents of the embodiments of the covering device for an electrode assembly described above, and no further details will be given herein.

In summary, the embodiments of the present application can realize the adjustment of the relative positional relationship of the electrode assembly and the covering film. When the covering film covers the first one of the two main surfaces and the two end surfaces of the electrode body, the stability of the covering process can be improved, making the covering action more concise and smooth.

Finally, it should be noted that the above embodiments are only used for describing, instead of limiting, the technical solutions of the present application; although the present application is described in detail with reference to the foregoing embodiments, those skilled in the art should understand that they may modify the technical solutions described in the foregoing embodiments, or replace some or all of the technical features therein; however, these modifications or replacements do not make the essence of the corresponding technical solutions deviate from the scope of the technical solutions of the embodiments of the present application, and should be all included in the scope of the claims and description of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A covering device for an electrode assembly, the electrode assembly comprising an electrode body, the electrode body having a first direction, a second direction and a third direction that are orthogonal to each other and comprising two main surfaces disposed back-to-back with each other in the first direction, two end surfaces disposed back-to-back with each other in the second direction and two side surfaces disposed back-to-back with each other in the third direction; the covering device comprising:
a first positioning assembly, configured to position the electrode assembly while keeping the two main surfaces respectively at least partially exposed; and
a first covering assembly, configured to position a covering film, wherein the covering film comprises two main covering areas spaced apart from each other and a connecting area connected between the two main covering areas;
wherein at least one of the first positioning assembly and the first covering assembly is configured to be movable relative to the other such that the connecting area comes into contact with and covers the first one of the two end surfaces, and the two main covering areas respectively come into contact with and cover an exposed portion of the corresponding one of the two main surfaces.

2. The covering device according to claim 1, wherein the relative movement between the first positioning assembly and the first covering assembly is set such that the time of contact between the connecting area and the first one of the two end surfaces is earlier than the time of contact between the two main covering areas and the corresponding one of the two main surfaces, respectively.

3. The covering device according to claim 2, wherein the relative movement between the first positioning assembly and the first covering assembly is set such that covering processes of the two main covering areas on the corresponding one of the two main surfaces are at least partially synchronized.

4. The covering device according to claim 3, wherein before the first one of the two end surfaces comes into contact with the connecting area, the first covering assembly is configured to enable the connecting area and the two main covering areas to be coplanar with each other.

5. The covering device according to claim 4, wherein the first covering assembly is configured to enable the connecting area to be in a suspended state, and the relative movement between the first positioning assembly and the first covering assembly is set such that the first one of the two end surfaces comes into contact with the connecting area that is in a suspended state.

6. The covering device according to claim 1, wherein the electrode assembly further comprises a tab portion protruding from the first one of the two end surfaces, the connecting area is provided with a hole, and the tab portion is allowed to pass through the hole along with the relative movement between the first positioning assembly and the first covering assembly.

7. The covering device according to any one of claims 1-6, wherein at least one of the first positioning assembly and the first covering assembly is configured to move in the second direction such that the electrode assembly and the covering film approach each other in the second direction and that, after the first one of the two end surfaces comes into contact with the connecting area, the electrode assembly continues to move in the second direction relative to the ends of the two main covering areas that are away from the connecting area; and the first covering assembly is further configured to move in the first direction such that the ends of the two main covering areas approach each other in the first direction and accordingly the two main covering areas come into contact with and cover an exposed portion of the corresponding one of the two main surfaces.

8. The covering device according to any one of claims 1-6, wherein the first positioning assembly comprises an electrode gripper, the electrode gripper being configured to grip the electrode body in the third direction from the outside of the two side surfaces, or being configured to grip the electrode body in the first direction from the outside of the two main surfaces.

9. The covering device according to claim 8, wherein the first positioning assembly comprises an electrode driving mechanism, the electrode driving mechanism being configured to drive the electrode gripper in the second direction toward the side where the covering film is located such that after the first one of the two end surfaces comes into contact with the connecting area, the first one of the two end surfaces and the connecting area continue to move in the second direction synchronously.

10. The covering device according to claim 9, wherein the electrode driving mechanism comprises an electrode driving motor, a first electrode support and a second electrode support, the electrode driving motor being disposed on the first electrode support and configured to drive the second electrode support to move relative to the first electrode support in the second direction; the electrode gripper is disposed on the second electrode support and comprises electrode gripping jaws and an electrode gripping cylinder, the electrode gripping cylinder being configured to drive the electrode gripping jaws to grip the electrode body.

11. The covering device according to any one of claims 1-6, wherein the first covering assembly comprises two first sub-covering assemblies spaced apart from each other, each of the first sub-covering assemblies comprises a film gripper and a first film driving mechanism, two film grippers respectively grip two ends of the covering film that are away from the connecting area, and the first film driving mechanisms drive the two film grippers to approach each other in the first direction to enable regions of the main covering areas not gripped by the film grippers to be bent relative to the connecting area toward the corresponding main surfaces.

12. The covering device according to claim 11, wherein the first film driving mechanism comprises a first film driving motor, a first film support and a second film support, the first film driving motor being disposed on the first film support and configured to drive the second film support to move relative to the first film support in the first direction; and
the film gripper is disposed on the second film support and comprises film gripping jaws and a film gripping cylinder, the film gripping cylinder being configured to drive the film gripping jaws to grip the covering film.

13. The covering device according to claim 11, wherein each of the first sub-covering assemblies further comprises a second film driving mechanism, and two second film driving mechanisms respectively drive the corresponding film grippers to rotate to enable the trend of movement of regions of the covering film gripped by the film grippers relative to the connecting area to be consistent with the trend of bending of the un-gripped regions of the main covering areas relative to the connecting area.

14. The covering device according to claim 13, wherein the first film driving mechanism comprises a first film driving motor, a first film support and a second film support, the first film driving motor being disposed on the first film support and configured to drive the second film support to move relative to the first film support in the first direction; and
the second film driving mechanism comprises a second film driving motor, the second film driving motor being disposed on the second film support and driving the corresponding film gripper to rotate; and the film gripper comprises film gripping jaws and a film gripping cylinder, the film gripping cylinder being configured to drive the film gripping jaws to grip the covering film.

15. The covering device according to claim 13, wherein each of the first sub-covering assemblies further comprises a third film driving mechanism, and two third film driving mechanisms respectively drive the corresponding film grippers in the second direction toward the side where the electrode body is located;
alternatively, the first positioning assembly comprises an electrode gripper and an electrode driving mechanism, the electrode gripper is configured to grip the electrode body, the electrode driving mechanism is configured to drive the electrode gripper in the second direction toward the side where the covering film is located such that after the first one of the two end surfaces comes into contact with the connecting area, the first one of the two end surfaces and the connecting area continue to move in the second direction synchronously, and the third film driving mechanism drives the corresponding film gripper in the second direction toward the side away from the electrode body after the first one of the two end surfaces comes into contact with the connecting area.

16. The covering device according to claim 15, wherein
the first film driving mechanism comprises a first film driving motor, a first film support and a second film support, the first film driving motor being disposed on the first film support and configured to drive the second film support to move relative to the first film support in the first direction;
the third film driving mechanism comprises a third film driving motor and a third film support, the third film driving motor being disposed on the second film support and driving the third film support to move relative to the second film support in the second direction; and
the second film driving mechanism comprises a second film driving motor, the second film driving motor being disposed on the third film support and driving the corresponding film gripper to rotate; and the film gripper comprises film gripping jaws and a film gripping cylinder, the film gripping cylinder being configured to drive the film gripping jaws to grip the covering film.

17. The covering device according to any one of claims 1-6, wherein the covering device further comprises second positioning assemblies, the second positioning assemblies being configured to fixedly hold the covering film and the electrode body from the outside of the two main covering areas.

18. The covering according to claim 17, wherein the second positioning assemblies are carrier fixtures capable of moving synchronously along with the covering film and the electrode body.

19. The covering device according to claim 17, wherein the first positioning assembly is configured to insert the electrode body and the covering film into the second positioning assemblies in the second direction.

20. The covering device according to claim 19, wherein each of the second positioning assemblies comprises a fixed support, an opening and closing mechanism and two limiting members, the two limiting members being movably arranged on the fixed support in the first direction and forming a limiting gap therebetween, the limiting gap allowing the insertion of the electrode body and the covering film; and the opening and closing mechanism being configured to drive the two limiting members to move close to or away from each other.

21. The covering device according to claim 20, wherein each of the opening and closing mechanisms comprises an elastic member and an opening mechanism; the elastic member is disposed between the two limiting members and configured to elastically drive the two limiting members to move closer to each other, and the opening mechanism is configured to drive the two limiting members away from each other.

22. The covering device according to claim 20, wherein
the opening and closing mechanism comprises a rotating member, with two ends respectively connected to the two limiting members; a center region of the rotating member is configured to be rotatably connected to the fixed support, and the rotating member is further configured to drive the other limiting member to move in an opposite direction when the first one of the two limiting members moves in the first direction.

23. The covering device according to any one of claims 1-6, wherein the covering film comprises side covering areas connected to the main covering areas, the covering device further comprises a second covering assembly, the second covering assembly is configured to drive the side covering areas to come into contact with and cover the side surfaces.

24. The covering device according to claim 23, wherein the second covering assembly comprises side pressing plates, a first pressing plate driving mechanism and a second pressing plate driving mechanism, the first pressing plate driving mechanism being configured to drive the side pressing plates in the first direction such that the side pressing plates push the side covering areas to bend toward the side surfaces relative to the main covering areas respectively, and the second pressing plate driving mechanism being configured to drive the side pressing plates in the third direction such that the side pressing plates press the side covering areas against the side surfaces respectively.

25. The covering device according to claim 24, wherein the covering film comprises end covering areas connected to the main covering areas, and the second covering assembly is configured to drive the end covering areas to come into contact with and cover the second one of the two end surfaces.

26. The covering device according to claim 25, wherein the second covering assembly comprises an end pressing plate, a first pressing plate driving mechanism and a third pressing plate driving mechanism, the first pressing plate driving mechanism being configured to drive the end pressing plate in the first direction such that the end pressing plate pushes the end covering areas to bend toward the second one of the two end surfaces relative to the main covering areas respectively, and the third pressing plate driving mechanism being configured to drive the end pressing plate in the second direction such that the end pressing plate presses the end covering areas against the second one of the two end surfaces.

27. The covering device according to claim 26, wherein the first pressing plate driving mechanism comprises a pressing plate driving motor, a first pressing plate support and a second pressing plate support, the pressing plate driving motor being disposed on the first pressing plate support and driving the second pressing plate support to move relative to the first pressing plate support;
the second pressing plate driving mechanism comprises a first pressing plate cylinder, the first pressing plate cylinder being disposed on the second pressing plate support and driving the side pressing plates to move relative to the second pressing plate support; and
the third pressing plate driving mechanism comprises a second pressing plate cylinder, the second pressing plate cylinder being disposed on the second pressing plate support and driving the end pressing plate to move relative to the second pressing plate support.

28. The covering device according to any one of claims 1-6, wherein the covering film further comprises side covering areas and end covering areas that are connected to the main covering areas, wherein the side covering areas cover the side surfaces, and the end covering areas cover the second one of the two end surfaces; the covering device further comprises a first tape attaching assembly, wherein the first tape attaching assembly is configured to attach a first tape onto the electrode assembly, the first tape comprises a first part and a second part connected to each other, the first tape attaching assembly is configured to attach the first part of the first tape onto the side covering areas and attach the second part of the first tape onto the end covering areas, at corners formed by the side surfaces and the second one of the two end surfaces.

29. The covering device according to claim 28, wherein the first tape attaching assembly comprises a first unwinding mechanism, a first tape pulling mechanism, and a first cutting mechanism, the first unwinding mechanism being configured to hold and release a first tape roll, the first tape pulling mechanism being configured to clamp and pull the head end of a release portion of the first tape roll, and the first cutting mechanism being configured to cut the first tape from the release portion of the first tape roll.

30. The covering device according to claim 29, wherein the first tape pulling mechanism comprises a first tape gripping cylinder, a first tape pulling motor and a first tape gripping member, the first tape gripping cylinder being configured to drive the first tape gripping member to grip the head end of the release portion, and the first tape pulling motor being configured to drive the first tape gripping member to move to pull the release portion.

31. The covering device according to claim 29, wherein two groups of first unwinding mechanisms and first cutting mechanisms are provided correspondingly; the first tape attaching assembly comprises a switching mechanism, the switching mechanism comprising a reel support and a switching motor; the two groups of first unwinding mechanisms and first cutting mechanisms are disposed on the reel support; the switching motor drives the reel support to rotate about a predetermined axis of rotation to enable the two groups of first unwinding mechanisms and first cutting mechanisms to be switched between a standby station and a working station for the operation of the first tape pulling mechanism and first cutting mechanism; and the axis of rotation is perpendicular to a plane where the release portion is located.

32. The covering device according to claim 29, wherein the first tape attaching assembly comprises a first tape picking mechanism configured to suck and pick up the first tape; the first cutting mechanism comprises a first pressing block, a first cutter and a first cutting cylinder; the first pressing block and the first cutter are fixedly disposed relative to each other; the first cutting cylinder is configured to drive the first pressing block to press the release portion against the first tape picking mechanism, and to drive the first cutter to cut the first tape from the release portion.

33. The covering device according to claim 29, wherein the first tape attaching assembly comprises a first tape picking mechanism configured to suck and pick up the first tape; the first tape picking mechanism comprises a first tape picking member, a first tape picking motor, a second tape picking motor, a first tape picking support, and a second tape picking support; the first tape picking member is configured to suck the first tape; the first tape picking motor is disposed on the first tape picking support and drives the second tape picking support to move to a side direction of a main surface of the release portion; and the second tape picking motor is disposed on the second tape picking support and drives the first tape picking member to move close to or away from a plane where the release portion is located.

34. The covering device according to claim 33, wherein the first tape picking member comprises a first sub tape-picking portion and a second sub tape-picking portion; the first sub tape-picking portion is configured to suck the first part of the first tape and attach it to the side covering areas; and the second sub tape-picking portion is configured to suck the second part of the first tape and attach it to the end covering areas.

35. The covering device according to claim 34, wherein the first sub tape-picking portion is a telescoping member; the second tape picking motor drives the first tape picking member in the third direction, the first sub tape-picking portion presses the first part of the first tape against the side covering areas and retracts to enable the second sub tape-picking portion to continue to move in the third direction and fit against the end covering areas so as to attach the second part of the first tape onto the end covering areas; and
the second sub tape-picking portion is a telescoping member; the second tape picking motor drives the first tape picking member in the second direction, and the second sub tape-picking portion presses the second part of the first tape against the end covering areas and retracts to enable the first sub tape-picking portion to continue to move in the second direction and fit against the side covering areas so as to attach the first part of the first tape onto the side covering areas.

36. The covering device according to claim 29, wherein the first cutting mechanism is configured to cut two first tapes from the release portion; the first tape attaching assembly comprises a first tape picking mechanism, the first tape picking mechanism being configured to suck and pick up the first tapes and comprising first tape picking members, a first tape picking motor, a second tape picking motor, a first tape picking support, a second tape picking support, a third tape picking support and a tape distributing cylinder; two first tape picking members are provided and suck corresponding first tapes respectively; the first tape picking motor is disposed on the first tape picking support and drives the second tape picking support to move to a side direction of a main surface of the release portion; the second tape picking motor is disposed on the second tape picking support and drives the third tape picking support and the two first tape picking members to move close to or away from a plane where the release portion is located; the tape distributing cylinder is disposed in the third tape picking support and configured to drive the two first tape picking members to move away from each other such that the two first tape picking members correspond to two corners of electrode assemblies spaced apart in the third direction.

37. The covering device according to claim 28, wherein the covering device further comprises a second tape attaching assembly, wherein the second tape attaching assembly is configured to attach a second tape to the electrode assembly, the second tape comprises a first part and a second part connected to each other, the second tape attaching assembly is configured to attach the first part of the second tape to the main covering areas and to attach the second part of the second tape to the side covering areas, at corners formed by the side surfaces and the main surfaces.

38. The covering device according to claim 37, wherein the second tape has two first parts, the two parts are located at two ends of the second part of the second tape, and the second tape attaching assembly is configured to attach the two first parts of the second tape to the corresponding one of the two main covering areas, respectively.

39. The covering device according to claim 37 or 38, wherein the second tape attaching assembly comprises a second unwinding mechanism, a second tape pulling mechanism, and a second cutting mechanism; the second unwinding mechanism is configured to hold and release a second tape roll; the second tape pulling mechanism is configured to clamp and pull the head end of a release portion of the second tape roll; and the second cutting mechanism is configured to cut the second tape from the release portion of the second tape roll.

40. The covering device according to claim 39, wherein the second tape pulling mechanism comprises a second tape gripping cylinder, a second tape pulling motor and a second tape gripping member, the second tape gripping cylinder being configured to drive the second tape gripping member to grip the head end of the release portion, and the second tape pulling motor being configured to drive the second tape gripping member to move to pull the release portion.

41. The covering device according to claim 39, wherein two groups of second unwinding mechanisms and second cutting mechanisms are provided correspondingly and spaced apart in a width direction of the release portion; the second tape attaching assembly comprises a tape pulling support, a tape pulling shifting cylinder and a tape pulling shifting support, the tape pulling shifting cylinder being disposed on the tape pulling support and the second tape pulling mechanism being disposed on the tape pulling shifting support; the tape pulling shifting cylinder is configured to drive the tape pulling shifting support to move in a direction of an interval between the two second unwinding mechanisms to enable the second tape pulling mechanism to switch between the two groups of second unwind mechanisms and second cutting mechanisms.

42. The covering device according to claim 39, wherein the second tape attaching assembly comprises a second tape picking mechanism configured to suck and pick up the second tape; the second cutting mechanism comprises a second pressing block, a second cutter, and a second cutting cylinder; the second pressing block and the second cutter are fixedly disposed relative to each other; the second cutting cylinder is configured to drive the second pressing block to press the release portion against the second tape picking mechanism, and to drive the second cutter to cut the second tape from the release portion.

43. The covering device according to claim 39, wherein the second tape attaching assembly comprises a second tape picking mechanism configured to suck and pick up the second tape; the second tape picking mechanism comprises a second tape picking member, a fourth tape picking motor, and a fourth tape picking support, the second tape picking member being configured to suck the second tape; the fourth tape picking motor is disposed on the fourth tape picking support and drives the second tape picking member to move to a side direction of the main surface of the release portion and drives the second tape picking member to move close to or away from the plane where the release portion is located.

44. The covering device according to claim 43, wherein the tape picking member comprises a third sub tape-picking portion and a fourth sub tape-picking portion; the third sub tape-picking portion is configured to suck the first part of the second tape and fit it to the main covering areas; and the fourth sub tape-picking portion is configured to suck the second part of the second tape and fit it to the side covering areas.

45. The covering device according to claim 44, wherein the fourth sub tape-picking portion is a telescoping member; the fourth tape picking motor drives the second tape picking member in the third direction, and the fourth sub tape-picking portion presses the second part of the second tape against the side covering areas and retracts to enable the third sub tape-picking portion to continue to move in the third direction and fit against the main covering areas, so as to attach the first part of the second tape onto the main covering areas.

46. The covering device according to claim 43, wherein two groups of second unwinding mechanisms and second cutting mechanisms are provided correspondingly and are spaced apart in a width direction of the release portion; the second tape picking mechanism comprises a tape picking shifting cylinder and a tape picking shifting support; the tape picking shifting cylinder is disposed on the fourth tape picking support and the second tape picking member is disposed on the tape picking shifting support; the tape picking shifting cylinder is configured to drive the tape picking shifting support to move in an interval direction of the two second unwinding mechanisms to enable the second tape picking members to switch between the two groups of second unwinding mechanisms and second cutting mechanisms.

47. The covering device according to claim 37 or 38, wherein the second tape attaching assembly comprises a third positioning assembly, the third positioning assembly comprising a main hold-down cylinder, a main hold-down member, a side hold-down cylinder and a side hold-down member; the main hold-down cylinder is configured to drive the main hold-down member to hold down the main covering areas and the main surfaces, and the side hold-down cylinder is configured to drive the side hold-down member to hold down the side covering areas and the side surfaces.

48. The covering device according to claim 47, wherein the third positioning assembly comprises a rotating motor and a rotating support; the main hold-down cylinder, the main hold-down member, the side hold-down cylinder and the side hold-down member are disposed on the rotating support and the rotating motor is configure to drive the rotating support to rotate; and the rotating support rotates in an axis parallel to the second direction.

49. The covering device according to claim 48, wherein the second tape attaching assembly comprises two second unwind mechanisms; the third positioning assembly comprises a shifting motor and a shifting support, and the main hold-down cylinder, the main hold-down member, the side hold-down cylinder, the side hold-down member, the rotating motor and the rotating support are disposed in the shifting support; and the shifting motor is configured to drive the shifting support in an interval direction of the two second unwinding mechanisms.

50. The covering device according to any one of claims 1-6, wherein the electrode body comprises two electrode modules stacked on top of each other in the first direction, each of the electrode modules comprising a positive electrode, a separator, and a negative plate arranged in sequence.

51. A covering method for an electrode assembly, the electrode assembly comprising an electrode body, the electrode body having a first direction, a second direction and a third direction that are orthogonal to each other and comprising two main surfaces disposed back-to-back with each other in the first direction, two end surfaces disposed back-to-back with each other in the second direction and two side surfaces disposed back-to-back with each other in the third direction; the covering method comprising:
positioning the electrode assembly by a first positioning assembly while keeping the two main surfaces at least partially exposed;
positioning a covering film by a first covering assembly, wherein the covering film comprises two main covering areas spaced apart from each other and a connecting area connected between the two main covering areas; and
controlling at least one of the first positioning assembly and the first covering assembly to move relative to the other such that the connecting area comes into contact with and covers the first one of the two end surfaces, and the two main covering areas respectively come into contact with and cover an portion of the corresponding one of the two main surfaces that is exposed from the first positioning assembly.

52. The covering method according to claim 51, wherein controlling at least one of the first positioning assembly and the first covering assembly to move relative to the other comprises:
controlling the relative movement between the first positioning assembly and the first covering assembly such that the time of contact between the connecting area and the first one of the two end surfaces is earlier than the time of contact between the two main covering areas and the corresponding one of the two main surfaces, respectively, and/or
controlling the relative movement between the first positioning assembly and the first covering assembly such that covering processes of the two main covering areas on the corresponding one of the two main surfaces are at least partially synchronized.

53. The covering method according to claim 51, wherein controlling at least one of the first positioning assembly and the first covering assembly to move relative to the other comprises:
controlling at least one of the first positioning assembly and the first covering assembly to move in the second direction such that the electrode assembly and the covering film approach each other in the second direction and that, after the first one of the two end surfaces comes into contact with the connecting area, the electrode assembly continues to move in the second direction relative to the ends of the two main covering areas that are away from the connecting area; and
controlling the first covering assembly to move in the first direction so as to bring the ends of the two main covering areas closer to each other in the first direction, enabling the two main covering areas to come into contact with and cover the exposed portion of the corresponding one of the two main surfaces.

54. The covering method according to claim 51, wherein the electrode assembly comprises a tab portion protruding from the first one of the two end surfaces, and the connecting area is provided with a hole;
positioning the covering film by the first covering film comprises:
positioning the electrode assembly by the first positioning assembly to enable the tab portion to face toward the connecting area;
controlling at least one of the first positioning assembly and the first covering assembly to move relative to the other comprises:
controlling the relative movement of the first positioning assembly and the first covering assembly to enable the tab portion to pass through the hole along with the relative movement between the first positioning assembly and the first covering assembly and enable the connecting area to come into contact with and cover the first one of the two end surfaces.
